(19) **Europäisches Patentamt / European Patent Office / Office européen des brevets**

(11) **EP 4 769 159 A1**

(12) # EUROPEAN PATENT APPLICATION

(43) Date of publication:
**01.07.2026 Bulletin 2026/27**

(21) Application number: **25216613.7**

(22) Date of filing: **18.11.2025**

(51) International Patent Classification (IPC):
**G06F 12/0842** (2016.01) **G06F 12/02** (2006.01)
**G06F 11/34** (2006.01)

(52) Cooperative Patent Classification (CPC):
**G06F 12/0284; G06F 11/3037; G06F 11/3409;
G06F 12/0842**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.12.2024 US 202463740259 P
28.03.2025 US 202519094461**

(71) Applicant: **INTEL Corporation
Santa Clara, CA 95054 (US)**

(72) Inventors:
- **ABRAHAM, Philip
  Rye, 10580 (US)**
- **AUTEE, Priya
  Chandler, 85248 (US)**
- **SANKARAN, Rajesh
  Portland, 97229 (US)**
- **HERDRICH, Andrew
  Hillsboro (US)**
- **LUCK, Anthony
  San Jose, 95112 (US)**
- **BEN HAMO, Oshri
  9856151 Maale Adumim (IL)**
- **VAN DOREN, Stephen
  Portland, 97229 (US)**
- **LIU, Yen-Cheng
  Portland, 97229 (US)**
- **LUNA MUNOZ LEDO, Antonio
  Tlajomulco (MX)**
- **HADAD, Michal
  9372117 Jerusalem (IL)**
- **STERN, Chaimy
  Binyamina (IL)**
- **BAJWA, Sahil
  Austin, 78748 (US)**
- **DERMER, Tsila
  3760630 Harish (IL)**
- **ARONOV, Boris
  Tirat Carmel (IL)**

(74) Representative: **Viering, Jentschura & Partner
mbB
Patent- und Rechtsanwälte
Am Brauhaus 8
01099 Dresden (DE)**

(54) **REGION-AWARE MEMORY BANDWIDTH MONITORING**

(57) Techniques for region-aware memory bandwidth monitoring are described. In an embodiment, an apparatus includes a processing core to access a memory, the memory to include a plurality of memory regions; a plurality of memory bandwidth telemetry counters; and a plurality of memory bandwidth monitoring (MBM) storage locations, one of the plurality of MBM storage locations corresponding to one of the plurality of memory regions and one of a plurality of resource monitoring identifiers (RMIDs), the one of the plurality of MBM storage locations to store a count from a corresponding memory bandwidth telemetry counter for the one of the plurality of memory regions and the one of the plurality of RMIDs.

EP 4 769 159 A1

**FIG. 1A**

**Description**

BACKGROUND

Processor cores in multicore processors may use shared system resources such as caches (e.g., a last level cache or LLC), system memory, input/output (I/O) devices, and interconnects. The quality of service provided to applications may be degraded and/or unpredictable due to contention for these or other shared resources. Some processors include technologies, such as Resource Director Technology (RDT) from Intel® Corporation, that enable visibility into and/or control over how shared resources such as LLC and memory bandwidth are being used. Such technologies may be useful, for example, for controlling applications that may be over-utilizing memory bandwidth relative to their priority.

BRIEF DESCRIPTION OF DRAWINGS

Various examples in accordance with the present disclosure will be described with reference to the drawings, in which:

FIGs. 1A and 1B illustrate a configuration of hardware for region-aware memory bandwidth allocation control according to an embodiment.

FIG. 2 illustrates a rate control loop, including a leaky bucket counter, for region-aware memory bandwidth allocation control according to an embodiment.

FIG. 3 illustrates a rate control loop, including a leaky bucket counter, for region-aware memory bandwidth allocation control according to an embodiment.

FIG. 4 shows a linear relationship between a leaky bucket leak rate and a bandwidth control window according to an embodiment.

FIG. 5 shows an implementation with a linear rate meter according to an embodiment.

FIG. 6 illustrates a processor for region-aware memory bandwidth allocation control according to an embodiment.

FIG. 7 illustrates a method for region aware memory bandwidth allocation control according to an embodiment.

FIG. 8 illustrates an example usage model for region-aware memory bandwidth allocation control according to an embodiment.

FIG. 9A shows an example of the ERDT ACPI hierarchy.

FIG. 9B shows an example of the MRRM ACPI table structure.

FIG. 9C illustrates an example of an RDT control register for CPU agents.

FIG. 9D illustrates an example of a Cache Monitoring (CMT) register for CPU agents.

FIG. 9E illustrates an example of a per region per RMID memory bandwidth monitoring register for CPU agents.

FIG. 9F illustrates an example of MBM register blocks with interleaved RMIDs.

FIG. 9G illustrates an example of an MBA optimal bandwidth allocation register for CPU agents.

FIG. 9H shows an example of sequential CLOS arrangement in an Optimum MBA register block.

FIG. 9I illustrates an example of a minimum MBA register for CPU agents.

FIG. 9J shows an example of sequential CLOS arrangement in a Minimum MBA register block.

FIG. 9K illustrates an example of a maximum MBA register for CPU agents.

FIG. 9L shows an example of sequential CLOS arrangement in a Maximum MBA register block.

FIG. 10A shows an example of some different types of memory regions.

FIG. 10B illustrates an example of an MRRM, SRAT, HMAT, and CEDT correlation.

FIG. 10C illustrates a system configuration example with DDR memory.

FIG. 10D and 10E shows examples of results related to Figure 10C.

FIG. 10F illustrates a system configuration example with heterogeneous memory.

FIG. 10G and 10H shows examples of results related to Figure 10F.

FIG. 11A illustrates an example of a region aware MBM software flow.

FIG. 11B shows a usage flow for MBM example.

FIG. 11C illustrates an example of a region aware MBA software flow.

FIG. 11D shows usage flow for legacy MBA and region aware MBA software usage example.

FIG. 11E illustrates an example of an ERDT ACPT table layout and mapping to a single-socket system.

FIG. 12 illustrates an example computing system.

FIG. 13 illustrates a block diagram of an example processor and/or System on a Chip (SoC) that may have one or more cores and an integrated memory controller.

FIG. 14(A) is a block diagram illustrating both an example in-order pipeline and an example register renaming, out-of-order issue/execution pipeline according to examples.

FIG. 14(B) is a block diagram illustrating both an example in-order architecture core and an example register renaming, out-of-order issue/execution architecture core to be included in a processor according to examples.

FIG. 15 illustrates examples of execution unit(s) circuitry.

FIG. 16 is a block diagram illustrating the use of a software instruction converter to convert binary instructions in a source instruction set architecture to binary instructions in a target instruction set architecture according to examples.

DETAILED DESCRIPTION

The present disclosure relates to methods, apparatus, systems, and non-transitory computer-readable storage media for region-aware memory bandwidth monitoring. According to some examples, an apparatus includes a processing core to access a memory, the memory to include a plurality of memory regions; a plurality of memory bandwidth telemetry counters; and a plurality of memory bandwidth monitoring (MBM) storage locations, one of the plurality of MBM storage locations corresponding to one of the plurality of memory regions and one of a plurality of resource monitoring identifiers (RMIDs), the one of the plurality of MBM storage locations to store a count from a corresponding memory bandwidth telemetry counter for the one of the plurality of memory regions and the one of the plurality of RMIDs.

As mentioned in the background section, a processor may include technologies, such as Resource Director Technology (RDT) from Intel® Corporation, that enable visibility into and/or control over how shared resources such as LLC and memory bandwidth are being used. Aspects, implementations, and/or techniques related to such technologies that relate to monitoring, measuring, estimating, tracking, etc. memory bandwidth use may be referred to as "memory bandwidth monitoring" or "MBM" (which may also be used to refer to a memory bandwidth monitor, hardware/firmware/software to perform memory bandwidth monitoring, etc.), however, embodiments are not limited by the use of that term. Aspects, implementations, and/or techniques related to such technologies that relate to allocating, limiting, throttling, providing availability of, etc. memory bandwidth may be referred to as "memory bandwidth allocation" or "MBA" (which may also be used to refer to a quantity of memory bandwidth allocated, provided available, to be allocated, etc.) however, embodiments are not limited by the use of that term. Embodiments may be described using references to RDT, but embodiments are not limited to RDT.

In embodiments, MBM and/or MBA may be used to monitor and/or allocate memory bandwidth on a regional, piecewise, granular, etc. basis. For example, a memory space (e.g., one or more physical, linear, virtual, etc. memory ranges and/or one or more memory types, devices, resources, etc.) may be divided into multiple regions, address spaces, areas, types, resources, etc. (to be referred to generally as regions). Usage per region and/or of any one or more regions may be monitored and/or measured, and/or allocation per region and/or of any one or more regions may be targeted, controlled, performed, etc. In embodiments, such region-aware MBM and/or MBA may be indirect or approximate. Embodiments may include control circuits, circuitry, hardware, logic, etc. that establish, are aware of, differentiate between, etc. and/or may be configured (e.g., by firmware or software) to establish, be made aware of, differentiate between, etc. various regions of a memory space for purposes of MBM and/or MBA.

Therefore, different amounts of different regions of memory (or other resource) may be monitored and/or allocated to different physical cores, logical cores, threads, applications, etc., thus providing for more fine-grained measurement, monitoring, control, allocation, etc. of shared resources than may be possible according to an existing approach. For example, in contrast to a prior approach that treats all memory as one generic instance and there is no distinction between different memory regions or types of memory, embodiments provide for separate types and/or regions of memory to have their bandwidth monitored and/or allocated. Embodiments may provide for MBM and/or MBA control per thread/core and per memory region/resource.

With the use of multiple types of memory regions on a processor, which may offer varying capacity, latency, and bandwidth properties, it may be desired to provide the ability to measure memory bandwidth to multiple memory regions simultaneously. Embodiments may provide hardware capabilities, when enabled, to allow software to gather usage telemetry, adjust MBA policies and build control loops to help meet performance goals. Embodiments may include a set of counters simultaneously indexed by identifiers (e.g., resource monitoring identifiers or RMIDs) and regions to measure the memory bandwidth utilization of memory regions by RMIDs (which may be mapped to software threads, applications, containers, virtual machines, etc.). Embodiments may include hardware support including the ability to independently track many RMIDs simultaneously accessing several memory regions. Software may consult a table (e.g., an Enhanced Resource Director Technology (ERDT) Advanced Component Peripheral Interconnect (ACPI) table) for enumeration of specific capabilities of embodiments on a given processor generation. Such a table may provide information regarding capabilities, system-on-a chip (SoC) topology mappings to the scope of specific RDT features, region aware MBM memory-mapped input/output (MMIO) interface register locations, architectural parameters such as the number of RMIDs supported, etc.

In embodiments, region-aware MBA for processor (e.g., central processing unit or CPU) agents may extend other MBA capabilities (e.g., per-agent throttling) to include region-aware bandwidth controls per RDT class of service (CLOS). Memory region definitions used for region-aware MBM and MBA features may be shared across the features (e.g., as specified in an ACPI Memory Range and Region Mapping (MRRM) table), allowing simultaneous and consistent monitoring and allocation of memory bandwidth. Independent throttling of per-CLOS bandwidth to multiple regions may be supported, allowing software to dynamically rebalance bandwidth throttling limits across different memory regions, which may have varying bandwidth, latency, and capacity characteristics. Example uses include rebalancing bandwidth between virtual machines of different priority across a shared coherent interprocessor interconnect under the direction of a software control loop, rebalancing bandwidth for threads of varying priorities across (dynamic random-access memory (DRAM) or Compute Express Link (CXL) backed memories.

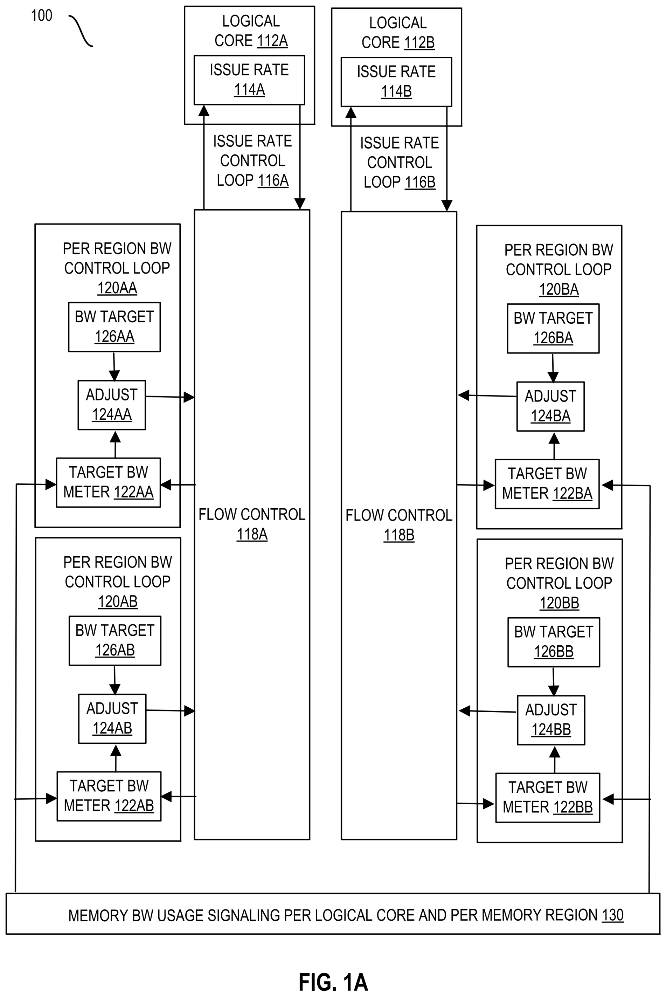

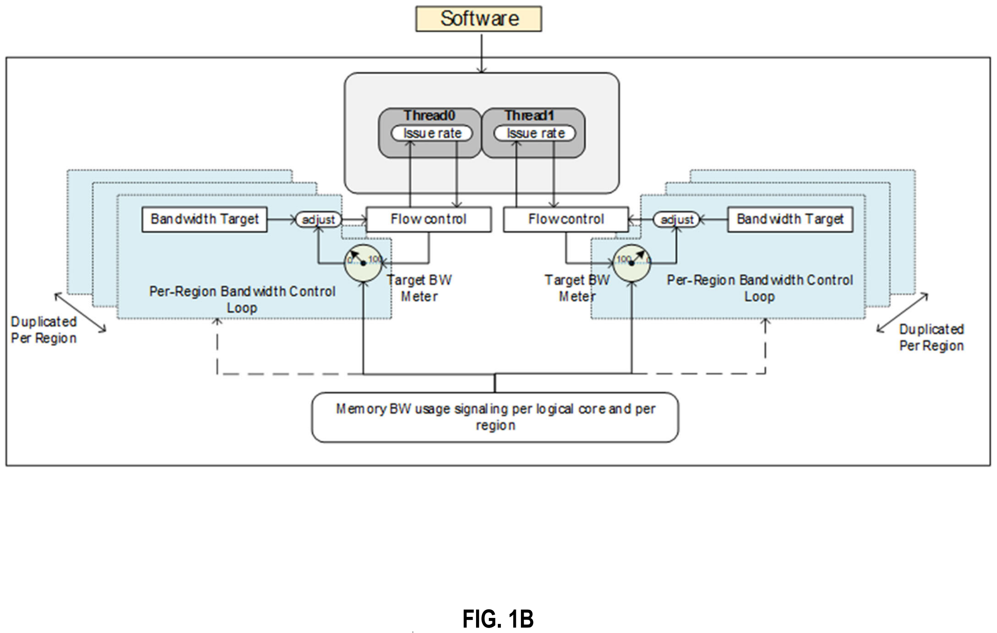

For example, Figures 1A and 1B illustrate a configuration of hardware for region-aware MBM and MBA control according to an embodiment. Figure 1A shows, for ease of illustration, hardware 100 including two logical cores 112A and 112B and two per-region bandwidth (BW) control loops per logical core, for a total of four per-region BW control loops 120AA, 120AB, 120BA, and 120BB. Per-region BW control loops 120AA and 120BA may correspond to a first region of memory and per-region BW control loops 120AB and 120BB may correspond to a second region of memory. A variety of other configurations are possible, with any number of logical cores, any number of per-region control loops for any number of regions of memory, etc.

Implementations may include, for example, multiple control loops per thread or core, wherein within any and/or each group of multiple control loops per thread or core, there may be a first control loop (e.g., 120AA) for that thread or core's (e.g., 112A) use of memory bandwidth to a first region of memory, a second control loop (e.g., 120AB) for that thread or core's use of memory bandwidth to a second region of memory, a third control loop for that thread or core's use of memory bandwidth to a third region of memory, a fourth control loop for that thread or core's use of memory bandwidth to a fourth region of memory, etc. That thread or core may issue a request to memory and receive a corresponding response. The response provides information about the memory resource or region it was issued from, in order to feed memory usage information (e.g., from memory BW usage signaling per logical core and per memory region block 130) into the control loop for that thread or core and the corresponding region of memory to provide for that control loop's rate control meter (e.g., target BW meter 122AA), and/or associated flow control logic (e.g., flow control block 118A) to modulate the bandwidth to that region of memory by controlling (e.g., via issue rate control loop 116A) the issue rate (e.g., issue rate 114A) from that thread or core (as further described by example below).

In embodiments, the flow control logic may select the most conservative control (e.g., the least allocation of memory bandwidth) indicated by any number (e.g., four) of control loops (e.g., one per defined region or type of memory).

In embodiments, software (e.g., an operating system (OS), virtual machine monitor (VMM), hypervisor, host software in a multi-tenant environment, quality of service (QoS) management software, or other system or privileged software, any of which may be referred to as QoS software) may set bandwidth targets (e.g., BW targets 126AA, 126AB, 126BA, 126BB) on a per thread or core basis for a number (which may be referred to as N in the following description, where in one implementation N=4) of memory regions or resources. Each thread and memory region/resource and thread may be managed by a rate control meter (e.g., target BW meters 122AA, 122AB, 122BA, 122BB) that modulates (e.g., via adjust blocks 124AA, 124AB, 124BA, 124BB and flow control blocks 118A, 118B) the thread's traffic toward the memory region/resource around and/or relative to the corresponding bandwidth target.

For ease of description, the term "region" may be used to refer to memory regions, types of memory, memory resources, etc. For example, the N memory regions may be N contiguous regions (e.g., address range based), N memory resource types (e.g., double data rate (DDR) memory, memory accessed through CXL, memory accessed through card readers (CR), and memory accessed through Ultra Path Interconnect (UPI). In embodiments, memory resource types may be specified in various ways, such as but not limited to all traffic toward DDR memory regardless of location (local, remote, or CXL), all traffic toward CXL including remote, all traffic toward CR memory regardless of location (local or remote CXL), all traffic that utilizes a UPI link for cross socket data transfer regardless of target on the remote socket, memory behind Type 3 CXL, persistent memory behind CXL and remote memory links, etc.

In embodiments, memory regions may be defined as a shared infrastructure component used across MBM (including region-aware MBM) and MBA (including region-aware MBA) features. In embodiments, a processor may support a system-level enumeration of memory regions. A memory region may be defined as one or more memory ranges consisting of physical addresses. Multiple memory regions may be defined by the platform to independently describe physical addresses backed by a particular type of memory, such as DRAM or CXL-attached memories, whether attached locally or to a different processor over a coherent interconnect link. The memory regions populated on a particular processor may be described by the basic input/output system (BIOS) in an ACPI MRRM table.

In embodiments, memory regions may be defined as address ranges (e.g., by the system address decoder in the processor). A color or tag may be associated with each address range to identify it as which one of the N regions. Responses from the address ranges may carry the region's color or tag with it, to be fed into the appropriate rate controller.

In embodiments, QoS software may allocate bandwidth targets to applications on a per resource level. As one example, if the user is familiar with how applications are accessing and utilizing different memory regions, QoS software may be allowed to set bandwidth targets for each memory region. As another example, QoS software may be allowed to set a bandwidth target for the fastest memory region (e.g., DDR memory), and bandwidth targets for the remaining memory targets may be scaled (e.g., the scaling function may be a basic input/output system (BIOS) option that may be selected at boot time).

In embodiments, a control loop's rate control meter and/or associated flow control logic may limit use of a resource (e.g., bandwidth to a memory region) by a thread, logical core, physical core, software application, etc. (any of which may be referred to as an agent), for example by limiting access by the thread or core to the resource based on time, based on a crediting scheme, etc. In embodiments, a throttling technique may be used to restrict or prevent access during one or more first periods within a second (larger than the first) period, while allowing or providing access during the remainder of the second period. Embodiments may provide for various granularities at which access may be restricted or prevented, for example, embodiments may provide for a throttling granularity of 10% such that a rate limiter may perform throttling to reduce MBA to any of 90%, 80%, 70%, etc. of full capacity.

In embodiments, a control loop's rate control meter and/or associated flow control logic may include rate monitoring capability (e.g., implemented in hardware) and rate limiting capability (e.g., implemented in hardware). The rate monitoring capability may provide a monitoring capability to determine whether its associated agent is overutilizing bandwidth to a memory region. The rate limiting capability may provide for setting and adjusting rate limits for agents that are overusing bandwidth to a memory region or consuming less than they are allocated. For example, if a measurement from the rate monitoring capability indicates that demand for bandwidth to a memory region is higher than a target or prescribed bandwidth to the memory region, a first MBA rate setting may be selected, where the first MBA rate setting is limited and slower than a second MBA rate setting (e.g., unlimited, unthrottled), that may be otherwise selected and/or used.

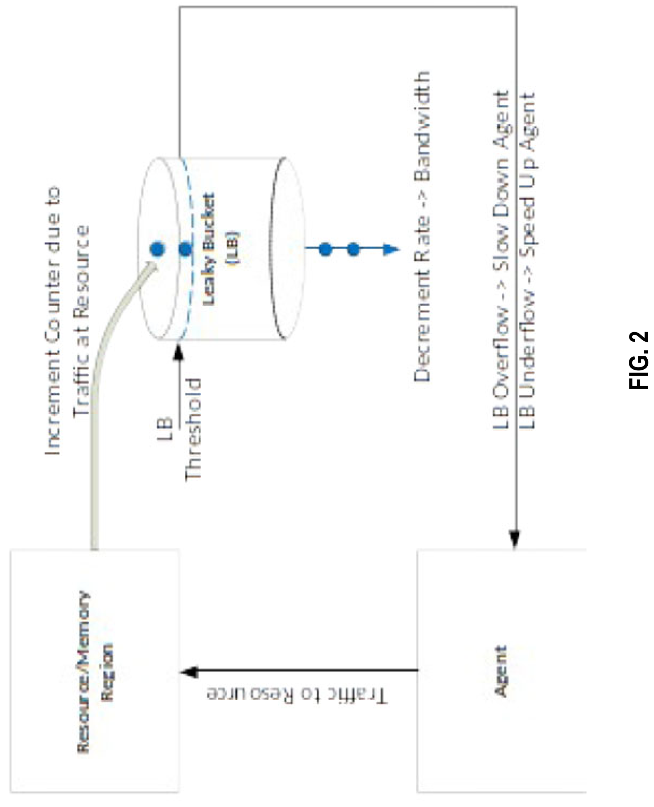

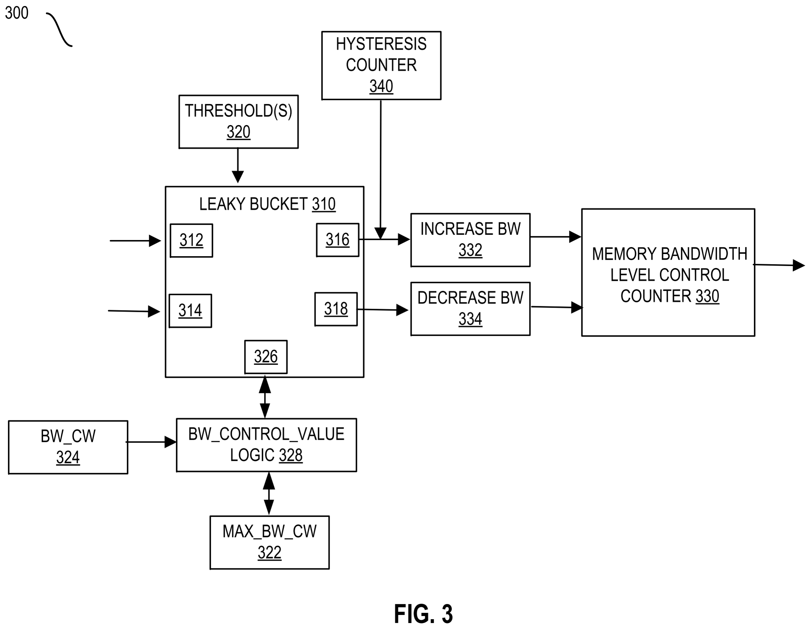

In embodiments, a rate control loop (e.g., per-region BW control loops 120AA, 120AB, 120BA, and 120BB) may be implemented with a leaky bucket counter, as shown, for example, conceptually in Figure 2 and in a block diagram in Figure 3, to provide for modulating bandwidth to a corresponding region of memory by controlling the issue rate from a corresponding agent.

A leaky bucket counter may provide dynamic indications of corresponding memory region bandwidth use and/or demand by a corresponding agent relative to a target. The indications may be used to determine, select, adjust, etc. a rate used or to be used by a rate limiting capability (e.g., to control, around an assigned bandwidth target, the traffic from an agent to a memory region).

For example, a leaky bucket counter 310 may be incremented based on a first input 312 indicating of a memory region's bandwidth use or demand (thus "adding water to the bucket") and decremented (by the same or a different amount with/than which it is incremented) based on a second input 314 indicating passage of time (thus "leaking water from the bucket"). The leaky bucket counter may generate one or more output signals 316 and 318 (e.g., based on whether or not one or more thresholds have been reached (met, exceeded, passed, etc.) to be used to adjust MBA rate and/or throttling control settings per memory region per agent.

In the steady state condition, the rate at which the leaky bucket counter increments should equal the rate at which it decrements. If the leaky bucket counter increments faster than it decrements, its count will reach (e.g., meet, exceed, pass, etc.) the defined threshold value, implying that the agent is issuing more traffic to the memory region than its assigned limit.

In embodiments, a leaky bucket counter may be incremented based on memory region bandwidth use and/or demand by a corresponding agent, for example, per each memory request to a region or responses from a memory region. In embodiments, a leaky bucket counter may be decremented based on passage of time, for example, whenever (e.g., for each occurrence of) a separate counter (e.g., a programmable time window counter) expires (e.g., decrements to zero). In embodiments, the threshold(s) at which a leaky bucket counter overflows (or underflows) may be programmable (e.g., in storage 320, which may be an MSR, as defined below, or other storage (e.g., programmed via an memory-mapped input/output (MMIO) interface) and/or may trigger one or more output signals when reached (e.g., met, exceeded, passed, etc.) by the leaky bucket count.

For example, a leaky bucket counter may be an n-bit (e.g., 16-bit) up-down counter that increments at a programmable delta value (e.g., +1, +2, +3, etc.) and decrements at a fixed delta value (e.g., -1). Other implementations are possible (e.g., increment delta value may be fixed, decrement delta value may be programmable, etc.). In an implementation, the leaky bucket counter may not underflow (e.g., minimum value is zero). In an implementation, the leaky bucket counter may not overflow above a defined threshold (e.g., it resets to zero whenever the threshold is reached or exceeded).

In embodiments, the leaky bucket threshold is the value at which the leaky bucket overflows. The overflow event may trigger a slow down (e.g., by throttling) event to the agent. Therefore, the leaky bucket threshold value corresponds to the burst response of the rate control meter. A large value means that the leaky bucket counter may increment more before it overflows (e.g., a more sustained number of requests from or completions to the agent causes the leaky bucket counter to overflow). Therefore, short spikes in traffic will not result in throttling actions and are filtered out. On the other hand, smaller values of the threshold mean that the leaky bucket counter increments less for an overflow event and hence a throttling action. Therefore, lower threshold values may result in quicker throttling actions. However, a balance may be desired because too low a value may result in the agent being throttled unnecessarily (e.g., the resource could have handled the brief uptick in traffic) and too high a value may result in the resource becoming overloaded and slowing down multiple agents.

Various approaches to decrementing a leaky bucket counter are possible. For example, an n-bit (e.g., 16-bit) time window counter may be initialized with a value that maps to the desired bandwidth target for the corresponding agent. The time window counter may count down (e.g., decrement once per clock cycle), and when it reaches zero may trigger a decrement of the leaky bucket counter. A higher initial time window value results in a slower decrement rate for the leaky bucket counter and therefore a greater likelihood it overflows, whereas a lower initial time window value results in a faster decrement rate for the leaky bucket counter and therefore a lower likelihood it overflows.

As another example, if it may be desirable to have a linear relationship between the rate at which the leaky bucket counter decrements and bandwidth, two new windows may replace the time window described above. A first window (Max_BW_Control_Window or MAX_BW_CW 322) may be a programmable (e.g., in an MSR or via MMIO, as described below) period or window of clock cycles over which bandwidth is modulated. A second window (BW_Control_Window or BW_CW 324) may be a programmable (e.g., in an MSR or via MMIO, as described below) period or window, less than or equal to the Max_BW _Control_Window, over which the leaky bucket counter may decrement. Therefore, a leaky bucket counter may have an input/output (e.g., 326) to provide for a bandwidth control value (e.g., BW_Control_Value) to be calculated and maintained by circuitry/logic (e.g., 328) based on BW_CW, MAX_BW_CW, and the leaky bucket count.

As an example, if MAX_BW_CW = 10 and BW_CW = 5, then the leaky bucket counter may decrement five times within the ten cycles of the MAX_BW_CW, which means that the agent has a bandwidth of 50%, i.e., it may meter five requests within the cycle window.

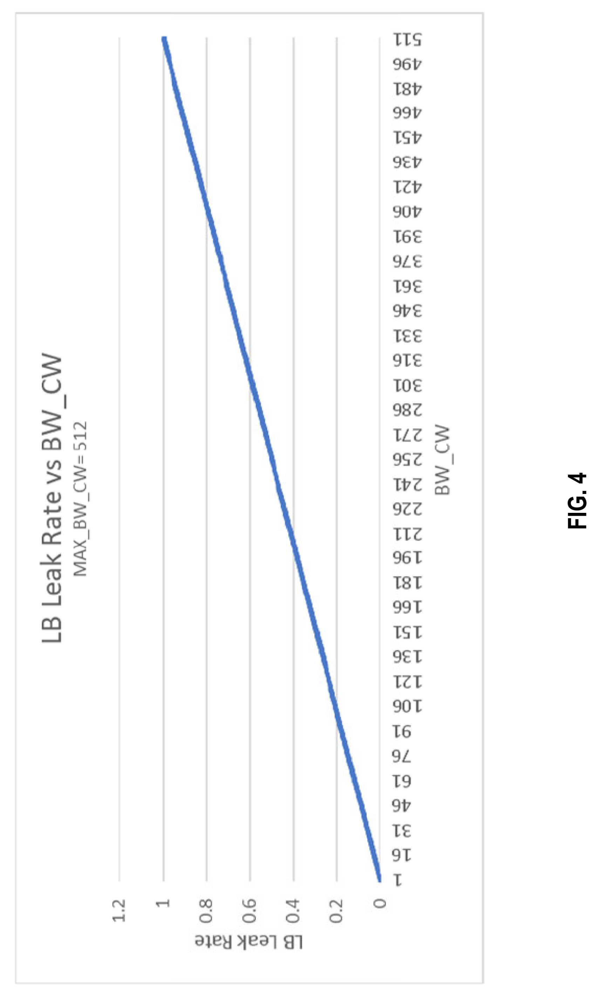

A linear relationship between the leaky bucket leak rate and the BW_CW is shown, for example, in Figure 4.

A linear relationship between the rate at which the leaky bucket counter decrements and bandwidth may be desired so that step changes in the BW_CW correspond to uniform step change in the leaky bucket leak rate and therefore to agent bandwidth and/or so that every value on the BW_CW provides a corresponding consistent step change in the leak rate.

In such embodiments, increasing the size of the BW_CW increases the granularity of the leak rate. For example, with a 9-bit MAX_BW_CW and a 9-bit BW_CW, using a 2GHz clock (e.g., in the uncore or system agent), bandwidth throttling points with step sizes of 0.125GB/second are distributed over a wide range between 64GB/second and 0.125GB/second.

Such embodiments may include details for implementing and decrementing the MAX_BW_CW and the BW_CW, such as:

- Implement a programmable down counter for each of MAX_BW_CW and BW_CW.

- Decrement the MAX_BW_CW if it is greater than zero.

- Reset the MAX_BW_CW to a programmed initial value when the counter decrements to zero.

- Decrement BW_CW if the MAX_BW_CW is greater than zero and the leaky bucket is greater than zero.

- Reset the BW_CW to a programmed initial value when the counter decrements to zero.

- If BW_CW is not fully consumed in this MAX_BW_CW, transfer (i.e., add) a portion of the remainder to the BW_CW for the next MAX_BW_CW. The amount transferred may be programmable.

- Default values may MAX_BW_CW and BW_CW may be set out of reset.

An example with MAX_BW_CW set to eight and BW_CW set to four is shown in Table 1.

Table 1

| MAX_BW_CW = 8 | Max_BW_Control_Window | | | | | | | |
|---|---|---|---|---|---|---|---|---|
| BW_CW = 4 | decrement LB > 0 | decrement LB > 0 | LB == 0 | decrement LB > 0 | LB == 0 | LB == 0 | LB == 0 | decrement LB > 0 |
| Leaky Bucket | 2 | 1 | 0 | 1 | 0 | 0 | 0 | 2 |

Such embodiments may include details for implementing, incrementing, and decrementing the leaky bucket counter, such as:

- Implement an up-down counter for the leaky bucket.

- Increment steps may be 0, 1, 2, or 3.

- Decrement by one every cycle when the BW_CW is greater than zero. The leaky bucket counter should not underflow when it reaches zero.

- The leaky bucket counter should not overflow the leaky bucket threshold value. Instead, it should saturate.

- The leaky bucket counter should reset to zero when it reaches the leaky bucket threshold value.

In an embodiment (e.g., such as Figure 3), the BW Control_Window may be set by QoS software based on the bandwidth target allocated to an agent. The leaky bucket counter may be incremented on responses received from the region of memory or resource that is being tracked.

In an embodiment (e.g., such as Figure 3), output signal(s) from the leaky bucket counter may be sent to the agent (e.g., through memory bandwidth level counter 330 and/or other circuitry/logic) to modulate the agent's issue rate. There may be two thresholds defined in the leaky bucket: a low threshold (e.g., 316), below which the rate control meter may include circuitry/logic (e.g., 332) to increase bandwidth, and a high threshold (e.g., 318), above which the rate meter may include circuitry/logic (e.g., 334) to decrease bandwidth.

In an embodiment (e.g., such as Figure 3), a hysteresis counter (e.g., 340) may be included in or used by the rate meter to prevent increases in bandwidth from occurring too rapidly (e.g., bandwidth may be increased after the hysteresis counter has counted down for a programmed period of time).

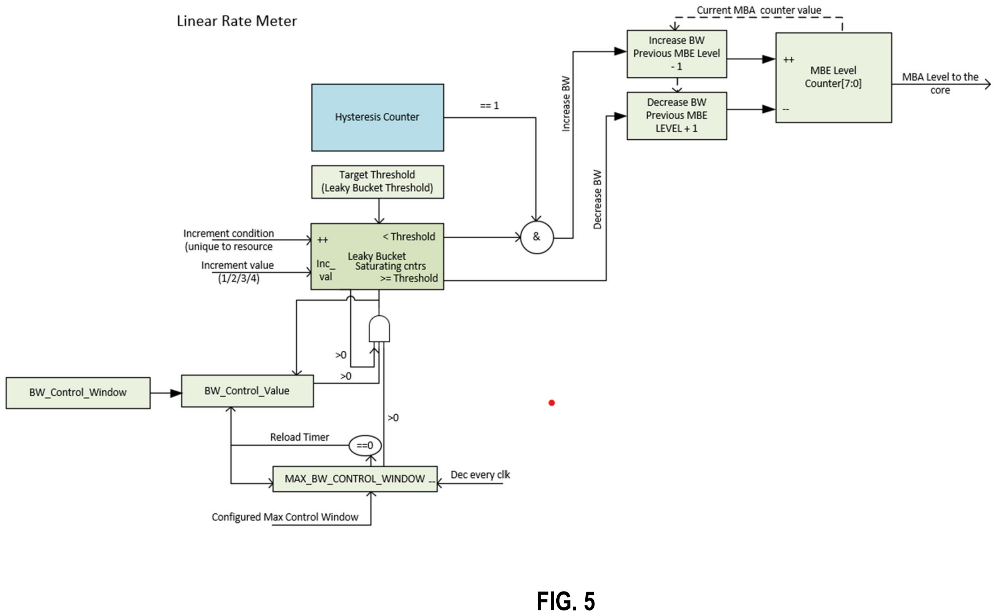

An example of an implementation with a linear rate meter is illustrated in Figure 5.

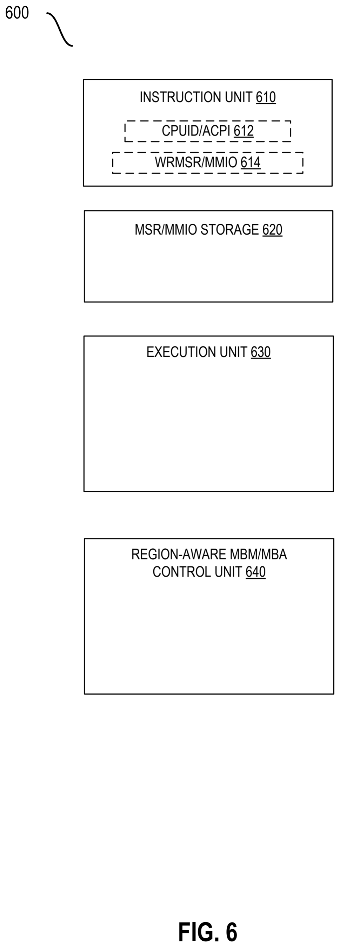

FIG. 6 illustrates an apparatus 600 for region-aware MBA control according to an embodiment. Apparatus 600 (which may also be referred to as processor 600) may represent all or part of a hardware component (e.g., a system on a chip or SoC) including one or more processors, processor devices, processor cores, or execution cores integrated on a single substrate or packaged within a single package, each of which may include multiple execution threads and/or multiple execution cores, in any combination. Each processor represented as or in processor 600 may be any type of processor, including a general-purpose microprocessor, such as a processor in the Intel® Core® Processor Family or other processor family from Intel® Corporation or another company, a special purpose processor or microcontroller, or any other device or component in an information processing system in which an embodiment may be implemented. Processor 600 may be architected and designed to operate according to any instruction set architecture (ISA), with or without being controlled by microcode. For convenience and/or examples, some features (e.g., instructions) may be referred to by a name associated with a specific processor architecture (e.g., Intel® 64 and/or IA32), but embodiments are not limited to those features, names, architectures, etc.

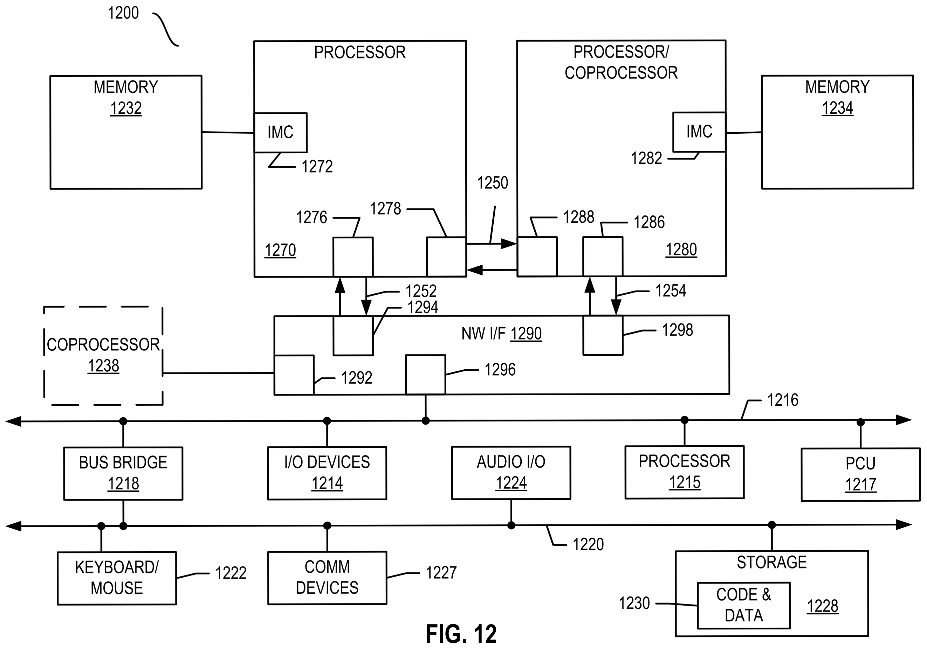

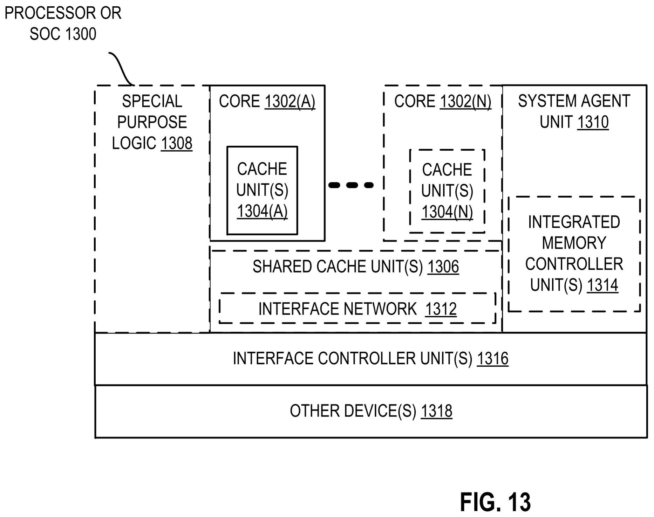

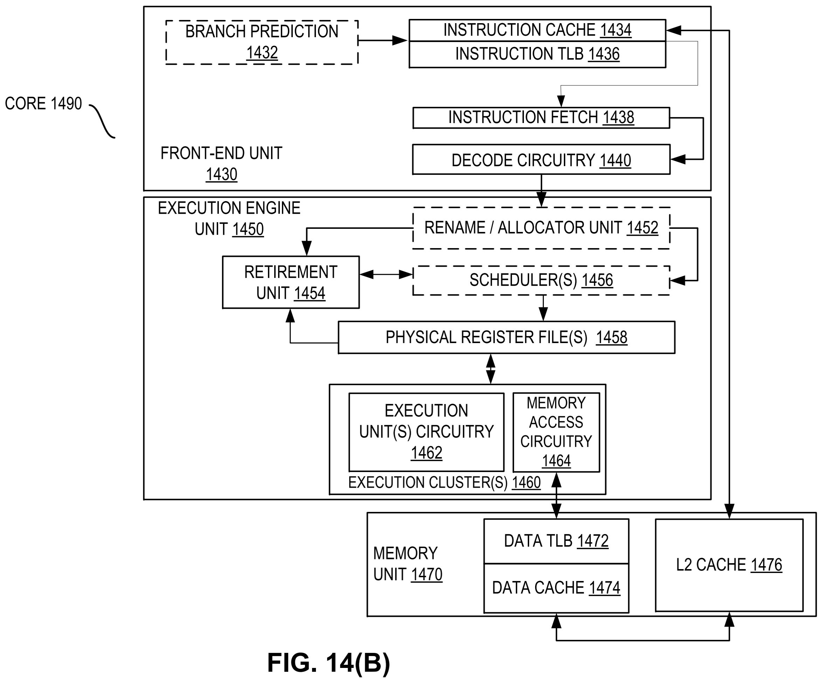

Processor 600 may be implemented in logic gates and/or any other type of circuitry, all, or parts of which may be included in a discrete component and/or integrated into the circuitry of a processing device or any other apparatus in a computer or other information processing system. For example, processor 600 in Figure 6 may correspond to and/or be implemented/included in any of processors 1270, 1280, or 1215 in Figure 12, processor 1300 or one of cores 1302A to 1302N in Figure 13, and/or core 1490 in Figure 14(B), each as described below.

As shown, processor 600 includes instruction unit 610, model or machine specific registers (MSRs) and/or storage accessed via an MMIO interface (MSR/MMIO storage) 620, execution unit 630, and region-aware MBM and/or MBA (MBM/MBA) control unit 640. Processor 600 may include any number of each of these elements (e.g., multiple execution units) and/or any other elements not shown in Figure 2.

Instruction unit 610 may correspond to and/or be implemented/included in front-end unit 1430 in Figure 14(B), as described below, and/or may include any circuitry, logic gates, structures, and/or other hardware, such as an instruction decoder, to fetch, receive, decode, interpret, schedule, and/or handle instructions or programming mechanisms, such as a processor identification instruction (e.g., CPUID as described below) or otherwise (e.g., via Advanced Peripheral Component Interface or ACPI) (any of which may be represented as block 612), and one or more write instructions (e.g., WRMSR as described below) or otherwise (e.g., via an MMIO interface) (any of which may be represented as block 614) to be executed and/or processed by processor 600. In Figure 6, instructions and/or mechanisms that may be decoded or otherwise handled by instruction unit 610 are represented as blocks with broken line borders because these instructions and/or mechanisms are not themselves hardware, but rather that instruction unit 610 may include hardware or logic capable of decoding or otherwise handling these instructions and/or mechanisms.

Any instruction format may be used in embodiments; for example, an instruction may include an opcode and one or more operands, where the opcode may be decoded into one or more micro-instructions or micro-operations for execution by execution unit 630. Operands or other parameters may be associated with an instruction implicitly, directly, indirectly, or according to any other approach.

As used in this description and in MSR/MMIO storage block 620, the term MSR may correspond to any one or more model specific registers, machine specific registers, one or more registers or storage locations, one or more of which may be in a core, one or more of which may be in an uncore or system agent, etc. to control and report on processor performance, handle system related functions, etc. In various embodiments, MSRs 620 (or any set or subset of MSRs 620) may or may not be accessible to application and/or user-level software. As used in this description and in MSR/MMIO storage block 620, the term MMIO may correspond to any storage accessible via an MMIO interface.

In embodiments, MSR/MMIO storage 620 may include one or more platform QoS registers (PQRs) and/or other MSRs or registers that may be programmed (e.g., by QoS software, a basic input/output system (BIOS), etc.) to implement MBM and/or MBA policies, mappings, settings, etc., such as mappings of memory ranges and/or types to allocation regions, mappings of threads or cores to classes of service (CLOS), mappings of CLOS to rate limit settings and/or delay values, bandwidth targets, leaky bucket threshold and increment values, time and/or control window counter maximum and decrement values, hysteresis counter values, and other settings (each as may be described below).

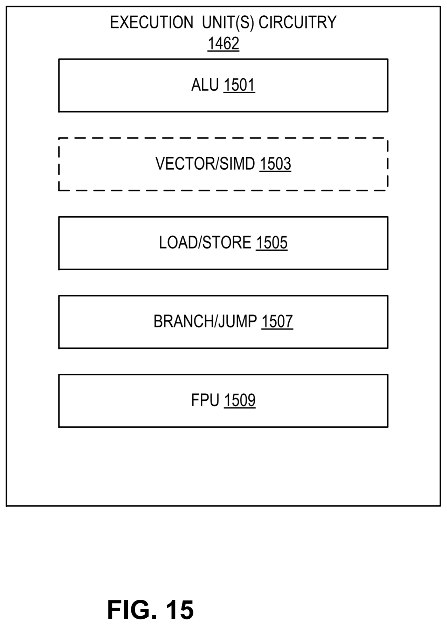

Execution unit 630 may correspond to and/or be implemented/included in any of execution engine 1450 in Figure 14(B) and/or execution unit circuitry 1462 in Figures 14(B) and 15, each as described below, and/or include any circuitry, logic gates, structures, and/or other hardware, such as arithmetic units, logic units, floating point units, shifters, etc., to process data and execute instructions, micro-instructions, and/or micro-operations. Execution unit 230 may represent any one or more physically or logically distinct execution units.

Region-aware MBM/MBA control unit 640 may include any circuitry, logic, structures, and/or other hardware to count, measure, monitor, estimate, modulate, control, etc. memory requests, memory responses, memory bandwidth, memory request issue rates, etc. according to embodiments. For example, region-aware MBM/MBA control unit 640 may represent and/or include any circuitry, logic, structures, and/or other hardware represented in Figure 1A, Figure 1B, Figure 3, and/or Figure 5.

In embodiments, the instruction set of processor 600 may include instructions to access (e.g., read and/or write) MSRs or other storage, such as an instruction to write to an MSR (WRMSR) and/or instructions to write via MMIO, for example to program PQRs, MSRs, and or other storage to implement MBM and/or MBA policies, mappings, settings, etc., such as mappings of memory ranges and/or types to allocation regions, mappings of threads or cores to classes of service (CLOS), mappings of CLOS to rate limit settings and/or delay values, bandwidth targets, leaky bucket threshold and increment values, time and/or control window counter maximum and decrement values, hysteresis counter values, and other settings (each as may be described below), and/or otherwise configure region-aware MBM/MBA control unit 640.

Processor 600 may also include a mechanism to indicate support for and enumeration of MBM, MBA, and region-aware MBM/MBA capabilities according to embodiment. For example, in response to an instruction (e.g., in an Intel® x86 processor, a CPUID instruction, one or more processor registers (e.g., EAX, EBX, ECX, EDX) may return information to indicate whether, to what extent, how, etc. MBM, MBA, and region-aware MBM/MBA is supported, or via ACPI.

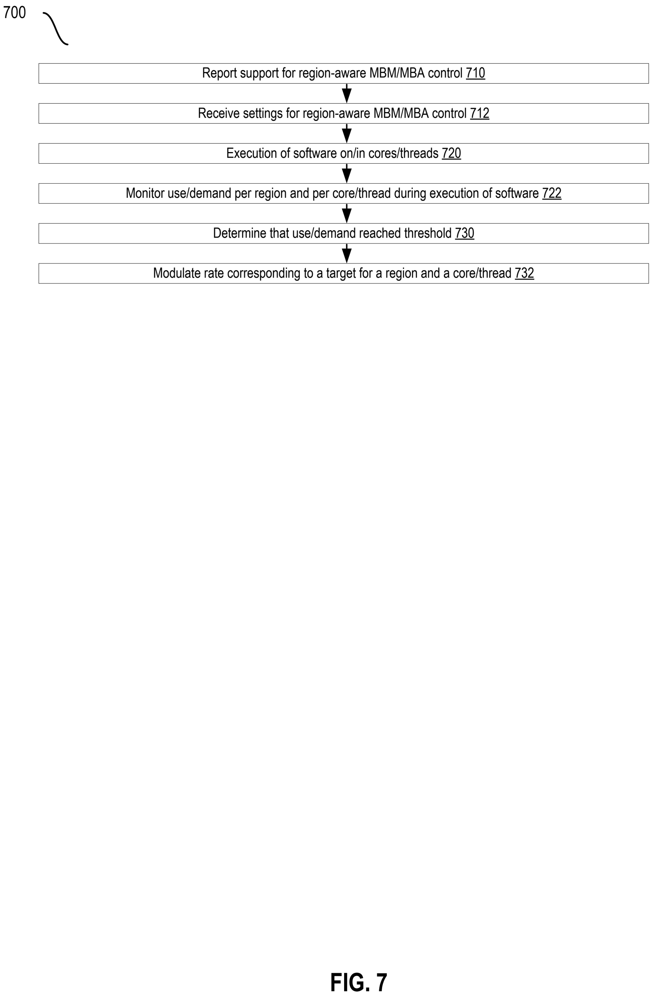

Figure 7 illustrates a method 700 for region-aware MBM/MBA control according to an embodiment. Method 700 may be performed by and/or in connection with the operation of a processor such as processor 600 in Figure 6; therefore, all or any portion of the preceding descriptions of Figure 1A to Figure 6 may be applicable to method 700.

In 710, support for a region-aware MBM/MBA control feature may be reported (e.g., by executing and/or responding to CPUID instruction(s) issued by QoS software, or via ACPI). In 712, configurable/programmable settings for a region-aware MBM/MBA control feature may be received and/or stored (e.g., by executing and/or responding to WRMSR, MMIO, or other instruction(s) issued by QoS software), which may include but is not limited to defining and/or specifying memory regions to which separate bandwidth allocations or targets per thread or logical core may be specified, specifying bandwidth allocations or targets per region and per thread or logical core, and/or specifying settings for a rate control circuitry and/or logic including a leaky bucket counter and/or a linear rate meter.

In 720, execution of software (e.g., one or more applications) on one or more cores and/or in one or more threads may begin with a first set of allocations of a set of resources (e.g., bandwidths to memory regions) to each core and/or thread. In 722 (e.g., concurrently with, during, and/or overlapping with 720), use and/or demand of each (or any one or more) region by each (or any one or more) core/thread may be monitored and compared to corresponding target values, for example, using rate control circuitry including a leaky bucket counter and/or a linear rate meter.

In 730, it may be determined (e.g., by the rate control circuitry), that use/demand of (e.g., memory bandwidth) one or more regions by one or more cores/threads has reached (e.g., increased to or beyond or decreased to or beyond) a threshold (e.g., upper or lower).

In 732 (e.g., in response to 730), one or more rates (e.g., memory request issue rates) corresponding to one or more of the per region per core/thread targets may be modulated, adjusted, etc. (e.g., by changing throttle settings) toward the target(s).

Execution of software on/in the cores/threads may continue as such, with allocations of and/or access to a resource per region and per core/thread being monitored and adjusted, as desired, according to embodiments, alone or in combination with other techniques.

Method 700 and/or any other method embodiments may include any details, features, etc. or combinations of details, features, etc. described in this specification.

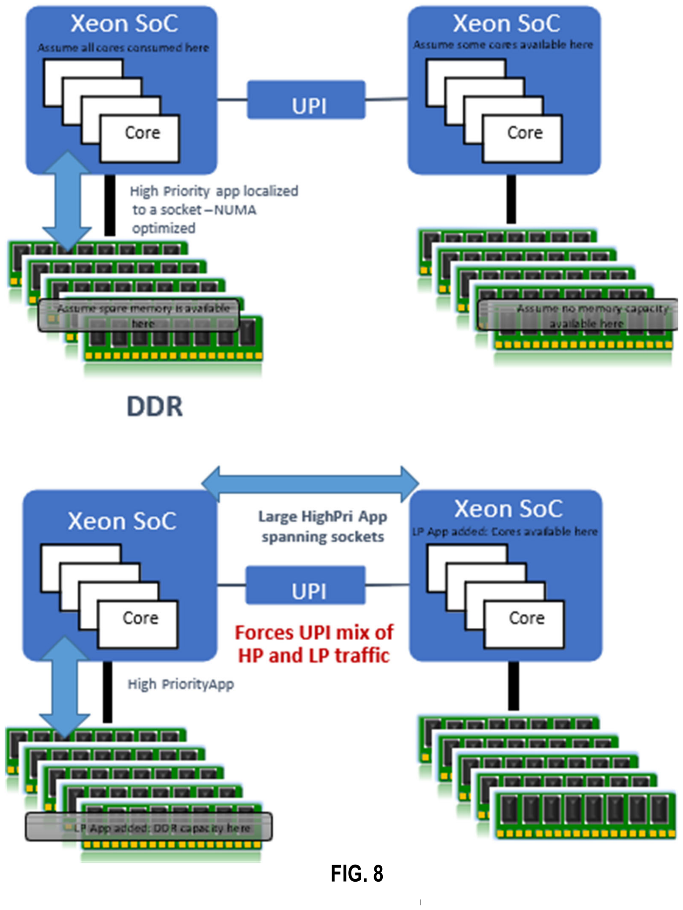

An example usage model, as shown in Figure 8, may include embodiments in which two sockets are connected by a UPI link. A high priority application that is non-uniform memory (NUMA) optimized could face resource contention when a lower priority application spans across both sockets. Region-aware MBM/MBA according to an embodiment may allow QoS software to set a bandwidth target on the UPI link to limit the amount of bandwidth that the lower priority cores can utilize and hence minimize interference with the high priority application.

Another example usage model may include embodiments that allow separation of memory into regions based on bandwidth and latency, such that higher priority applications may have more bandwidth to faster memory than lower priority applications.

The preceding discussion and the following description(s) of embodiments are provided as examples. Embodiments may include and/or relate to other shared resources or any other hardware resources that may be treated as parts of or subgroups of a group. Additional non-limiting (except as claimed) description and details of examples and embodiments is provided below. The following description and details may refer to acronyms and/or terms with example, non-limiting (except as claimed) descriptions as shown in Table 2.

Table 2

| Acronym | Term | Description |
|---|---|---|
| ACPI | Advanced Configuration and Power Interface | Advanced Configuration and Power Interface is an open standard that operating systems can use to discover and configure computer hardware components, to perform power management, auto configuration, and status monitoring. |
| CAT | Cache Allocation Technology | Software-guided redistribution of cache capacity is enabled by CAT, enabling important data center VMs, containers or applications to benefit from improved cache capacity and reduced cache contention. CAT may be used to enhance runtime determinism and prioritize important applications. |
| CDP | Code and Data Prioritization | As a specialized extension of CAT, Code and Data Prioritization (CDP) enables separate control over code and data placement in the L2 cache and the last-level (L3) cache. Certain specialized types of workloads may benefit with increased runtime determinism, enabling greater predictability in application performance. |
| CH | Channel | An I/O device channel, used to communicate between a device and an I/O Block and onto the coherent fabric. |
| CLOS | Class(es) of Service | A fundamental tag in RDT used for resource controls |
| CMT | Cache Monitoring Technology | Monitors the last-level cache (L3) utilization by individual threads, applications, or Virtual Machines, CMT improves workload characterization, enables advanced resource-aware scheduling decisions, aids "noisy neighbor" detection and improves performance debugging. |
| ERDT | Enhanced RDT ACPI Table | The ERDT ACPI table provides capabilities enumeration for the enhanced RDT capabilities hosting in MMIO, including Region-Aware MBA/MBM |
| IRDT | I/O RDT | I/O RDT extends foundational CPU Agent RDT features to Non-CPU Agents; defines the IRDT ACPI table for enumeration. |
| RDT | Resource Director Technology | RDT is the "umbrella" technology name for Platform Quality of Service technologies, including CPU Agents and Non-CPU Agents. |
| I/O Resource Director Technology (RDT) | I/O Device Resource Director Technology | RDT technologies specifically focusing on I/O devices including PCIe, CXL and integrated accelerators |
| MBA | Memory Bandwidth Allocation | MBA enables approximate and indirect control over memory bandwidth available to workloads, enabling new levels of interference mitigation and bandwidth shaping for "noisy neighbors" present on the system. |
| MBM | Memory Bandwidth Monitoring | Multiple VMs or applications can be tracked independently via Memory Bandwidth Monitoring (MBM), which provides memory bandwidth monitoring for each running thread simultaneously. Benefits include detection of noisy neighbors, characterization and debugging of performance for bandwidth-sensitive applications, and more effective non-uniform memory access (NUMA)-aware scheduling. |
| MMIO | Memory Mapped I/O | ERDT features use configuration interfaces mapped into MMIO space. I/O RDT defines a series of MMIOmapped interfaces to enable association of I/O devices to RMIDs and CLOS for monitoring and control. |
|  |  |  |
| MSR | Model Specific Register | Registers for configuration and data retrieval. |
|  |  |  |
|  |  |  |

(continued)

| Acronym | Term | Description |
|---|---|---|
| PQR | PQR | A shorthand for the IA32_PQR_ASSOC MSR, a model-specific register used to associate a logical processor and/or an IA thread with RMID and CLOS tags. |
| RMD | Resource Management Domain | A set of features defined within a particular cache domain, such as an L3 cache supporting a number of logical processors. |
| RTD | Resource Telemetry Domain | A Resource Management Doman within which one or more resource monitoring (telemetry) controls are supported |
| RAD | Resource Allocation Domain | A Resource Management Doman within which one or more resource allocation controls are supported |
| RMID | Resource Monitoring ID(s) | A fundamental tag used for resource monitoring in RDT. Used to associate a logical processor with one or more resource monitoring telemetry counters, for instance to measure cache occupancy or memory bandwidth. |
| SoC or SOC | System-on-Chip | An integrated chip composed of host processors, accelerators, memory, and I/O agents. |
| TC | Traffic Class | A PCI Express feature that allows differentiation of transactions to apply appropriate servicing policies. |
| VC | Virtual Channel | A PCI Express feature for differential bandwidth allocation. Virtual channels have dedicated physical resources (buffering, flow control management, and so on) across the hierarchy. |
| VMM | Virtual Machine Monitor | A software layer that controls virtualization. |
| MRRM | Memory Range and Region Mapping table | ACPI table which defines memory ranges and regions for use by ERDT and performance monitoring counters. |
| MRE | Memory Range Entry | An ACPI sub-table of MRRM which defines specific memory ranges for monitoring and control. |
| HMAT | Heterogeneous Memory Access Table | An ACPI table providing memory attributes, such as latency and bandwidth properties; complimentary to SRAT, MRRM and ERDT. |
| SRAT | System Resource Affinity Table | An ACPI table defined by the UEFI Forum which enables comprehension of system locality, proximity domains and clock domains for processors, resources, and request initiators. |
| CEDT | CXL Early Discovery Table | An ACPI table defined in the CXL specification which enables OSes or VMMs to determine the existence and location of CXL Host Bridges. |
| CLOS or COS | Class of Service | Used interchangeably; tag to associate a logical processor with one or more resource constraints in RDT Allocation features. |

Certain processors may support a system-level enumeration of Memory Regions, which are part of the common infrastructure used in the RDT feature set. Other feature sets may also make use of the Memory Region definition which RDT establishes.

A Memory Region may be defined as one or more memory ranges consisting of physical addresses. Multiple Memory Regions may be defined by the platform to independently describe physical addresses backed by a particular type of memory, such as DRAM or CXL-attached memories, whether attached locally or to a different processor over a coherent interconnect link.

The Memory Regions populated on a particular processor may be described by the system BIOS in the ACPI Memory Range and Region Mapping (MRRM) table. Specifications for the MRRM table and suggested rules for how BIOS should populate this table are described below in BIOS Considerations.

With the use of multiple types of Memory Regions on a processor, which may offer varying capacity, latency, and bandwidth properties, it becomes increasingly valuable to provide the ability to measure memory bandwidth to multiple memory regions simultaneously. Such hardware capabilities, when enabled, may allow software to gather usage telemetry, adjust Memory Bandwidth Allocation (MBA) policies and build control loops to ensure performance goals are met. The Region Aware Memory Bandwidth Monitoring (MBM) feature provides a set of counters simultaneously indexed by RMID and Region to measure the memory bandwidth utilization of an RDT Resource Monitoring ID (RMID - typically mapped to software threads, applications, containers, or virtual machines) to a Memory Region in the system. Typical hardware feature support for Region Aware MBM includes the ability to independently track many RMIDs simultaneously accessing several Memory Regions. Software may consult an Enhanced Resource Director Technology (ERDT) ACPI table for enumeration of specific capabilities of this feature on a given processor generation. The ERDT table defined below (in BIOS Considerations) provides information regarding capabilities and architectural parameters such as the number of RMIDs supported. See below (MMIO Register Descriptions) for details of the register interfaces used.

Region Aware Memory Bandwidth Allocation (MBA) for CPU Agents extends MBA capabilities (e.g., per-thread throttling) to include Region Aware bandwidth controls per RDT Class of Service (CLOS). The Memory Region definitions used for Region Aware MBM and MBA are shared across the features, as specified in the ACPI MRRM table, allowing simultaneous and consistent monitoring and allocation of memory bandwidth.

With Region Aware MBA, independent throttling of per-CLOS bandwidth to multiple regions is supported, allowing software to dynamically rebalance bandwidth throttling limits across different Memory Regions, which may have varying bandwidth, latency, and capacity characteristics. Example uses include rebalancing bandwidth between VMs of different priority across a shared coherent interprocessor interconnect under the direction of a software control loop, or rebalancing bandwidth for threads of varying priorities across DRAM or CXL-backed memories.

Region Aware MBA allows per-thread, per-CLOS, and per-Region control of Bandwidth to different regions-that is, enabling bandwidth control per-thread and per region simultaneously. Each region and thread may be managed by a hardware controller which modulates the bandwidth of each thread targeting particular downstream region around the bandwidth target set by RDT software interfaces.

A maximum number of regions may be enumerable by an MRRM ACPI table. A high-level implementation of Region Aware MBA is shown in Figure 1B.

Enable MMIO Register

Region Aware MBA may be enabled by software via an MMIO configuration register, before configuring per-thread, per-RMID, and per-Region MBA throttling values.

The RDT_CTRL MMIO register is used to control Region Aware MBA for CPU agents. The definition of the RDT_CTRL register is shown below. This register is scoped at the resource management domain. It is expected that software will configure this register consistently across all L3 caches present in the SoC.

The default value of the RDT_CTRL register is 0x4 (Region Aware MBA is disabled by default).

Optimal, Max and Min Bandwidth Caps per thread

Maximum Cap: Allows the thread to switch to a Max BW cap above Optimal if resource is underutilized (< Medium or Optimal rate)

Min Cap: Allows the thread to switch to a Lower BW cap below Optimal if the resource is over utilized (> Medium but < Resource Distress Distress)

Default state is to set Max BW Cap == Optimal BW == Min BW Cap

Software consults MARC sub-structure of ERDT ACPI to discover platform support for these caps.

BIOS Considerations

Software may query processor support of RDT shared resource monitoring and allocation features by executing CPUID for the CPU Agents RDT features. ACPI Structures including an ERDT and/or an MRRM may then be consulted for further details on the Enhanced RDT features support, memory range-to-region mapping, etc. ACPI structures may enumerate the location of specific MMIO interfaces used to allocate or monitor shared platform resources. Numeric values in ACPI-defined tables, blocks, and structures may be encoded in little endian format. Signature values may be stored as fixed-length strings.

Enhanced RDT Interfaces

Enhanced RDT (ERDT) ACPI structure: Describes the resource management domains (RMDs) in an SoC and which agents are managed within the scope of each resource management domain; this structure also describes the architectural MMIO register locations for various resource allocation and monitoring features.

Memory Range and Region Mapping (MRRM) ACPI structure: Describes distinct memory ranges in the platform along with their Region-ID mapping registers to group ranges into regions for Region-Aware Memory Bandwidth Allocation (MBA) and Memory Bandwidth Monitoring (MBM). This structure may be used by other product features which utilize or reference Region-IDs.

ERDT Table Structure Layout

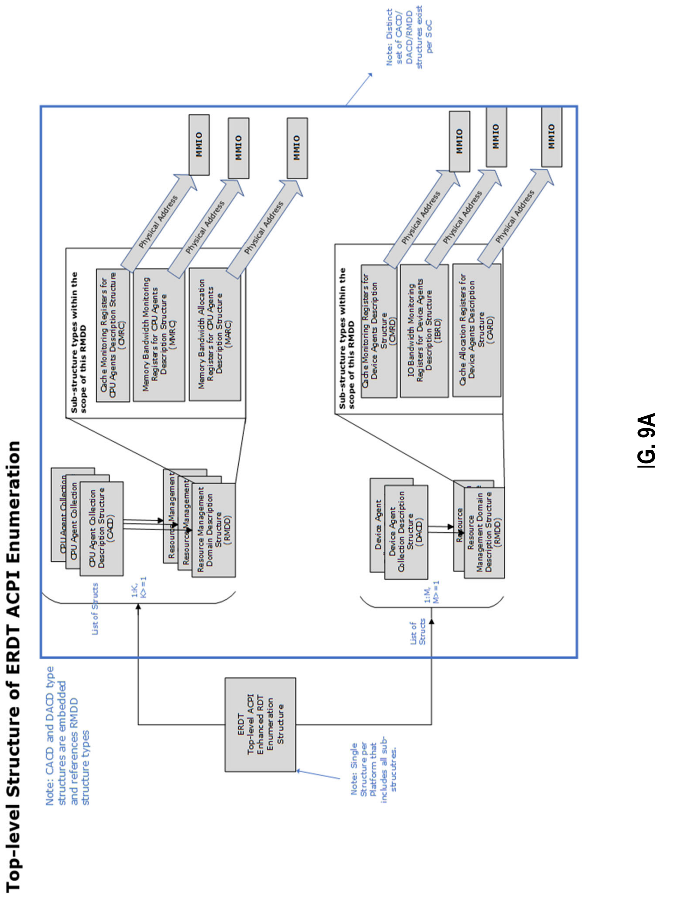

The top-level ACPI structure defined to support Enhanced RDT features is the "ERDT" structure. Figure 9A shows an example of an ERDT ACPI hierarchy. The ERDT structure includes the following sub-structures:

- Resource Management Domain Description Structure (RMDDs),

- CPU Agent Collection Description Structure (CACDs),

- Cache Monitoring Registers for CPU Agents Description Structure (CMRCs),

- Memory Bandwidth Monitoring Registers for CPU Agents Description Structure (MMRCs),

- Memory Bandwidth Allocation Registers for CPU Agents Description Structure (MARCs).

There exists only one instance of the ERDT table for a given platform. Each RMDD structure within ERDT represents a resource management domain (RMD). Thus, there will be as many RMDDs as the number of resource management domains across all SoCs on the platform. For example, on a dual-socket platform, where each socket hosts N resource management domains, there will be 2*N RMDD sub-structures within ERDT.

CPU agents under the scope of each resource management domain (RMDD) are enumerated (via their x2APIC physical APIC-ID [1]) through a CPU Agent Collection Description (CACD) table. Similarly, non-CPU agents under the scope of an RMDD are enumerated through a Device Agent Collection Description (DACD) table. Each RMDD table has a unique Domain-ID, and the CACD/DACD table instances correlate to the corresponding RMDD by referencing the respective RMDD Domain-ID value.

As shown for example in Figure 9A, the CMRC, MMRC and MARC sub-structures describe the architectural MMIO register location and organization for Cache Monitoring Technology, Memory Bandwidth Monitoring (MBM) and Memory Bandwidth Allocation (MBA) enhanced features in RMDDs which have CPU agents within scope.

MRRM Table Structure Layout

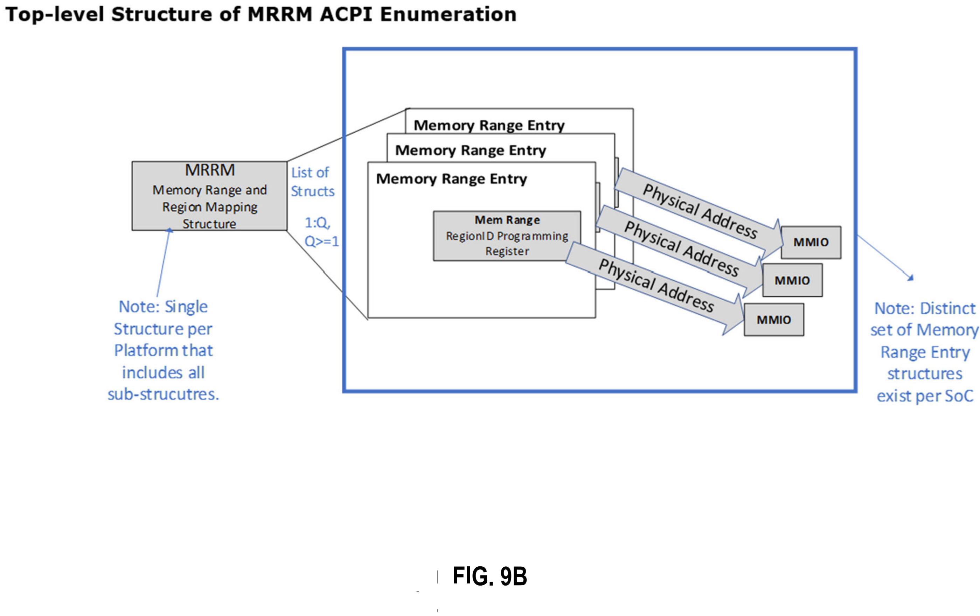

Figure 9B shows an example of the MRRM ACPI table structure which describes the memory range to region mapping details. Each memory range entry in the MRRM structure consists of a contiguous range in host physical address (HPA) address space along with the registers (if OS configuration of Region-IDs are supported) for programming Region-ID for this memory range. Each memory range may be configured with a Region-ID for local accesses and a Region-ID for remote (cross-socket) accesses. The memory ranges are identical to memory ranges specified in a Memory Affinity Structure specified in an ACPI SRAT structure. If the platform supports only static memory range to region mapping, then the 'Platform-assigned Static Local Region-ID' and 'Platform-assigned Static Remote Region-ID' fields describe local and remote Region-IDs allocated by platform firmware (BIOS) for that memory range.

ERDT and MMRM Table Structure Details

ERDT Structure Format and Field Descriptions

The top-level ACPI table, known as the Enhanced Resource Director Technology Structure (ERDT) is shown for example in Table 3. This table includes a unique signature, and length including all sub-structures. The length of the ERDT table may be variable.

Table 3

| Field | Byte Length | Byte Offset | Description |
|---|---|---|---|
| Signature | 4 | 0 | "ERDT". Signature for the Enhanced Resource Director Technology Description structure. |
| Length | 4 | 4 | Length, in bytes, of the description table including the length of the associated substructures. |
| Revision | 1 | 8 | 1 |
| Checksum | 1 | 9 | Entire table sums to zero. |
| OEMID | 6 | 10 | OEM ID |
| OEM Table ID | 8 | 16 | For ERDT structure, the Table ID is the manufacturer model ID |
| OEM Revision | 4 | 24 | OEM Revision of ERDT Table for OEM Table ID. |
| Creator ID | 4 | 28 | Vendor ID of utility that created the table. |
| Creator Revision | 4 | 32 | Revision of utility that created the table. |
| Max CLOS | 4 | 36 | Maximum number of Classes Of Service (CLOS) supported by the platform for resource allocation management. The CLOS values supported by the platform is 0 through N, where N is the value reported in this field. |
| Reserved | 24 | 40 | Reserved (0). |
| ERDT Sub-structures | - | 64 | List of ERDT sub-structures. All substructures have a type and length fields at the beginning. The type field uniquely identifies the type of sub-structure, and the length field indicates the size of the sub-structure including the size of any subordinate structures it may include. For forward compatibility, software is expected to ignore and skip any sub-structures that it does not recognize. The following table lists the various sub-structures defined. |

Valid ERDT Sub-structure Types

RDT Sub-structures start with a 'Type' field (two bytes) followed by a 'Length' field (two bytes) indicating the size in bytes of the structure (including sub-structures), as shown for example in Table 4.

Table 4

| Type | Abbreviation | Description |
|---|---|---|
| 0 | RMDD | Resource Management Domain Description Structure |
| 1 | CACD | CPU Agent Collection Description Structure |
| 3 | CMRC | Cache Monitoring Registers for CPU Agents Description Structure |
| 4 | MMRC | Memory-bandwidth Monitoring Registers for CPU Agents Description Structure |
| 5 | MARC | Memory-bandwidth Allocation Registers for CPU Agents Description Structure |
| 6 | CARC | Cache Allocation Registers for CPU Agents Description Structure |
| >10 | | Reserved for future use. For forward compatibility, software skips structures it does not comprehend by skipping the number of bytes indicated by the Length field. |

BIOS implementations report these RDT Sub-structure types in numerical order, i.e., All RDT Sub-structures of type 0 (RMDD) enumerated before remapping structures of type 1 (CACD) and type 2 (DACD). All the valid sub-structures which are under the scope of type0 (RMDD) should be enumerated in numerical order i.e., type 1 (CACD), type 2 (DACD), type 3 (CMRC), type 4 (MMRC) and so forth and then subsequent type 0 (RMDD) enumeration should take place. Hence, not all of these are top-level structures, some of these sub-structure types may live under other structure type such as an RMDD. See below for details.

A Resource Management Domain Description (RMDD) structure, as shown for example in Table 5, describes an RDT resource management domain. There is at least one instance of this structure present to represent enhanced features such as CMT, MBM and MBA.

Table 5

| Field | Byte Length | Byte Offset | Description |
|---|---|---|---|
| Type | 2 | 0 | 0 - Resource Management Domain Description (RMDD) structure. |
| Length | 2 | 2 | Total Length of this RMDD and all substructures within the scope of this RMDD. |
| Flags | 2 | 4 | **Bit 0: L3 Domain**<br>• If Set, this RMDD represents a resourcemanagement domain hosting a CPU L3 cache. The relevant registers are described through CMRC, MMRC, MARC and CARC register description structures. CPU L3 cache details are reported through CPUID. |
| DomainID | 2 | 18 | This field indicates a unique Domain ID for the RMDD structure representing this resource management domain. The CPU under the scope of an RMDD are enumerated through structures referencing the value in this field. |
| Max RMIDs | 4 | 20 | Maximum number of **Resource**<br><br>**Management IDs (RMIDs)** supported by this resource management domain. The value reported is specific to the respective domain. The RMID values supported are 0 through X, where X is the value reported in this field. Max RMIDs is only valid if monitoring subfeatures are supported for this domain. |
| Control Register Base Address | 8 | 24 | 4KB aligned host physical address of control registers for this RDT Domain. |
| Control Register Size | 2 | 32 | The value reported here is in units of 4KB pages. |
| RMDD structures | - | 34 | A list of agent collection description structures and register description structures within the scope of this RMDD. All substructures have a type and length fields at the beginning. The type field uniquely identifies the type of sub-structure, and the length field indicates the size of the sub-structure including the size of any subordinate structures it may include. For forward compatibility, software is expected to ignore and skip any sub-structure types that it does not recognize. The table below lists the various sub-structure types defined. |

Valid Sub-structure Types within the scope of this RMDD

RDT Sub-structures start with a 'Type' field (two bytes) followed by a 'Length' field (two bytes) indicating the size in bytes of the structure (including sub-structures), as shown for example in Table 6.

Table 6

| Type | Abbreviation | Description |
|---|---|---|
| 1 | CACD | CPU Agent Collection Description Structure |
| 3 | CMRC | Cache Monitoring Registers for CPU Agents Description Structure |
| 4 | MMRC | Memory-bandwidth Monitoring Registers for CPU Agents Description Structure |
| 5 | MARC | Memory-bandwidth Allocation Registers for CPU Agents Description Structure |
| 6 | CARC | Cache Allocation Registers for CPU Agents Description Structure |

(continued)

| Type | Abbreviation | Description |
|---|---|---|
| >10 | | Reserved for future use. For forward compatibility, software skips structures it does not comprehend by skipping the number of bytes indicated by the Length field. |

BIOS implementations report these sub-structure types in numerical order. i.e., All RDT substructures of type 0 (RMDD) enumerated before remapping structures of type 1 (CACD) and type 2 (DACD). All the valid sub-structures which are under the scope of type0 (RMDD) should be enumerated in numerical order i.e., type 1 (CACD), type 2 (DACD), type 3 (CMRC), type 4 (MMRC) and so forth and then subsequent type 0 (RMDD) enumeration should take place.

A CPU Agent Collection Description (CACD) structure, shown for example in Table 7, uniquely represents a collection of logical processor agents on the platform managed by a common RDT domain. There is at least one instance of this structure for each RDT domain.

Table 7

| Field | Byte Length | Byte Offset | Description |
|---|---|---|---|
| Type | 2 | 0 | 1 - CPU Agent Collection Description (CACD) Structure |
| Length | 2 | 2 | Varies (8 + size of Enumeration-IDs field) |
| Reserved | 2 | 4 | Reserved(0) |
| RMDD DomainID | 2 | 6 | This field specifies the Domain-ID for the resource management domain that monitors/enforces cache and memory bandwidth resourcing for agents in this collection. Resource management domains are enumerated through the RMDD structures. Each RMDD structure includes a unique Domain-ID. |
| Enumeration-IDs [] | - | 8 | Array of Enumeration-IDs, each representing a unique logical processor in this agent collection. Enumeration-ID of a logical processor is its 32-bit physical X2APIC ID as reported in the Processor Local x2APIC Affinity Structure in ACPI System Resource Affinity Table (SRAT). |

A Cache Monitoring Registers for CPU Agents Description (CMRC) structure, shown for example in Table 8, describes cache monitoring registers for CPU Agents in a RDT domain. There is at least one instance of this structure for each RDT domain which includes a cache that supports occupancy monitoring.

Table 8

| Field | Byte Length | Byte Offset | Description |
|---|---|---|---|
| Type | 2 | 0 | 3 - Cache Monitoring Registers for CPU Agents Description Structure |
| Length | 2 | 2 | Fixed: 48B |
| Reserved | 4 | 4 | Reserved(0) |
| Flags | 4 | 8 | • **Bit 0: Unavailable Bit Support:** If Set, indicates CMT data registers in this domain support the Unavailable bit, signaling that data may be unavailable. If Clear, indicates CMT Register does not support the Unavailable bit field. See below for the CMT Register Layout. • Bits 1-31: Reserved. |
| Register Indexing Function Version | 1 | 12 | This field indicates Register Indexing Function Version Number. |
| Reserved | 11 | 13 | Reserved(0) |

(continued)

| Field | Byte Length | Byte Offset | Description |
|---|---|---|---|
| CMT Register Block Base Address for CPU | 8 | 24 | 4KB aligned Host Physical Address of MMIO Registers used for RMID-granular near Cache Monitoring Technology for CPU agents. |
| CMT Register Block Size for CPU | 4 | 32 | Size of cache monitoring register space in units of number of 4KB pages. CMT registers are located in the range (X) : (X+Y*4096), where X is value reported in Register Block Base Address field and Y is the value in this field. See below for details on the cache monitoring register layout |
| CMT Register Clump Size for CPU | 2 | 36 | The registers in the Register Block are organized in Clumps. Each Register Clump is a set of N adjacent 8-Byte sized registers, where N is the value specified in this field. The size of a Register Clump is thus 8*N bytes. |
| CMT Register Clump Stride for CPU | 2 | 38 | The first Register Clump starts at the address specified by the base address field above. Each subsequent Register Clump starts at a fixed offset (stride) from the previous Register Clump. The Stride value (S) is reported as number of bytes in this field. Thus, registers in a given Clump 'C' is located at byte offsets <C*S> to <C*S+8*N> |
| CMT Counter Upscaling Factor | 8 | 40 | Upscaling factor from reported CMT counter value to occupancy metric (bytes). |

A Memory Bandwidth Monitoring Registers for CPU Agents (MMRC) Description structure, shown for example in Table 9, describes memory bandwidth monitoring registers for CPU Agents in a RDT domain. There is at least one instance of this structure for each RDT domain which supports monitoring of bandwidth to memory.

Table 9

| Field | Byte Length | Byte Offset | Description |
|---|---|---|---|
| Type | 2 | 0 | 4 - Memory-bandwidth Monitoring Registers for CPU Agents Description Structure |
| Length | 2 | 2 | Varies (56 + size of MBM Correction Factor field) |
| Reserved | 4 | 4 | Reserved(0) |
| Flags | 4 | 8 | **• Bit 0: Unavailable Bit Support:** If Set, indicates MBM data registers in this domain support the Unavailable bit, signaling that data may be unavailable. If Clear, indicates MBM Register does not support the Unavailable bit field. See the RDT Architecture Specification for the MBM Register Layout. **• Bit 1: Overflow Bit Support:** If Set, indicates MBM data registers in this domain support the Overflow bit. If Clear, indicates MBM data registers do not support the Overflow bit field. • Bits 2-31: Reserved. |
| Register Indexing Function Version | 1 | 12 | This field indicates Register Indexing Function Version Number. |
| Reserved | 11 | 13 | Reserved(0) |

(continued)

| Field | Byte Length | Byte Offset | Description |
|---|---|---|---|
| MBM Register Block Base Address | 8 | 24 | 4KB aligned Host Physical Address of MMIO Registers used for RMID-granular Memory Bandwidth Monitoring (MBM) |
| MBM Register Block Size | 4 | 32 | Size of Memory Bandwidth Monitoring register space in units of number of 4KB pages. MBM registers are located in the range (X) : (X+Y*4096), where X is value reported in base address field and Y is the value in this field. |
| MBM Counter Width | 1 | 36 | A value Q indicates that Q-bit counter width is supported by underlying implementation. |
| MBM Counter Upscaling Factor | 8 | 37 | MBM data values read can be converted to bandwidth (in bytes) using the Upscaling Factor. |
| Reserved | 7 | 45 | Reserved(0) |
| MBM Correction Factor List Length | 4 | 52 | A value in this field defines MBM Correction Factor List Length. Below are the valid values for MBM Correction List Length:<br><br>**0:** Do not apply a correction factor to the MBM values.<br>**1:** Apply a single correction factor specified in MBM Correction Factor field to all the MBM values (uniformly apply this correction factor to all data values retrieved from counters for all RMIDs).<br>**Max RMID:** If the value in this field matches the maximum supported RMID for this domain, indicated in RMDD:"Max RMIDs", apply the indicated indexed correction factor specified in MBM Correction Factor list to the corresponding the RMID value for MBM counter. |
| MBM Correction Factor [] | - | 56 | A list of MBM Correction Factors. The list will contain zero, one or Max RMID entries. Fixed point 32-bit format per entry in this list. |

A Memory Bandwidth Allocation Registers for CPU Agents Description (MARC) structure, shown for example in Table 10, describes memory bandwidth allocation registers for CPU Agents in a RDT domain. There is at least one instance of this structure for each RDT domain which supports Memory Bandwidth Allocation.

Table 10

| Field | Byte Length | Byte Offset | Description |
|---|---|---|---|
| Type | 2 | 0 | 5 - Memory-bandwidth Allocation Registers for CPU Agents Description Structure |
| Length | 2 | 2 | Fixed: 48B |
| Reserved | 2 | 4 | Reserved(0) |
| MBA Flags | 2 | 6 | MBA Control Window Parameter Flags:<br>**Bit 0:**<br>**MBA_OPTIMAL_CONTROL_WINDOW**<br>• If Set, this domain supports the Optimal BW Window control.<br>• If Clear, this domain does not support Optimal BW Control Window.<br>**Bit** 1: |

(continued)

| Field | Byte Length | Byte Offset | Description |
|---|---|---|---|
| | | | **MBA_MINIMUM_CONTROL_WINDO W**<br>• If Set, this domain supports the Minimum BW Window control<br>• If Clear, this domain does not support Minimum Control Window.<br>**Bit 2:**<br>**MBA_MAXIMUM_CONTROL_WINDO W**<br>• If Set, this domain supports the Maximum BW Window control<br>• If Clear, this domain does not support Maximum BW Control Window.<br>Bit 3-15 : Reserved (0) |
| Register Indexing Function Version | 1 | 8 | This field indicates Register Indexing Function Version Number. |
| Reserved | 7 | 9 | Reserved(0) |
| MBA Optimal BW Register Block Base Address | 8 | 16 | If MBA_OPTIMAL_CONTROL_WINDOW flag is Set, this field specifies the 4KB aligned Host Physical Address of MMIO Registers used for Optimal Memory Bandwidth Allocation for each Class of Service |
| MBA Minimum BW Register Block Base Address | 8 | 24 | If MBA_MINIMUM_CONTROL_WINDOW flag is Set, this field specifies the 4KB aligned Host Physical Address of MMIO Registers used for Minimum Memory Bandwidth Allocation for each Class of Service |
| MBA Maximum BW Register Block Base Address | 8 | 32 | If MBA_MAXIMUM_CONTROL_WINDOW flag is Set, this field specifies the 4KB aligned Host Physical Address of MMIO Registers used for Maximum Memory Bandwidth Allocation for each Class of Service |
| MBA Register Block Size | 4 | 40 | Size of Memory Bandwidth Allocation registers in units of number of 4KB pages. A value of X in this field indicates X*4KB space for each of the optimal, minimum, and maximum register sets (if supported). |
| MBA BW Control Window Range | 4 | 44 | A value of Q in this field indicates the permitted bandwidth control window range that can be programmed to MBA registers is 1 through Q. |

Memory Range and Region Mapping Structure

The top-level MRRM ACPI table is shown for example in Table 11, and one instance of this table is defined at the system level, generated by the system BIOS. This table includes a unique signature, and length including all sub-structures. The length of the MRRM table may be variable.

A MRRM top level structure describes host physical memory address ranges in the platform for region-ID mapping. The Region-Aware MBM and MBA features enable monitoring and control per region-ID.

If software encounters a Revision number that has not been enabled, then it ceases to proceed forward and prints an error message indicating software is to be updated.

Table 11

| Field | Byte Length | Byte Offset | Description |
|---|---|---|---|
| Signature | 4 | 0 | "MRRM". Signature for the Memory Range and Region Mapping Structure |
| Length | 4 | 4 | Length, in bytes, of the description table including the length of the associated substructures. |
| Revision | 1 | 8 | 1 |
| Checksum | 1 | 9 | Entire table sums to zero. |
| OEMID | 6 | 10 | OEM ID |

(continued)

| Field | Byte Length | Byte Offset | Description |
|---|---|---|---|
| OEM Table ID | 8 | 16 | For MRRM structure, the Table ID is the manufacturer model ID |
| OEM Revision | 4 | 24 | OEM Revision of MRRM Table for OEM Table ID. |
| Creator ID | 4 | 28 | Vendor ID of utility that created the table. |
| Creator Revision | 4 | 32 | Revision of utility that created the table. |
| Max Memory Regions Supported | 1 | 36 | Maximum number of **memory regions** that can be subject to Performance Monitoring, and Region-Aware Memory Bandwidth Monitoring and Allocation. One or more memory address ranges may be grouped to form memory regions. |
| Flags | 1 | 37 | **Bit 0: REGION_ASSIGNMENT_TYPE** • If Clear, platform assigns a static region-ID for all memory ranges. When this bit is reported as clear, the Region-ID assigned for local accesses and remote accesses are provided in the Platform-assigned Local Region-ID field and Platform-assigned Remote Region-ID fields respectively of each Memory Range Entry. When this bit is reported as clear, the Region-ID programming registers field in each memory range entry should be 0. <br> • If Set, platform supports the capability for system software (OS/VMM) to assign region-IDs for local and remote accesses for each memory range. The registers for system software to program the region-IDs are enumerated in the Region-ID Programming Registers field of each Memory Range Entry. In this case, any initial platform-assigned Region-ID values may be read by software from the respective registers for each range. <br> **Bits 1-7: Reserved(0).** |
| Reserved | 26 | 38 | Reserved (0). |
| Memory Range Entry List [] | - | 64 | Array of one or more Memory Range Entries that each identify a contiguous host physical memory range to which memory bandwidth can be allocated and monitored. Refer to Memory Range Entry structure. |
| Signature | 4 | 0 | "MRRM". Signature for the Memory Range and Region Mapping Structure |
| Length | 4 | 4 | Length, in bytes, of the description table including the length of the associated substructures. |
| Revision | 1 | 8 | 1 |
| Checksum | 1 | 9 | Entire table sums to zero. |
| OEMID | 6 | 10 | OEM ID |
| OEM Table ID | 8 | 16 | For MRRM structure, the Table ID is the manufacturer model ID |
| OEM Revision | 4 | 24 | OEM Revision of MRRM Table for OEM Table ID. |
| Creator ID | 4 | 28 | Vendor ID of utility that created the table. |
| Creator Revision | 4 | 32 | Revision of utility that created the table. |
| Max Memory Regions Supported | 1 | 36 | Maximum number of **memory regions** that can be subject to Performance Monitoring, and Region-Aware Memory Bandwidth Monitoring and Allocation. One or more memory address ranges may be grouped to form memory regions. |

(continued)

| Field | Byte Length | Byte Offset | Description |
|---|---|---|---|
| Flags | 1 | 37 | **Bit 0: REGION_ASSIGNMENT_TYPE**<br>• If Clear, platform assigns a static region-ID for all memory ranges. When this bit is reported as clear, the Region-ID assigned for local accesses and remote accesses are provided in the Platform-assigned Local Region-ID field and Platform-assigned Remote Region-ID fields respectively of each Memory Range Entry. When this bit is reported as clear, the Region-ID programming registers field in each memory range entry should be 0.<br>• If Set, platform supports the capability for system software (OS/VMM) to assign region-IDs for local and remote accesses for each memory range. The registers for system software to program the region-IDs are enumerated in the Region-ID Programming Registers field of each Memory Range Entry. In this case, any initial platform-assigned Region-ID values may be read by software from the respective registers for each range.<br>**Bits 1-7: Reserved(0).** |
| Reserved | 26 | 38 | Reserved (0). |
| Memory Range Entry List [] | - | 64 | Array of one or more Memory Range Entries that each identify a contiguous host physical memory range to which memory bandwidth can be allocated and monitored. Refer to Memory Range Entry structure. |

The Memory Range Entry (MRE) Structure, shown for example in Table 12, hosts Memory Range Entries. Each Memory Range Entry identifies a contiguous host physical memory range to which memory bandwidth can be allocated and monitored. Each of these memory range entries provides the MMIO location of registers for software to configure Region-ID tagging for that memory range, if supported.

Table 12

| Field | Byte Length | Byte Offset | Description |
|---|---|---|---|
| Type | 2 | 0 | 0 - Value of 0 in this field indicates this is a Memory Range Entry |
| Length | 2 | 2 | 32B + sizeof (Region-ID Programming Registers[]) |
| Reserved | 4 | 4 | Reserved(0) |
| Base Address Low | 4 | 8 | Low 32 Bits of the Base Address of the memory range |
| Base Address High | 4 | 12 | High 32 Bits of the Base Address of the memory range |
| Length Low | 4 | 16 | Low 32 Bits of the length of the memory range |
| Length High | 4 | 20 | High 32 Bits of the length of the memory range. |
| Region-ID Flags | 2 | 24 | Bit 0: Valid Local Region-ID<br>• If Set, this host physical address memory range has valid Platform-assigned Static Local Region-ID.<br>Bit 1: Valid Remote Region-ID<br>• If Set, this host physical address memory range has valid Platform-assigned Static Remote Region-ID.<br>Bits 2-15: Reserved. |
| Platform-assigned Static Local Region-ID | 1 | 26 | If REGION_ASSIGNMENT_TYPE bit in MRRM.Flags field is 0 and Valid Local Region-ID Flags is 1, this field enumerates the platform-assigned static region-ID for local accesses to this memory range. |

(continued)

| Field | Byte Length | Byte Offset | Description |
|---|---|---|---|
| Platform-assigned Static Remote Region-ID | 1 | 27 | If REGION _ASSIGNMENT_TYPE bit in MRRM.Flags field is 0 and Valid Remote Region-ID Flags is 1, this field enumerates the platform-assigned static region-ID for remote accesses to this memory range. |
| Reserved | 4 | 28 | Reserved (0). |
| Region-ID Programming Registers[] | - | 32 | If the REGION_ASSIGNMENT_TYPE bit in MRRM.Flags field is 1, this field specifies the registers to program Region-ID for this memory range.<br><br>Host Physical Address of 8-Byte aligned RDT MMIO registers used to program the MBA/MBM Region-IDs of this range.<br>Each Memory Range can be assigned two Region-IDs (a Local Region-ID for access by local socket agents and a Remote Region-ID for accesses by remote socket agents). One or more memory ranges can be grouped into a region by assigning them the same Region-ID. Thus Region-IDs enable memory ranges to be organized into a set of regions that can be subject to memory bandwidth monitoring and allocation. To support memory ranges that may be spanning multiple memory controllers, more than one register may be specified in this field. All registers identified in this field should be programmed identically. |

The register set (MMIO interfaces) for each RMDD in the platform may be placed at the 4KB-aligned memory mapped page. The exact location of the register region per feature is implementation dependent and is communicated to system software by BIOS through the ACPI ERDT and MRRM reporting structures (described above).

The following sections describe software access conventions to MMIO-based RDT registers, including bitfield properties.

Table 13 defines, for example, the attributes used in the RDT feature Registers.

Table 13

| Attribute | Description |
|---|---|
| RW | Read-Write field that may be either set or cleared by software to the desired state. |
| RW1C | "Read-only status, Write-1-to-clear status" field. Software can read this bit to find the value of status. Software can write a value of '1' to Clear this bit. Writing a '0' to the bit has no effect. |
| RW1CS | "Sticky Read-only status, Write-1-to-clear status" field. Software can read this bit to find the value of status. Software can write a value of '1' to Clear this bit. Writing a '0' to the bit has no effect. This bit is only reinitialized to its default value by a "Power Good Reset" |
| RWL | "Lockable Read-Write" Software may read or write this field when not locked. When locked, the field is read only. The field's locked status is controlled by a separate configuration bit or other logic. |
| RWLV | "Lockable Read-Write Volatile" Software may read or write this field when not locked. When locked, the field is read only by software. The field's locked status is controlled by a separate configuration bit or other logic. Hardware may change the value of this field at any time including when locked. |
| RO | Read-only field that cannot be directly altered by software |
| ROS | "Sticky Read-only" field that cannot be directly altered by software. These bits are only re-initialized to their default value by a "Power Good Reset" |
| WO | Write-only field. The value returned by hardware on read is undefined. |
| RsvdP | "Reserved and Preserved" field that is reserved for future RW implementations. Registers are read-only and should return 0 when read. Software should preserve the value read for writes. |
| RsvdZ | "Reserved and Zero" field that is reserved for future RW1C implementations. Registers are read-only and should return 0 when read. Software should use 0 for writes. |

Table 14 summarizes, for example, the RDT features memory-mapped registers. The scope of these registers is per RMDD structure.

Table 14

| | | Register Name | Size(b) | Description |
|---|---|---|---|---|
| | 1 | RDT CTRL | 64 | Register to control RDT MBM and MBA features. |
| | 2 | Cache Monitoring Register for CPU Agents | 64 | Register reporting cache occupancy for CPU Agents. MMIO Base address of this register is specified in CMRC sub-structure of ERDT APCI. Field name: CMT Register Block Base Address for CPU. |
| | 3 | Memory-bandwidth Monitoring Registers for CPU Agents | 64 | Register reporting memory bandwidth monitoring for CPU Agents. MMIO Base address of this register is specified in MMRC sub-structure of ERDT APCI. Field name: MBM Register Block Base Address. |
| | 4 | Optimum Memory-bandwidth Allocation Registers for CPU Agents | 64 | Register to configure optimum memory bandwidth allocation targets for CPU Agents. MMIO Base address of this register is specified in MARC sub-structure of ERDT APCI. Field name: MBA Optimal BW Register Block Base Address. |
| | 5 | Minimum Memory-bandwidth Allocation Registers for CPU Agents | 64 | Register to configure minimum memory bandwidth allocation targets for CPU Agents. MMIO Base address of this register is specified in MARC sub-structure of ERDT APCI. Field name: MBA Minimum BW Register Block Base Address. |
| | 6 | Maximum Memory-bandwidth Allocation Registers for CPU Agents | 64 | Register to configure maximum memory bandwidth allocation targets for CPU Agents. MMIO Base address of this register is specified in MARC sub-structure of ERDT APCI. Field name: MBA Maximum BW Register Block Base Address. |
| | 11 | Region-ID Programming Registers[] | | Register to configure range to region mapping using system software OS. MMIO Base address of this register is specified in MRRM ACPI. Field name: Region-ID Programming Registers[]. |

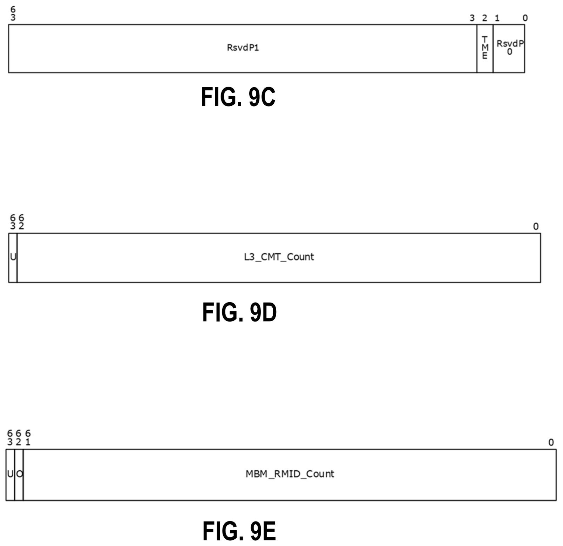

Figure 9C and Table 15 illustrate an example of an RDT control register for CPU agents.

| Abbreviation | RDT_CTRL |
|---|---|
| General Description | Register to configure RDT features for CPU Agents |
| Indexing Function | NA |
| Effective Address | RMDD.Control Register Base Address |
| Scope | Per Resource Management Domain (Per RMDD) |

| Bits | Access | Default | Field | Description |
|---|---|---|---|---|
| 63:3 | RO | 0h | RsvdP1: Reserved and Preserved | Reserved |
| 2:2 | RW | 1h | TME: Total Mode En | Total Mode Enable:<br>1: Indicates Total MBM and MBA Mode to use Legacy MSR interfaces.<br>0: Indicates Per Region Aware MBM and MBA to use MMIO Register interfaces. |
| 1:0 | RO | 0h | RsvdP0: Reserved and Preserved | Reserved |

Table 15

Software may enable region aware MBA and MBM to allocate and monitor memory bandwidth targets per region. Software configures RDT CTRL register per RMDD. Note: These registers are programmed identically across all RMDD's for CPU agents. It is recommended that software use Region Aware MBM when Region Aware MBA is enabled. For total bandwidth monitoring and allocation software may continue to use MSR interfaces by setting Total Mode En Bit[2] to 1. MSR interfaces should not be used if Total Mode En Bit[2] is clear. MSR interfaces do not offer Region Aware Memory bandwidth monitoring and configuration.

Figure 9D and Table 16 illustrate an example of a Cache Monitoring (CMT) register for CPU agents.

| Abbreviation | L3_CMT_RMID_n<br><br>n: Refer ACPI ERDT for MAX RMIDs. RMIDs are zero-based. Hence, this range will be 0 to ("MAX RMIDs" reported by RMDD sub-structure – 1). |
|---|---|

| General Description | Register to report Cache Occupancy for CPU Agents |
|---|---|
| Indexing Function | See below |
| Effective Address | CMRC.CMT Register Block Size for CPU + Indexing function mentioned above |
| Scope | Per Resource Management Domain (Per RMDD) |

| Bits | Access | Default | Field | Description |
|---|---|---|---|---|
| 63 | RO | 0h | U: Unavailable | • 0: Indicates data for this RMID is available or monitored for the resource or RMID. <br><br> • 1: Indicates data for this RMID is not available or not monitored for the resource or RMID, and bits(62:0) should be ignored. |
| 62:0 | RO | 0h | L3_CMT_Count | The value in this field indicates Cache Monitoring (occupancy) telemetry. |

Table 16

RMID Organization in CMT Register Block

Software may use RMID indexing algorithm discussed in this section if "Register Indexing Function Version" field value is 1 in CMRC sub-structure.

RMIDs are organized in sequential fashion in the CMT Register Blocks. Software may consult CMRC sub-structure from ERDT ACPI for retrieving CMT telemetry using CMT Register Block Base Address for CPU, CMT Register Block Size for CPU, CMT Register Clump Size for CPU CMT Register Clump Stride for CPU fields of CMRC sub-structure. Each block size is 4KB. CMT registers are located in the range (CMT Register Block Base Address): (CMT Register Block Base Address + CMT Register Block Size Value *4096). To index RMIDs in the block use the following algorithm:

MMIO_ADDRESS_for_RMID# = CMT Register Block Base Address + ((RMID# / CMT Register Clump Size for CPU) * CMT Register Clump Stride for CPU) + ((RMID# % CMT Register Clump Size for CPU) * 8B);

/*** MMIO_ADDRESS_for_RMID# < (CMT Register Block Base Address + CMT Register Block Size Value *4096) ***/

Here,

Input Parameter: RMID#

Parameters for Indexing:

• "CMT Register Block Base Address" field reported by CMRC sub-structure of ERDT ACPI.

• "CMT Register Block Size Value" reported by CMRC sub-structure of ERDT ACPI.

• Max RMIDs supported on the platform reported by RMDD sub-structure of ERDT ACPI.

• "CMT Register Clump Size for CPU" and "CMT Register Clump Stride for CPU" fields values to be enumerated by CMRC sub-structure.

Figure 9E and Table 17 illustrate an example of a per region per RMID memory bandwidth monitoring register for CPU agents.

| Abbreviation | MBM_Region_m_RMID_n <br> Here, <br> m: Refer ACPI MRRM to find out number of regions supported. Regions are zero-based. Hence, this range will be 0 to ("Max Memory Regions Supported" reported by MRRM ACPI -1) <br> n: Refer ACPI ERDT for MAX RMIDs. RMIDs are zero-based. Hence, this range will be 0 to ("MAX RMIDs" reported by RMDD sub-structure – 1). |
|---|---|
| General Description | Register to report Memory Bandwidth Monitoring for CPU Agents. |
| Indexing Function | See below |
| Effective Address | MMRC.MBM Register Block Base Address + Indexing function mentioned above |
| Scope | Per Resource Management Domain (Per RMDD) |

| Bits | Access | Default | Field | Description |
|---|---|---|---|---|

| 63 | RO | 0h | U: Unavailable | • 0: Indicates data for this RMID is available or monitored for the resource or RMID. 1: Indicates data for this RMID is not available or not monitored for the resource or RMID, and bits(61:0) should be ignored. |
|---|---|---|---|---|
| 62 | RO | 0h | O: Overflow | • 0: Indicates that there is no overflow of the MBM counters • 1: Indicates that there is overflow of the MBM counters. It will be reset upon read, enabling a variable software-defined counter polling interval for reduced sampling overhead. |
| 61:0 | RO | 0h | MBM_RMID_Count | The value in this field indicates Memory Bandwidth Monitoring telemetry. |

Table 17

RMID Organization in MBM Register Block

Software may use RMID indexing algorithm discussed in this section if "Register Indexing Function Version" field value is 1 in MMRC sub-structure.

RMIDs are organized in interleaved fashion in the MBM Register Blocks. Software may consult MMRC sub-structure from ERDT ACPI for retrieving MBM registers using MBM Register Block Base Address and MBM Register Block Size. Each block size is 4KB. MBM registers are located in the range (MBM Register Block Base Address): (MBM Register Block Base Address + MBM Register Block Size Value *4096B). To index RMIDs in the block per Region use the following algorithm:

$$\text{Block\_to\_locate\_RMID\#} = \text{floor}((\text{RMID\#} \% 32) / 8) * 4 * 4096B;$$

$$\text{Offset\_within\_this\_Block} = (\text{floor}(((\text{RMID\#}/32)*8)+\text{RMID\#}\%8)*8B)+(\text{Region\#}*2048B);$$

$$\text{MMIO\_ADDRESS\_for\_RMID\#\_Region\#} =$$

$$\text{MBM Register Block Base Address} + \text{Block\_to\_locate\_RMID\#} +$$

$$\text{Offset\_within\_this\_Block};$$

/*** MMIO_ADDRESS_for_RMID#_Region# < (MBM Register Block Base Address + MBM Register Block Size Value *4096B) ***/

Here,

Input Parameter: RMID# and Region#

Parameters for Indexing:

- "MBM Register Block Base Address" field reported by MMRC sub-structure of ERDT ACPI.

- "MBM Register Block Size Value" reported by MMRC sub-structure of ERDT ACPI.

- Max RMIDs supported on the platform reported by RMDD sub-structure of ERDT ACPI.

- Max Regions support on the platform reported by MRRM ACPI.

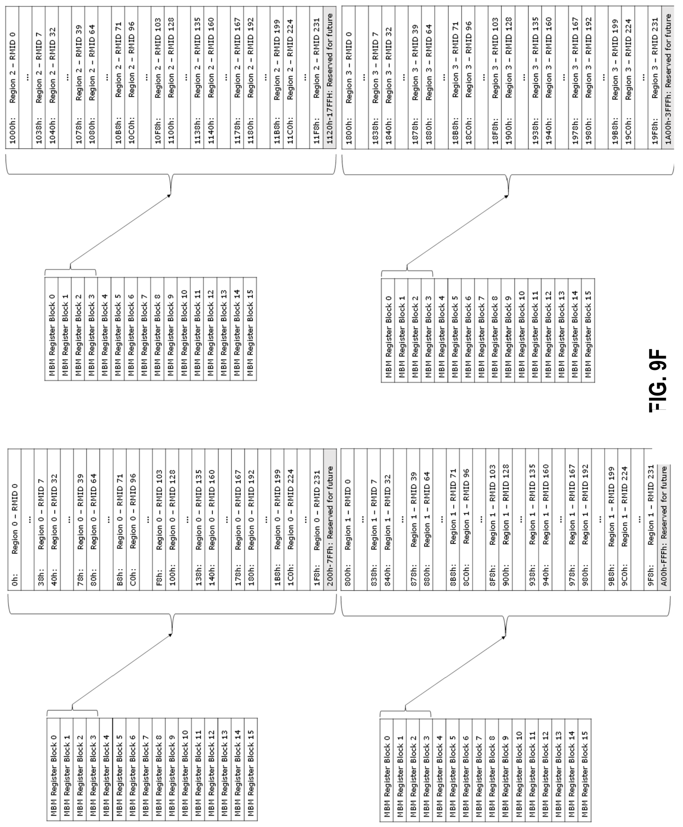

An example of MBM register blocks with interleaved RMIDs is illustrated in Figure 9F.

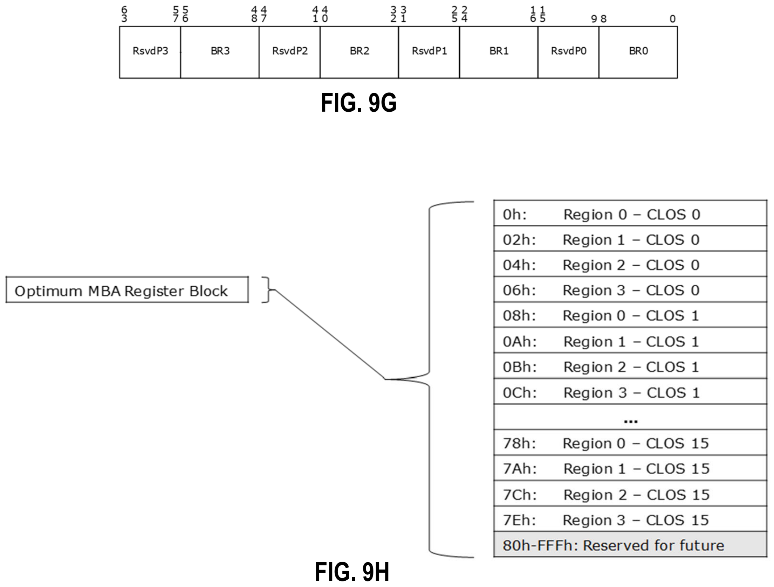

Figure 9G and Table 18 illustrate an example of an MBA optimal bandwidth allocation register for CPU agents.

| Abbreviation | MBA_OPTIMAL_BW_n<br><br>n: Refer ACPI ERDT for Max CLOS. CLOSs are zero-based. Hence, this range will be 0 to ("MAX CLOS" reported by ERDT top-level structure − 1). |
|---|---|
| General Description | Register to configure Optimal Bandwidth Control Window for Memory Bandwidth Allocation per CLOS. |
| Indexing Function | See below |
| Effective Address | MARC.MBA Register Block Base Address + Indexing function mentioned above |
| Scope | Per Resource Management Domain (Per RMDD) |

| Bits | Access | Default | Field | Description |
|---|---|---|---|---|
| 63:57 | RsvdP | 0h | RsvdP3: Reserved and Preserved | Reserved. |
| 56:48 | RW | ffh | BR3: Bandwidth_Target_Region 3 | Optimal Bandwidth Control Value for Region 3. Ranges from 001h to 1ffh, with 001h as the minimum BW and 1ffh as the maximum BW. |
| 47:41 | RsvdP | 0h | RsvdP2: Reserved and Preserved | Reserved. |
| 40:32 | RW | ffh | BR2: Bandwidth_Target_Region 2 | Optimal Bandwidth Control Value for Region 2. Ranges from 001h to 1ffh, with 001h as the minimum BW and 1ffh as the maximum BW. |
| 31:25 | RsvdP | 0h | RsvdP1: Reserved and Preserved | Reserved. |

| 24:16 | RW | ffh | BR1: Bandwidth_Target_ Region 1 | Optimal Bandwidth Control Value for Region 1. Ranges from 001h to 1ffh, with 001h as the minimum BW and 1ffh as the maximum BW. |
| 15:9 | RsvdP | 0h | RsvdP0: Reserved and Preserved | Reserved. |
| 8:0 | RW | ffh | BR0: Bandwidth_Target_Region 0 | Optimal Bandwidth Control Value for Region 0. Ranges from 001h to 1ffh, with 001h as the minimum BW and 1ffh as the maximum BW. |

Table 18

CLOS Organization in Optimal MBA Register Block

Software may use CLOS indexing algorithm discussed in this section if "Register Indexing Function Version" field value is 1 in MARC sub-structure.

CLOSs are organized in sequential fashion in the Optimal MBA Register Blocks. Software may consult MARC sub-structure from ERDT ACPI for configuring per thread per region per CLOS optimum target bandwidth using MBA Optimal BW Register Block Base Address and MBA Register Block Size fields of MARC sub-structure. Each block size is 4KB. Optimum MBA registers are located in the range (MBA Optimal BW Register Block Base Address): (MBA Optimal BW Register Block Base Address + MBA Register Block Size *4096. To index CLOSs per region in the block use the following algorithm:

MMIO_ADDRESS_for_CLOS# = MBA Optimal BW Register Block Base Address + Floor(Region# / 4) * 512B + CLOS#*8B.

/*** MMIO_ADDRESS_for_CLOS# < (MBA Optimal BW Register Block Base Address + MBA Register Block Size *4096) ***/

Here,

Input Parameter: CLOS#, Region# (multiple banks for registers 1st bank is for Region 0 to 3 and consecutively Region 4 to 7 after every 512B). This formula supports up to 64 CLOSs and arbitrary number of regions. If there are more than 64 CLOSs, then a new formula will be used to step through new bank of CLOSs.

Parameters for indexing:

- "MBA Optimal BW Register Block Base Address" field reported by MARC sub-structure of ERDT ACPI

- "MBA Register Block Size" reported by MARC sub-structure of ERDT ACPI

- Max CLOSs supported on the platform reported by ERDT ACPI.

- Max Regions support on the platform reported by MRRM ACPI.

An example of sequential CLOS arrangement in an Optimum MBA register block is shown in Figure 9H.

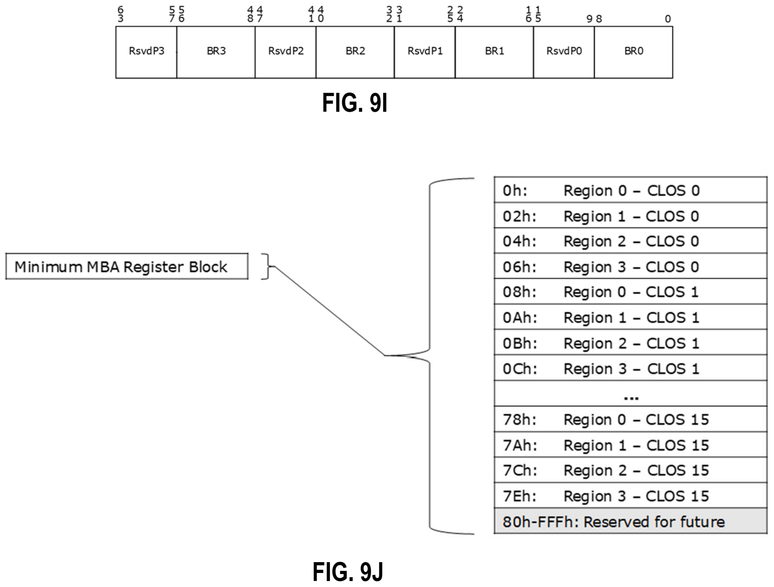

Figure 9I and Table 19 illustrate an example of a minimum MBA register for CPU agents.

| Abbreviation | MBA_MINIMUM_BW_n<br>n: Refer ACPI ERDT for Max CLOS. CLOSs are zero-based. Hence, this range will be 0 to ("MAX CLOS" reported by ERDT top-level structure - 1). |
|---|---|
| General Description | Register to configure Minimum Bandwidth Control Window for Memory Bandwidth Allocation per CLOS. |
| Indexing Function | See below |
| Effective Address | MBA Minimum BW Register Block Base Address + Indexing function mentioned above |
| Scope | Per Resource Management Domain (Per RMDD) |

Table 19

| Bits | Access | Default | Field | Description |
|---|---|---|---|---|
| 63:57 | RsvdP | 0h | RsvdP3: Reserved and Preserved | Reserved. |
| 56:48 | RW | ffh | BR3: Bandwidth for Region 3 | Minimum Bandwidth Control Value for Region 3. Ranges from 001h to ffh, with 001h as the minimum BW and ffh as the maximum BW. |
| 47:41 | RsvdP | 0h | RsvdP2: Reserved and Preserved | Reserved. |
| 40:32 | RW | ffh | BR2: Bandwidth for Region 2 | Minimum Bandwidth Control Value for Region 2. Ranges from 001h to ffh, with 001h as the minimum BW and ffh as the maximum BW. |
| 31:25 | RsvdP | 0h | RsvdP1: Reserved and Preserved | Reserved. |
| 24:16 | RW | ffh | BR1: Bandwidth for Region 1 | Minimum Bandwidth Control Value for Region 1. Ranges from 001h to ffh, with 001h as the minimum BW and ffh as the maximum BW. |
| 15:9 | RsvdP | 0h | RsvdP0: Reserved and Preserved | Reserved. |
| 8:0 | RW | ffh | BR0: Bandwidth for Region 0 | Minimum Bandwidth Control Value for Region 0. Ranges from 001h to ffh, with 001h as the minimum BW and ffh as the maximum BW. |

CLOS Organization in Minimum MBA Register Block

Software may use CLOS indexing algorithm discussed in this section if "Register Indexing Function Version" field value is 1 in MARC sub-structure.

CLOSs are organized in sequential fashion in the Minimum MBA Register Blocks. Software may consult MARC sub-structure from ERDT ACPI for configuring per thread per region per CLOS minimum target bandwidth using MBA Minimum BW Register Block Base Address and MBA Register Block Size fields of MARC sub-structure. Each block size is 4KB. Minimum MBA registers are located in the range (MBA Minimum BW Register Block Base Address): (MBA Minimum BW Register Block Base Address + MBA Register Block Size *4096). To index CLOSs per region in the block use the following algorithm:

MMIO_ADDRESS_for_CLOS# = MBA Minimum BW Register Block Base Address + Floor(Region# / 4) * 512B + CLOS#*8B.

/*** MMIO_ADDRESS_for_CLOS# < (MBA Minimum BW Register Block Base Address + MBA Register Block Size *4096) ***/

Here,

Input Parameter: CLOS#, Region# (multiple banks for registers 1st bank is for Region 0 to 3 and consecutively Region 3 to 7 after every 512B). This formula supports up to 64 CLOSs and arbitrary number of regions. If there are more than 64 CLOSs, then a new formula will be used to step through new bank of CLOSs.

Parameters for Indexing:

- "MBA Minimum BW Register Block Base Address" field reported by MARC sub-structure of ERDT ACPI

- "MBA Register Block Size" reported by MARC sub-structure of ERDT ACPI

- Max CLOSs supported on the platform reported by ERDT ACPI.

- Max Regions support on the platform reported by MRRM ACPI.

An example of sequential CLOS arrangement in a Minimum MBA register block is shown in Figure 9J.

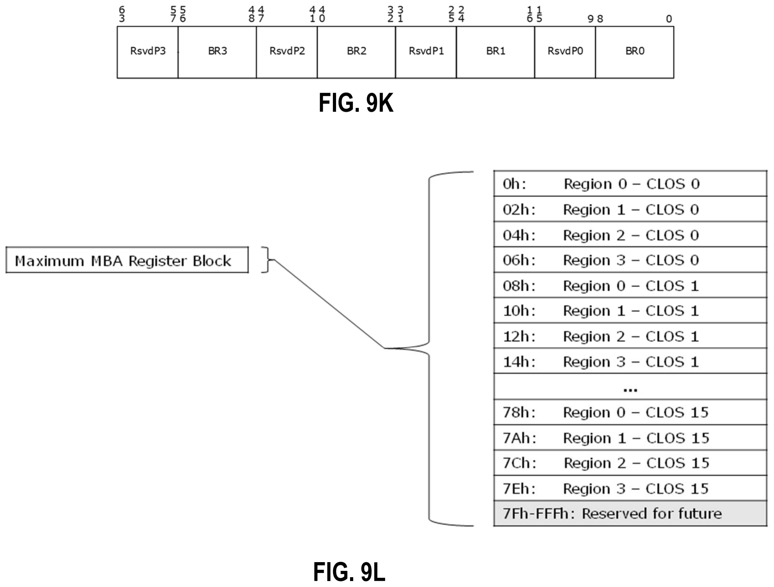

Figure 9K and Table 20 illustrate an example of a maximum MBA register for CPU agents.

| Abbreviation | MBA_MAXIMUM_BW_n<br>n: Refer ACPI ERDT for Max CLOS. CLOSs are zero-based. Hence, this range will be 0 to ("MAX CLOS" reported by ERDT top-level structure - 1). |
|---|---|
| General Description | Register to configure Maximum Bandwidth Control Window for Memory Bandwidth Allocation per CLOS. |
| Indexing Function | See below |
| Effective Address | MBA Maximum BW Register Block Base Address + Indexing function mentioned above. |
| Scope | Per Resource Management Domain (Per RMDD) |

Table 20

| Bits | Access | Default | Field | Description |
|---|---|---|---|---|
| 63:57 | RsvdP3 | 0h | RsvdP3: Reserved and Preserved | Reserved. |
| 56:48 | RW | ffh | BR3: Bandwidth for Region 3 | Maximum Bandwidth Control Value for Region 3. Ranges from 001h to ffh, with 001h as the minimum BW and ffh as the maximum BW. |
| 47:41 | RsvdP2 | 0h | RsvdP2: Reserved and Preserved | Reserved. |
| 40:32 | RW | ffh | BR2: Bandwidth for Region 2 | Maximum Bandwidth Control Value for Region 2. Ranges from 001h to ffh, with 001h as the minimum BW and ffh as the maximum BW. |
| 31:25 | RsvdP 1 | 0h | RsvdP1: Reserved and Preserved | Reserved. |
| 24:16 | RW | ffh | BR1: Bandwidth for Region 1 | Maximum Bandwidth Control Value for Region 1. Ranges from 001h to ffh, with 001h as the minimum BW and ffh as the maximum BW. |
| 15:9 | RsvdPO | 0h | RsvdP0: Reserved and Preserved | Reserved. |

(continued)

| Bits | Access | Default | Field | Description |
|------|--------|---------|-------|-------------|
| 8:0 | RW | ffh | BR0: Bandwidth for Region 0 | Maximum Bandwidth Control Value for Region 0. Ranges from 001h to ffh, with 001h as the minimum BW and ffh as the maximum BW. |

CLOS Organization in Maximum MBA Register Block

Software may use CLOS indexing algorithm discussed in this section only if "Register Indexing Function Version" field value is 1 in MARC sub-structure.

CLOSs are organized in sequential fashion in the Maximum MBA Register Blocks. Software may consult MARC sub-structure from ERDT ACPI for configuring per thread per region per CLOS maximum target bandwidth using MBA Maximum BW Register Block Base Address and MBA Register Block Size fields of MARC sub-structure. Each block size is 4KB. Maximum MBA registers are located in the range (MBA Maximum BW Register Block Base Address): (MBA Maximum BW Register Block Base Address + MBA Register Block Size *4096). To index CLOSs per region in the block use the following algorithm:

MMIO_ADDRESS_for_CLOS# = MBA Maximum BW Register Block Base Address + Floor(Region# / 4) * 512B + CLOS#*8B.

/*** MMIO_ADDRESS_for_CLOS# < (MBA Maximum BW Register Block Base Address + MBA Register Block Size *4096) ***/

Here,

Input Parameter: CLOS#, Region# (multiple banks for registers 1st bank is for Region 0 to 3 and consecutively Region 3 to 7 after every 512B). This formula supports up to 64 CLOSs and arbitrary number of regions. If there are more than 64 CLOSs, then a new formula will be used to step through new bank of CLOSs.

Parameters for Indexing:

- "MBA Maximum BW Register Block Base Address" field reported by MARC sub-structure of ERDT ACPI

- "MBA Register Block Size" reported by MARC sub-structure of ERDT ACPI

- Max CLOSs supported on the platform reported by ERDT ACPI.

- Max Regions support on the platform reported by MRRM ACPI.

An example of sequential CLOS arrangement in a Maximum MBA register block is shown in Figure 9L.

A memory region (also referred to as a Tier) may be defined as a physical address range that is addressable by an Agent such as CPU or non-CPU and has a Target, i.e., type of resource such as DDR or CXL memory. Memory regions typically differ from each other in terms of bandwidth, latency, and capacity. There may be a finite number of memory regions supported. These memory regions may be assigned by the platform by default via BIOS during the boot process. Software may choose to configure these regions using MMIO registers enumerated by Memory Range and Region Mapping (MRRM) ACPI structure depending on certain implementation support. Various attributes of memory regions are enumerated via MRRM ACPI structure. See below for details. There may be no implication of priority defined by the memory region, i.e., Region 0 is not higher or lower in priority than Region 3.

Defining memory regions in this fashion may break the physical dependency on memory type that existed on prior SoCs and allows for regions of memory that span different memory types.

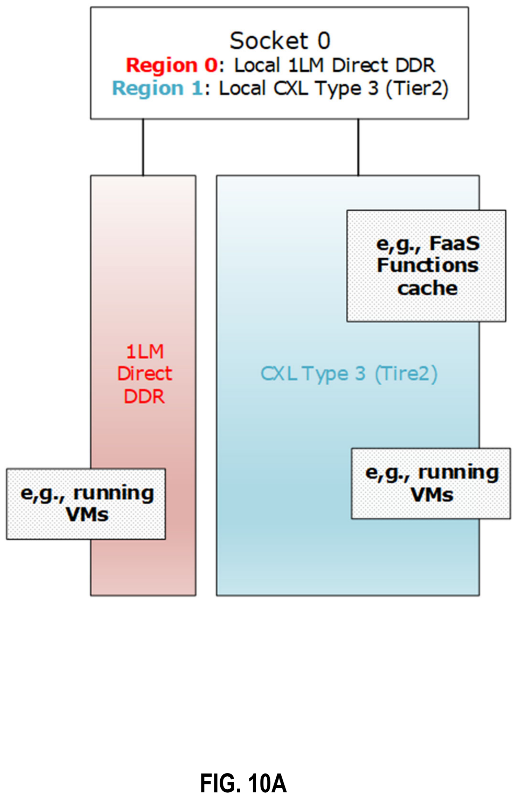

The different types of memory regions (some of which are shown for example in Figure 10A) may be defined as:

- 1LM: Direct attached memory organized as "1-level memory" (1LM), also known as primary memory.

- 2LM: Direct attached memory organized as "near memory" (NM), plus CXL attached "far memory" (FM), in a "2-level memory" (2LM) arrangement. Note that NM and FM are on the same socket. Therefore, you can have 2LM(NM+FM) on a local socket and 2LM(NM+FM) on a Remote socket.

- 2nd Tier: Software managed tier of memory with higher latency, lower bandwidth and (typically) a higher capacity/-bandwidth ratio than direct attached memory.

- 3rd Tier: Software managed tier of memory with higher latency than direct attached memory, and (typically) lower bandwidth and a higher capacity/bandwidth ratio than both direct attached memory and 2nd tier memory. Storage class memory would typically fall into the 3rd tier.

- CXL Type-2 Accelerators: Accelerator devices that expose their memory to the processor/operating system. Memory capacity is typically small relative to direct attached memory, 2nd tier memory and 3rd tier memory.

Note the following memory tiering guidelines with respect to multi-socket systems:

- All memory regions are "socket local" only; cross socket UMA are not supported on any tier, including the 1st tier of direct attached DDR.

- All sockets implement a first tier of memory.

- These first tiers are not required to be matched in terms of channel count, capacity or interleave, even if in most common cases they will be. This allows for fallback configurations on one socket in the event of a DIMM or memory controller stack failure.

- All sockets employ 2LM in an identical manner, whether the configuration on all sockets be 1LM only, 2LM only or 1LM + 2LM.

- Embodiments validate only configurations with identical sets of memory tiers across the multiple sockets. This specifically refers to consistency in terms of having 2 tiers on all sockets or 3 tiers on all sockets. The composition of those tiers may vary due to configuration fall back in the event of a failure, but the tier count is consistent across sockets. In other words, all sockets always have the same number of tiers. Configurations that do not follow this guideline may not be validated. BIOS will not prevent boot.

- Accelerators are not required to be populated consistently across sockets.

The following sections discuss programming considerations for Region Aware MBA and MBM features

Types of Coherent Memories

Memory regions, as defined in preceding chapters, are programmed by the system BIOS to encapsulate ranges of memory addresses, which may refer to any standard type of coherent memory present on the system. Examples include locally attached DRAM, pooled CXL memories, or a group of memories present on a remote processor socket.
To enable ease of use, the Region Aware MBA and MBM features define the ERDT and MRRM ACPI objects which may be cross-referenced as described in this chapter with other existing ACPI objects, such as the HMAT, SRAT and CEDT tables, to assemble a complete view of system memory, including basic latency and bandwidth properties. The capability to combine information from these tables may be valuable to OS/VMM schedulers and memory managers.

Software View of Memory Tiers

Memory Regions may also be assigned by BIOS in such a way that certain regions represent memory in lower memory tiers (often with lower access bandwidth and higher latency), or memory which is hosted by remote processors. A combination of information from ACPI MRRM (defining regions to physical address associations), HMAT and SRAT (defining latency/bandwidth characteristics of regions through sub-tables such as SLLBIS) and NUMA information (from ACPI SLIT) can be used to understand these relationships as described in sections which follow. An example of using this combined information is described below.

Leverage by other features

Independent of RDT and its usages, system software may use the complete view of system memory for scheduling and memory migration decisions. RDT adds further value with Region Aware monitoring (MBM) and bandwidth control (MBA) capabilities for telemetry, performance debug, and performance management.

Other hardware features present in the system may make use of this view of system memory, and may also make use of the memory regions defined in the ACPI MRRM table. For instance, a subset of performance monitoring (perfmon) features are expected to use the same definitions, and report performance counter results on a per-region basis. This shared definition of memory regions enables consistency in software monitoring and management of various memory types. Generally, RDT features enable tracking of many concurrent threads / apps / VMs / containers, while performance monitoring features enable deeper tracking and tracing of activity by a limited set of processes or threads.

Assembling a Complete View of System Memory

The MRRM ACPI table structure that describes the memory range to region mapping details. Each memory range entry in MRRM structure consists of contiguous range in host physical address space along with platform assigned static local and remote Region-ID or set of registers (if OS configuration of Region-IDs is supported)) for programming RegionID for the memory range. Each memory range can be configured with a Region-ID for local accesses and a Region-ID for remote (cross-socket) accesses. The memory ranges are identical to memory ranges specified in Memory Affinity Structure specified in ACPI SRAT structure. If platform supports only static memory range to region mapping, then 'Platform-assigned Static Local Region-ID' and 'Platform-assigned Static Remote Region-ID' fields describe local and remote Region-ID allocated by platform firmware (BIOS) for that memory range.

Software can identify memory types installed on the platform by using memory ranges and Region-ID mapping through MRRM, SRAT, HMAT, CEDT ACPI tables. The following mapping table and figure may be used by software to construct internal data structures that help map memory regions to the memory type supported by the platform.

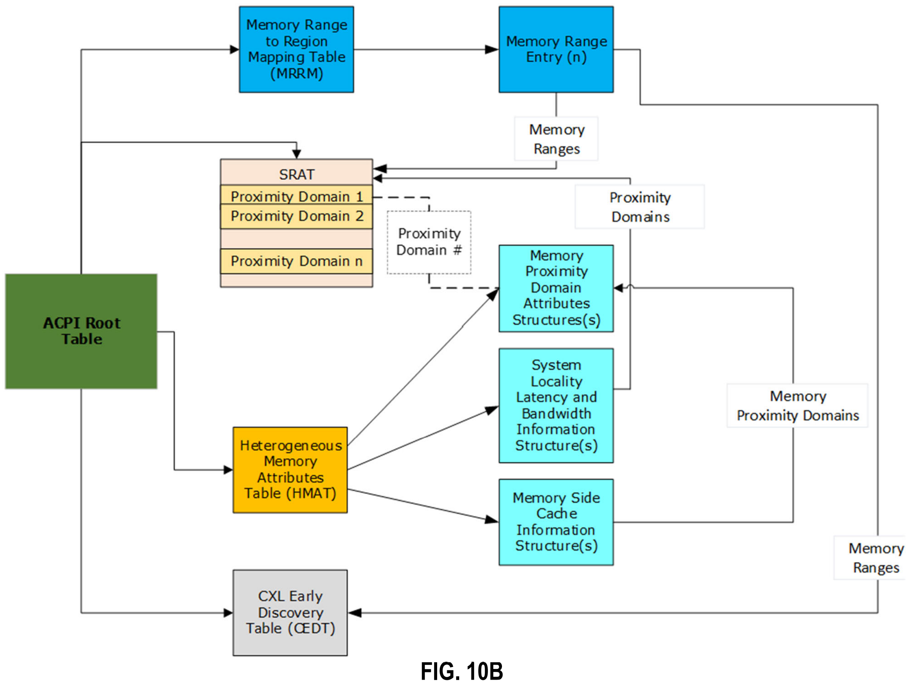

Figure 10B illustrates an example of an MRRM, SRAT, HMAT, and CEDT correlation.

To identify memory types behind memory ranges enumerated by SRAT ACPI, follow below guidelines:

- CXL memory: All memory addresses decoded by CXL are described in ACPI CEDT table. CXL Fixed Memory Window Structure (CFMWS) sub-structure allows software to detect different coherency characteristics, interleaving, persistency, etc.

- Flat 2LM: If F2LM FM is behind CXL, it will appear in CXL Fixed Memory Window Structure (CFMWS) structure with Windows Restriction[4]=1 (Fixed Device Configuration).

- DDR: DDR 1LM memory range will appear in ACPI HMAT table as one without a memory side cache. DDR 1LM addresses will never be covered by CFMWS since DDR 1LM is not attached to CXL.

- For all these memory ranges enumerated by BIOS, HMAT will provide the performance characteristics. The values published in HMAT are based on basic BIOS computation and not on any benchmarks that are actually executed on the platform.

The SRAT, HMAT and MRRM tables should be present to assemble a complete view of system memory.

Memory Hierarchy and Bandwidth Enumeration

Heterogeneous Memory Attributes Table (HMAT) introduced in the revision 6.2 of ACPI specification which should be available on future platforms to describe complex memory hierarchies.

Platform vendors can expose in this table theoretical latency and bandwidth between the initiators (set of cores) and all the memory targets (NUMA nodes). For instance, on a platform with both CXL and DRAM, cores could access their local DRAM at XXX GB/s with XXX ns latency, or their local CXL at XXX GB/s with XXX ns, while other cores (CPU agents) access this CXL XXX GB/s and XXX ns. Latencies and bandwidths will be specified for read and write accesses. Refer System Locality Latency and Bandwidth Information Structure (SLLBIS) structure specified in HMAT ACPI.

High-level Software Component Responsibilities

In its most basic form, the delineation of software components responsibilities is:

- The System Firmware is responsible for enumerating and configuring memory types that are present at boot.

- The OS components are responsible for enumerating and configuring all topologies.

Table 21 describes, for example, these high-level roles and responsibilities for major software components.

Table 21

| Function | System Firmware Responsibilities | OS/Software utilities Responsibilities | System State |
|---|---|---|---|
| SRAT | • Create proximity domains for CPUs, attached memory types using Affinity Type<br>• No SRAT entries for intermediate switches (CXL)<br>• Build Memory Affinity Structures for each volatile proximity domain with the SRAT Enable flag set. | Consume SRAT as needed for volatile capacity for legacy functionality. | At Boot |
| HMAT and CDAT | For memory devices containing volatile capacity:<br>• Parse device and switch CDAT and create HMAT entries for CPU and volatile memory proximity domains found in the SRAT | For all persistent capacity: Utilize memory device CDAT, switch CDATs, and Generic Port entries to calculate total BW and Latency for the path from the CXL Host Bridge to each device. | At Boot |
| SRAT | Indicate hot pluggable proximity domains with Memory Affinity Structure HotPluggable indicator | | Hot Add |
| HMAT | N/A | Hot added volatile and persistent memory devices:<br>• Utilize memory device CDAT, switch CDATs, and CXL Host Bridge HMAT information to calculate total<br>BW and Latency for the path from the CXL Host Bridge to the new device | Hot Add |

System Firmware constructs and reports SRAT and HMAT to the OS systems with different memory types. These memory types will have memory ranges which are associated with proximity domains. These proximity domains can be referenced in HMAT ACPI for obtaining performance values to characterize memory targets.

CXL Early discovery:

Each HDM range is later exposed to the OS as a separate, memory-only NUMA node via ACPI SRAT. System Firmware obtains CDAT from the UEFI device driver or directly from the device via Table Access DOE and then uses this information during construction of the memory map, ACPI SRAT, and ACPI HMAT.

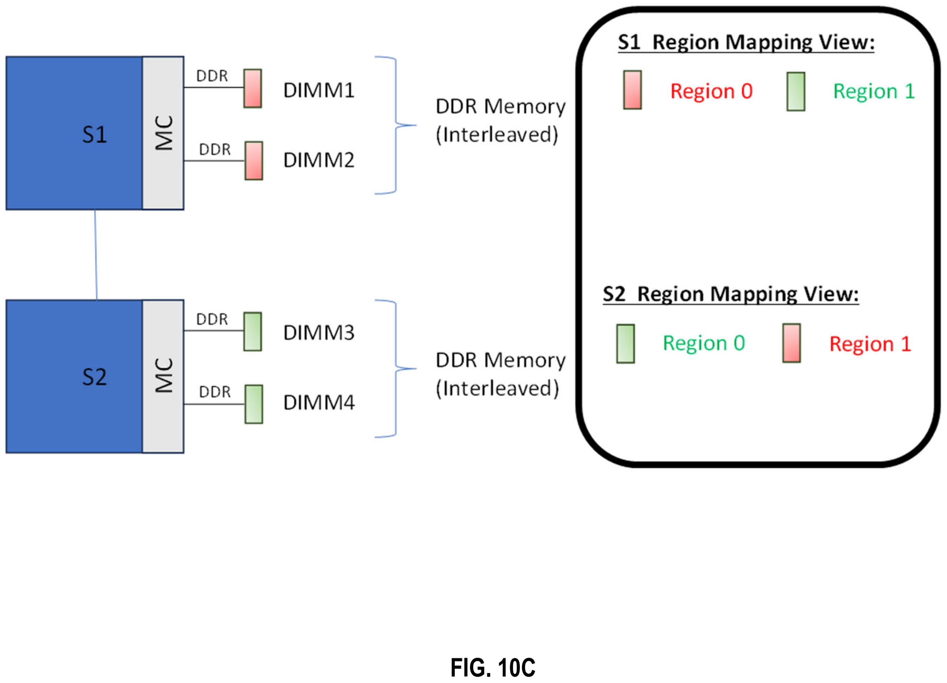

Figure 10C illustrates a system configuration example with DDR memory. Each CPU also has a local memory controller with two DDR channels and one DIMM attached to each channel.

In this example, it is assumed that read latency is always equal to the write latency for every data path and read bandwidth is always equal to the write bandwidth for every data path.

Information known to system firmware (apriori knowledge):

• DIMM1, DIMM2, DIMM3, DIMM4 size = 128GB

•

$$DDR\ Read/Write\ Latency = 50ns$$

•

$$DDR\ Bandwidth = 20GB/s/DDR\ channel$$

•

$$S1 - S2 \text{ access latency} = 50\text{ns}$$

•

$$S1 - S2 \text{ bandwidth} = 30\text{GB/s}$$

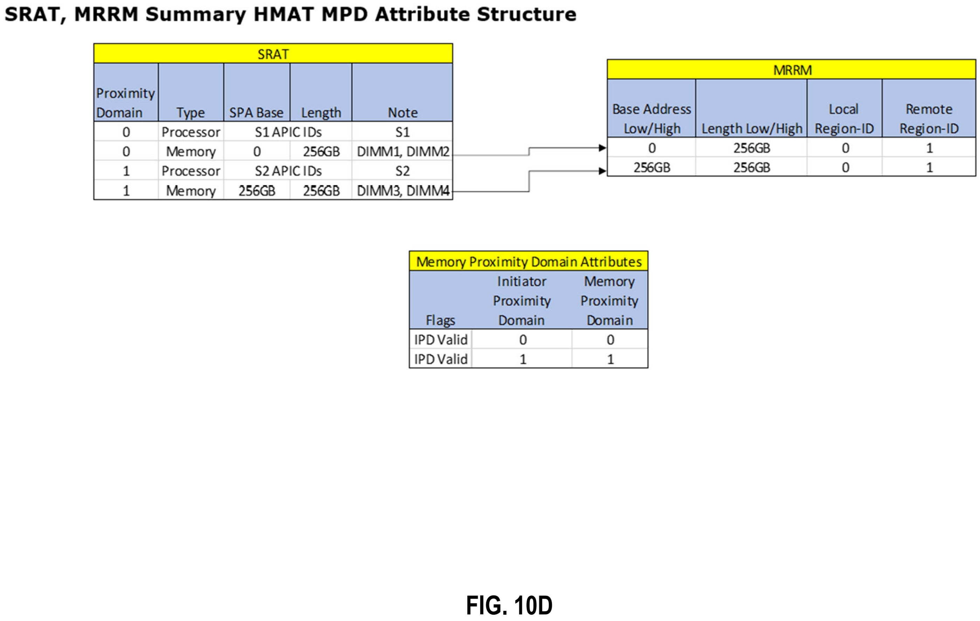

The system firmware is able to calculate the latency from any initiator to any target by simply adding the latency contribution of every hop in the data path. Similarly, the system firmware is also able to calculate the bandwidth from any initiator to any target by selecting the smallest value among the bandwidth associated with various hops in the data path. It is assumed that 2 way interleaving across DDR channels doubles the effective bandwidth. An example of the results is shown in the Figure 10D.

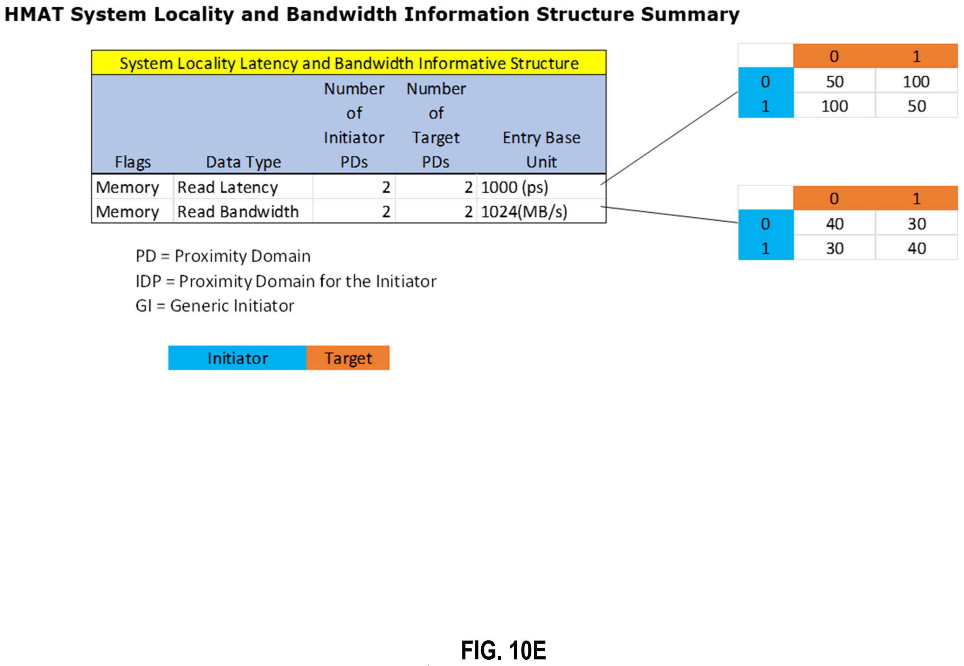

The system firmware is also able to calculate the latency from any initiator to any target by simply adding the latency contribution of every hop in the data path. Similarly, the system firmware is also able to calculate the bandwidth from any initiator to any target by selecting the smallest value among the bandwidth associated with various hops in the data path. It is assumed that 2 way interleaving across DDR channels doubles the effective bandwidth. An example of the results is shown in the Figure 10E.

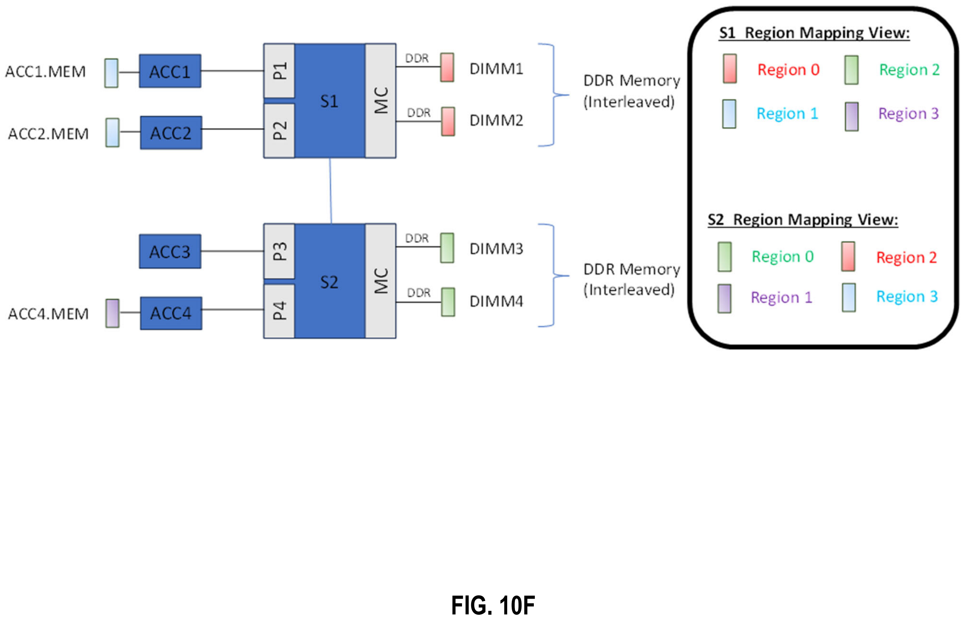

Figure 10F illustrates a system configuration example with heterogeneous memory (DDR and coherent accelerators). Two coherent accelerators, namely ACC1 and ACC2, are attached to CPU S1 via a coherent interconnect such as CXL. Two accelerators, ACC3 and ACC4 are connected to CPU S2 via the same coherent interconnect. Each CPU also has a local memory controller with two DDR channels and one DIMM attached to each channel.

The system firmware may combine the information it has about the CPU and various CPU links with DDR from HMAT and CDAT extracted from each of the coherent accelerators.

In this example, it is assumed that read latency is always equal to the write latency for every data path and read bandwidth is always equal to the write bandwidth for every data path.

Information known to system firmware (apriori knowledge):

•   DIMM1, DIMM2, DIMM3, DIMM4 size = 128GB

•

$$DDR \text{ Read/Write Latency} = 50\text{ns}$$

•

$$DDR \text{ Bandwidth} = 20\text{GB/s/DDR channel}$$

•

$$S1 - S2 \text{ access latency} = 50\text{ns}$$

•

$$S1 - S2 \text{ bandwidth} = 30\text{GB/s}$$

•

$$Coherent \text{ Interconnect Latency} = 40 \text{ ns}$$

•

$$Coherent \text{ Interconnect Bandwidth} = 30 \text{ GB/s}$$

System firmware is aware that ACC1 memory is mapped starting at System Physical Address (SPA) of 256 GB. ACC2 memory base SPA is at 272 GB and ACC4 memory base SPA is at 536 GB.

ACC1 returns the following CDAT entries

- One DSMAS Entry, DPA Base = 0, DPA Length = 16 GB, handle = 0

- One DSIS entry, associated DSMAS Handle =0

- DSLBIS entries which state latency for all 3 data paths is 60 ns and bandwidth for all 3 data paths is 80 GB/s

ACC2 returns the following CDAT entries

- One DSMAS Entry, DPA Base = 0, DPA Length = 8 GB, handle = 0

- One DSIS entry, associated DSMAS Handle =0

- DSLBIS entries which state latency for all 3 data paths is 60 ns and bandwidth for all 3 data paths is 80 GB/s

ACC3 returns the following CDAT entries

- One DSIS entry which is not associated with any DSMAS

- DSLBIS entries which state latency for the ingress to the initiator data path is 60 ns and bandwidth for the ingress to the initiator data path is 80 GB/s

ACC4 returns the following CDAT entries

- One DSMAS Entry, DPA Base = 0, DPA Length = 32 GB, handle = 0 • One DSIS entry, associated DSMAS Handle =0

- DSLBIS entries which state latency for all 3 data paths is 60 ns and bandwidth for all 3 data paths is 80 GB/s

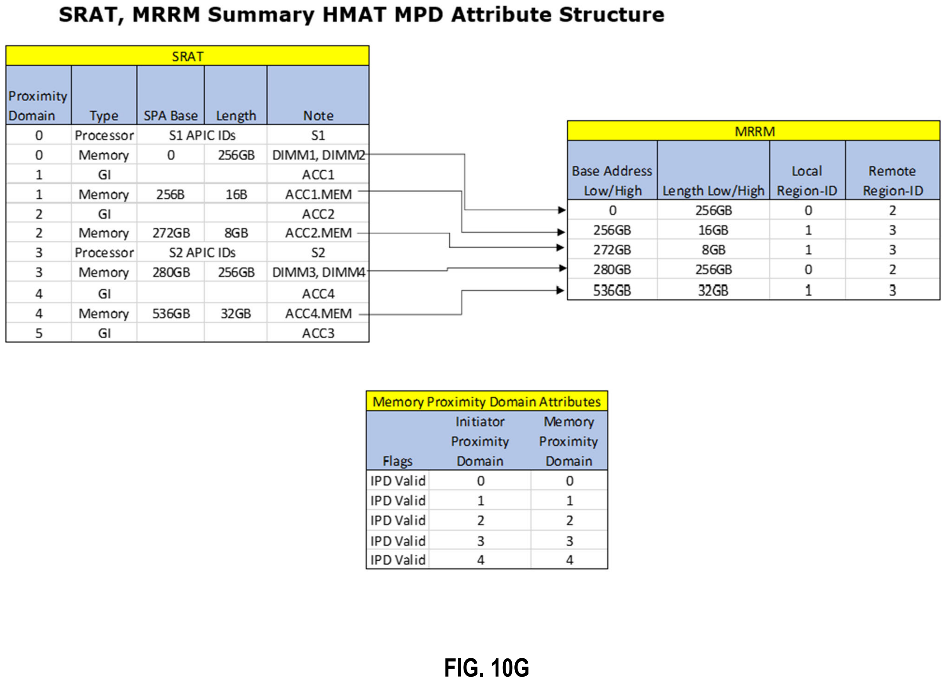

Using the above information, the system firmware concludes that each accelerator is described as a separate proximity domain in SRAT. ACC1, ACC2 and ACC4 each have a Generic Initiator as well as memory associated with them, whereas ACC3 appears as a Generic Initiator only proximity domain. The system firmware constructs memory range to region mapping structure that maps each SPA to local and remote RegionID. The system firmware is also able to construct Memory Proximity Domain Attributes Structure in HMAT which in turn can be mapped to per memory range to per RegionID to per proximity domain. An example of the results is shown in Figure 10G.

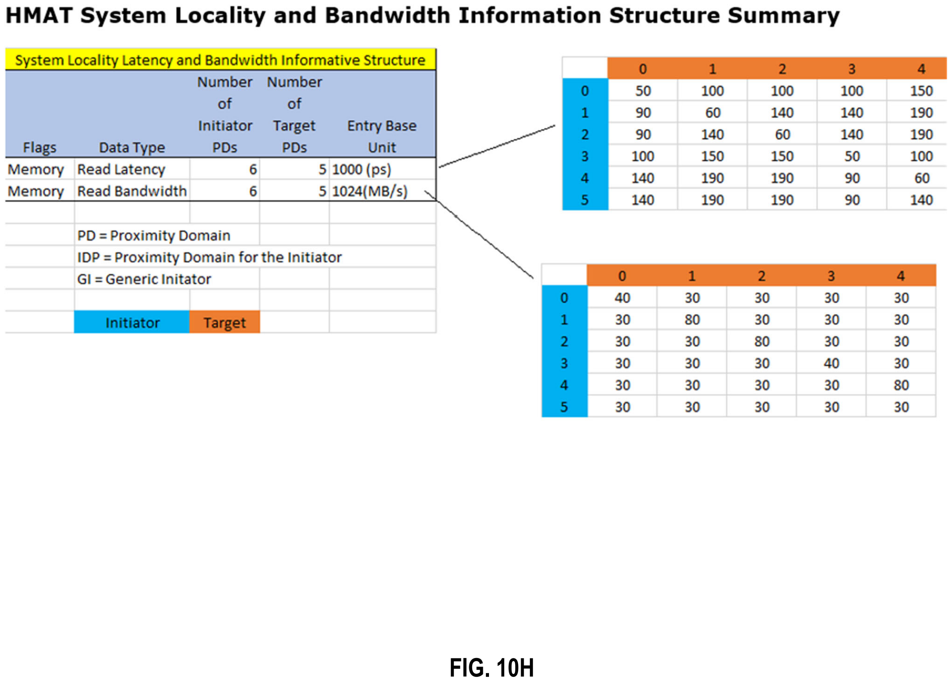

The system firmware is also able to calculate the latency from any initiator to any target by simply adding the latency contribution of every hop in the data path. Similarly, the system firmware is also able to calculate the bandwidth from any initiator to any target by selecting the smallest value among the bandwidth associated with various hops in the data path. It is assumed that 2 way interleaving across DDR channels doubles the effective bandwidth. An example of the results is shown in Figure 10H.

If ACC1 is removed from the system, software may wish to remove ACC1 related entries from these structures. Software may use bus specific mechanisms to determine that ACC1 memory base is 256 GB and size is 16 GB. By matching these addresses against the SRAT entries, software can unambiguously determine that proximity domain 1 represents ACC1. Software may map domain 1 entries in SRAT as invalid and purge the corresponding entries from HMAT.

If another ACC3 like device is dynamically added to the system, Operating System may extract CDAT from that device and insert new entries in the OS internal structure that is equivalent to SRAT and a new row in the OS internal structure that is equivalent to HMAT using an algorithm like the one used by the system firmware.

Embodiments may include region aware MBM and/or MBA which allows per application/thread/VM tracking and control of bandwidth to different memory regions, i.e., bandwidth control per thread and per memory region.

Software-visible components of the Region Aware MBM framework include the ERDT ACPI enumeration and a set of MSRs to allow thread-to-RMID association (IA32_PQR_ASSOC) and counter memory mapped registers read back memory bandwidth monitoring data.

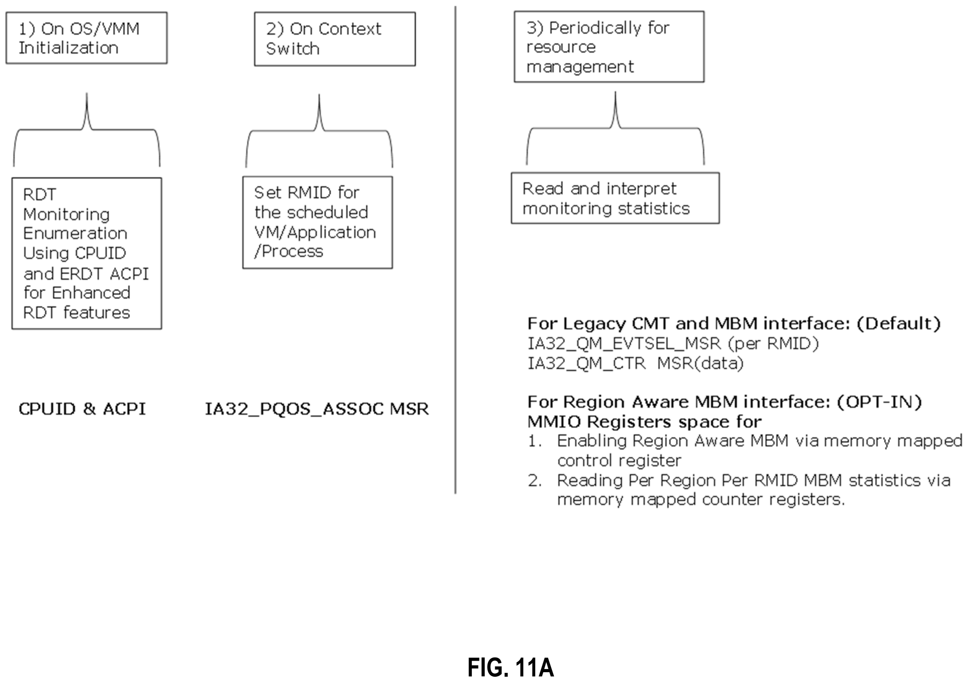

Figure 11A illustrates an example of a region aware MBM software flow and shows and example of a categorized view of the MSR and Memory Mapped Register based interfaces to MBM.

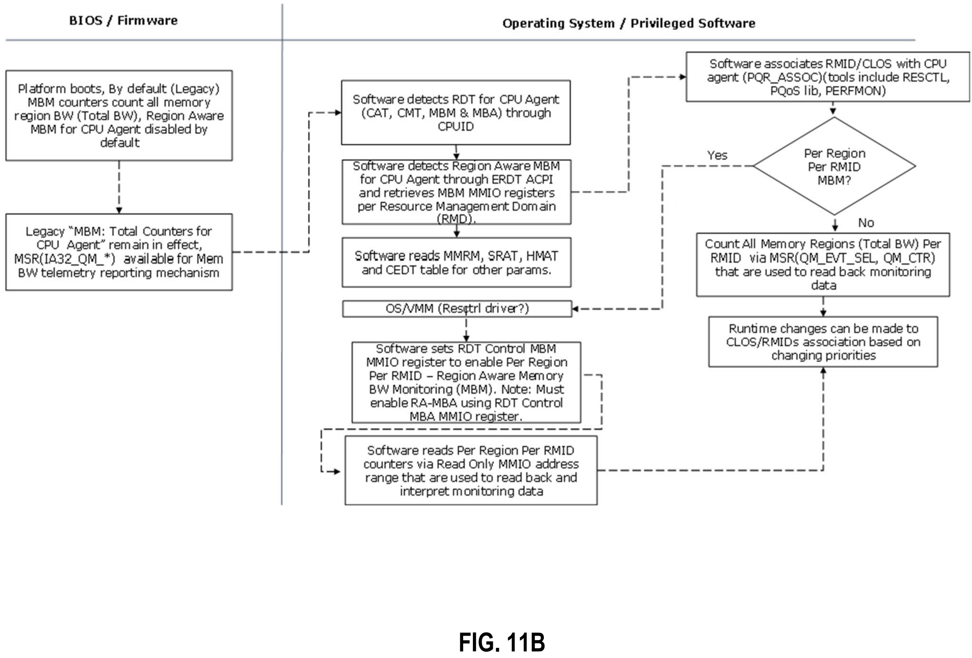

As shown in the usage flow for MBM example in Figure 11B, a sequence resembling the above steps is suggested in order to configure and bring up legacy MBM and region aware MBM capabilities. It is recommended to use symmetric capabilities to monitor and allocate i.e., if software chooses to monitor per RMID total memory bandwidth using legacy interfaces (MSR's) then software chooses legacy interfaces (MSR's) to allocate per CLOS memory bandwidth. Similarly, if software chooses to monitor per RMID per region memory bandwidth then it uses region aware memory bandwidth allocation for per CLOS per region memory bandwidth allocation using MMIO registers.

Embodiments may include region aware MBM and/or MBA which allows per application/thread/VM tracking and control of bandwidth to different memory regions, i.e., bandwidth control per thread and per memory region.

Software-visible components of the Region Aware MBA framework include the ERDT ACPI enumeration and a set of MSRs to allow thread-to-CLOS association (IA32_PQR_ASSOC) and memory mapped registers to configure memory bandwidth targets per region per CLOS.

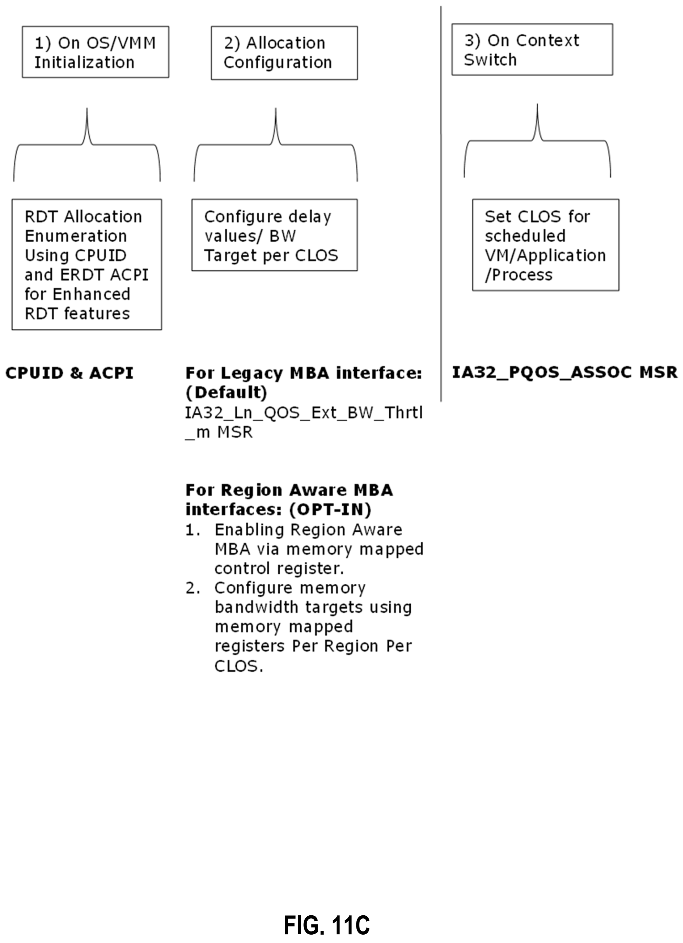

Figure 11C illustrates an example of a region aware MBA software flow and shows a categorized view of the MSR and Memory Mapped Register interfaces to MBA.

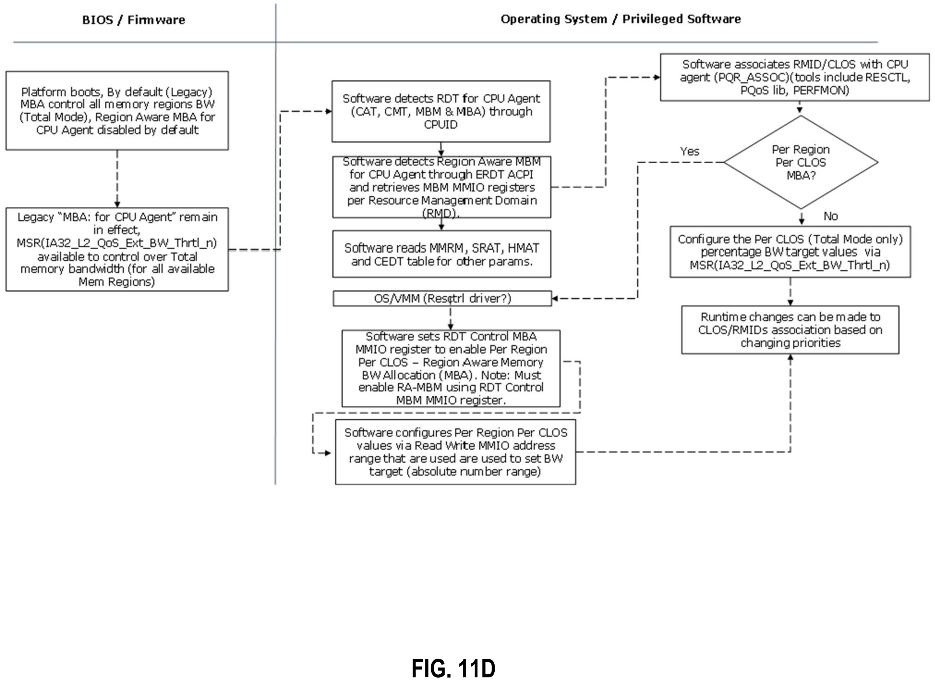

As shown in the usage flow for legacy MBA and region aware MBA software usage example in Figure 11D, a sequence resembling the above steps is suggested in order to configure and bring up legacy MBA and Region Aware MBA capabilities. It is recommended to use symmetric capabilities to monitor and allocate i.e., if software chooses to monitor per RMID total memory bandwidth using legacy interfaces (MSRs) then software chooses legacy interfaces (MSR's) to allocate per CLOS memory bandwidth. Similarly, if software chooses to monitor per RMID per region memory bandwidth then it uses region aware memory bandwidth allocation for per CLOS per region memory bandwidth allocation using MMIO registers.

BIOS Considerations

Embodiments may support three ACPI structures to enumerate RDT related details.

• Enhanced RDT (ERDT) ACPI structure: Describes the resource management domains (RMDs) in an SoC and which agents are managed within the scope of each resource management domain; this structure also describes the architectural MMIO register locations for various resource allocation and monitoring features.

• Memory Range and Region Mapping (MRRM) ACPI structure: Describes distinct memory ranges in the platform along with their Region-ID mapping registers to group ranges into regions for Region-Aware Memory Bandwidth Allocation (MBA) and Memory Bandwidth Monitoring (MBM). This structure may be used by other product features which utilize or reference Region-IDs.

• I/O RDT (IRDT) ACPI structure: Describes the registers in each I/O interface block (for instance a PCIe interface block) to assign CLOS and RMID to I/O traffic at channel granularity; describes I/O link and device hierarchies.

ACPI Enumeration

Software may query processor support of RDT shared resource monitoring and allocation features by executing CPUID for the CPU Agents RDT features. ACPI Structures including ERDT, MRRM, etc. may then be consulted for further details on the Enhanced RDT features support, memory range-to-region mapping. ACPI structures enumerate the location of specific MMIO interfaces used to allocate or monitor shared platform resources. All numeric values in ACPI-defined tables, blocks, and structures are always encoded in little endian format. Signature values are stored as fixed-length strings.

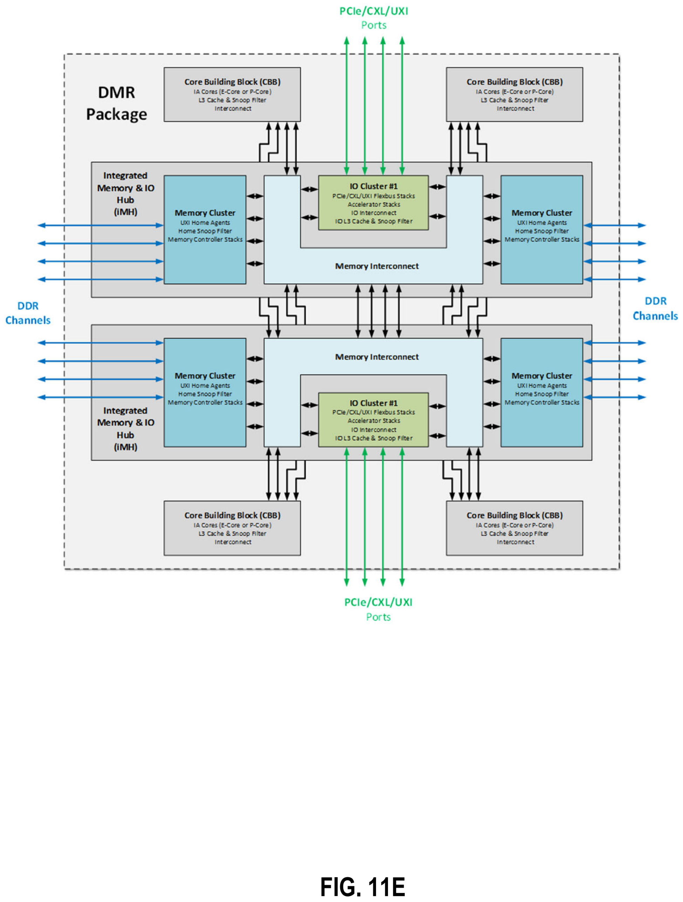

Figure 11E illustrates an example of an ERDT ACPT table layout and mapping to a single-socket system.

According to some examples, an apparatus includes a processing core to access a memory, the memory to include a plurality of memory regions; a plurality of memory bandwidth telemetry counters; and a plurality of memory bandwidth monitoring (MBM) storage locations, one of the plurality of MBM storage locations corresponding to one of the plurality of memory regions and one of a plurality of resource monitoring identifiers (RMIDs), the one of the plurality of MBM storage locations to store a count from a corresponding memory bandwidth telemetry counter for the one of the plurality of memory regions and the one of the plurality of RMIDs.

Any such examples may include any or any combination of the following aspects. The apparatus may include a plurality of memory range entry storage locations, one of the plurality of memory range entry storage locations to define the one of the plurality of memory regions. The one of the plurality of memory range entry storage locations is to store a memory region identifier to be assigned to the one of the plurality of memory regions. The memory region identifier is to be used to identify, at least in part, the corresponding memory bandwidth telemetry counter, using the one of the plurality of MBM storage locations. The one of the plurality of memory range entry storage locations is to store a base address to define, at least in part, the one of the plurality of memory regions. The one of the plurality of memory range entry storage locations is to store an address range to define, at least in part, the one of the plurality of memory regions. The one of the plurality of RMIDs is to identify to a software thread, an application, a container, or a virtual machine. The apparatus may include a plurality of platform quality of service (QoS) registers, one of the platform QoS registers corresponding to a logical processor associated with the software thread, application, container, or virtual machine, the one of the plurality QoS registers to store the one of the plurality of RMIDs. The one of the plurality of MBM storage locations is accessible by using the one of the plurality of RMIDs to index into one of a plurality of blocks of the plurality of MBM storage locations, the one of the plurality of blocks of the plurality of MBM storage locations corresponding to the one of the plurality of memory regions.

According to some examples, a method includes measuring usage of memory bandwidth per memory region per resource monitoring identifier (RMID) using a plurality of memory bandwidth telemetry counters; and storing a count from one of the plurality of memory bandwidth telemetry counters in one of a plurality of memory bandwidth monitoring (MBM) storage locations, the one of the plurality of MBM storage locations corresponding to one of a plurality of memory regions and one of a plurality of RMIDs.

Any such examples may include any or any combination of the following aspects. The method may include storing a value in one of a plurality of memory range entry storage locations to define, at least in part, the one of the plurality of memory regions. The value is a memory region identifier to be assigned to the one of the plurality of memory regions. The memory region identifier is to be used to identify, at least in part, the one of the plurality of memory bandwidth telemetry counters, using the one of the plurality of MBM storage locations. The value is a base address to define, at least in part, the one of the plurality of memory regions. The value is an address range to define, at least in part, the one of the plurality of memory regions. The one of the plurality of RMIDs is to identify to a software thread, an application, a container, or a virtual machine. The method may include storing the one of the plurality of RMIDs in a platform quality of service (QoS) register corresponding to a logical processor associated with the software thread, application, container, or virtual machine. The method may include accessing the one of the plurality of MBM storage locations using the one of the plurality of RMIDs to index into one of a plurality of blocks of the plurality of MBM storage locations, the one of the plurality of blocks of the plurality of MBM storage locations corresponding to the one of the plurality of memory regions.

According to some examples, a non-transitory machine-readable medium storing instructions which, when executed by a machine, causes the machine to perform a method including measuring usage of memory bandwidth per memory region per resource monitoring identifier (RMID) using a plurality of memory bandwidth telemetry counters; and storing a count from one of the plurality of memory bandwidth telemetry counters in one of a plurality of memory bandwidth monitoring (MBM) storage locations, the one of the plurality of MBM storage locations corresponding to one of a plurality of memory regions and one of a plurality of RMIDs.

Table 21 is an example of an ACPI table cross-reference.

Table 21

| MRRM Memory Range Entry Field | SRAT Memory Affinity Field | CEDT CFMWS Field | HMAT Memory Proximity Domain Attributes Field | Memory Type/ Config |
|---|---|---|---|---|
| 1. Base Address Low 2. Base Address High 3. Length Low 4. Length High *For Platform assigned: 5. Platform-assigned Static Local Region-ID | 1. Base Address Low 2. Base Address High 3. Length Low 4. Length High 5. Proximity Domain 6. Enabled: SET | N/A | Memory Proximity Domain | DDR 1LM memory range will appear in ACPI HMAT table as one without a memory side cache. DDR 1LM addresses will never be covered by CFMWS since DDR 1LM is not attached to CXL. |
| 6. Platform-assigned Static Remote Region-ID | | N/A | | F2LM or legacy 2LM memory range will be associated with a memory side cache in ACPI HMAT table. |
| *For software supported region programming: 7. Region-ID Programming Registers[] | 1. Base Address Low 2. Base Address High 3. Length Low 4. Length High 5. Proximity Domain 6. Enabled: SET 7. HotPluggable: Platform specific | CXL Fixed Memory Window Structure (CFMWS) structure with Windows Restriction [4]=1 (Fixed Device Configuration). | | Flat 2LM: All memory addresses decoded by CXL are described in ACPI CEDT table. If F2LM Fixed Memory is behind CXL. System Firmware is responsible for creating SRAT memory range entries for every portion of the CMFWS. |

(continued)

| MRRM Memory Range Entry Field | SRAT Memory Affinity Field | CEDT CFMWS Field | HMAT Memory Proximity Domain Attributes Field | Memory Type/ Config |
|---|---|---|---|---|
| | 8. NonVolatile: CLEAR | | | Flat 2LM is not hot pluggable. The CFMWS will report a fixed device configuration for Flat 2LM. The CFMWS for Flat2LM includes both the DDR and CXL memory. |
| | 1. Base Address Low 2. Base Address High 3. Length Low 4. Length High 5. Proximity Domain 6. Enabled: SET | CXL Fixed Memory Window Structure (CFMWS) structure with Windows Restriction [4]=1 (Fixed Device Configuration). | | CXL Type 2 and 3 memory: All memory addresses decoded by CXL are described in ACPI CEDT table. BIOS does not set the Fixed Device Configuration bit for CXL Type 2 and Type 3 devices. OS can quiescence these devices and possibly move them to a different address.<br><br>There are CFMWS ranges published for |
| | | | | CXL hot pluggable ranges. |
| | N/A | | | CXL host bridge |

Any such examples may include any or any combination of the following aspects. The method may include storing a value in one of a plurality of memory range entry storage locations to define, at least in part, the one of the plurality of memory regions. The value is a memory region identifier to be assigned to the one of the plurality of memory regions. The memory region identifier is to be used to identify, at least in part, the one of the plurality of memory bandwidth telemetry counters, using the one of the plurality of MBM storage locations. The value is a base address to define, at least in part, the one of the plurality of memory regions. The value is an address range to define, at least in part, the one of the plurality of memory regions. The one of the plurality of RMIDs is to identify to a software thread, an application, a container, or a virtual machine. The method may include storing the one of the plurality of RMIDs in a platform quality of service (QoS) register corresponding to a logical processor associated with the software thread, application, container, or virtual machine. The method may include accessing the one of the plurality of MBM storage locations using the one of the plurality of RMIDs to index into one of a plurality of blocks of the plurality of MBM storage locations, the one of the plurality of blocks of the plurality of MBM storage locations corresponding to the one of the plurality of memory regions.

According to some examples, an apparatus may include means for performing any function disclosed herein; an apparatus may include a data storage device that stores code that when executed by a hardware processor or controller causes the hardware processor or controller to perform any method or portion of a method disclosed herein; an apparatus, method, system etc. may be as described in the detailed description; a non-transitory machine-readable medium may store instructions that when executed by a machine causes the machine to perform any method or portion of a method disclosed herein. Embodiments may include any details, features, etc. or combinations of details, features, etc. described in this specification.

Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

FIG. 12 illustrates an example computing system. Multiprocessor system 1200 is an interfaced system and includes a plurality of processors or cores including a first processor 1270 and a second processor 1280 coupled via an interface 1250 such as a point-to-point (P-P) interconnect, a fabric, and/or bus. In some examples, the first processor 1270 and the second processor 1280 are homogeneous. In some examples, first processor 1270 and the second processor 1280 are heterogenous. Though the example system 1200 is shown to have two processors, the system may have three or more processors, or may be a single processor system. In some examples, the computing system is a system on a chip (SoC).

Processors 1270 and 1280 are shown including integrated memory controller (IMC) circuitry 1272 and 1282, respectively. Processor 1270 also includes interface circuits 1276 and 1278; similarly, second processor 1280 includes interface circuits 1286 and 1288. Processors 1270, 1280 may exchange information via the interface 1250 using interface circuits 1278, 1288. IMCs 1272 and 1282 couple the processors 1270, 1280 to respective memories, namely a memory 1232 and a memory 1234, which may be portions of main memory locally attached to the respective processors.

Processors 1270, 1280 may each exchange information with a network interface (NW I/F) 1290 via individual interfaces 1252, 1254 using interface circuits 1276, 1294, 1286, 1298. The network interface 1290 (e.g., one or more of an interconnect, bus, and/or fabric, and in some examples is a chipset) may optionally exchange information with a coprocessor 1238 via an interface circuit 1292. In some examples, the coprocessor 1238 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1270, 1280 or outside of both processors, yet connected with the processors via an interface such as P-P interconnect, such that either or both processors' local cache information may be stored in the shared cache if a processor is placed into a low power mode.

Network interface 1290 may be coupled to a first interface 1216 via interface circuit 1296. In some examples, first interface 1216 may be an interface such as a Peripheral Component Interconnect (PCI) interconnect, a PCI Express interconnect or another I/O interconnect. In some examples, first interface 1216 is coupled to a power control unit (PCU) 1217, which may include circuitry, software, and/or firmware to perform power management operations with regard to the processors 1270, 1280 and/or co-processor 1238. PCU 1217 provides control information to a voltage regulator (not shown) to cause the voltage regulator to generate the appropriate regulated voltage. PCU 1217 also provides control information to control the operating voltage generated. In various examples, PCU 1217 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1217 is illustrated as being present as logic separate from the processor 1270 and/or processor 1280. In other cases, PCU 1217 may execute on a given one or more of cores (not shown) of processor 1270 or 1280. In some cases, PCU 1217 may be implemented as a microcontroller (dedicated or general-purpose) or other control logic configured to execute its own dedicated power management code, sometimes referred to as P-code. In yet other examples, power management operations to be performed by PCU 1217 may be implemented externally to a processor, such as by way of a separate power management integrated circuit (PMIC) or another component external to the processor. In yet other examples, power management operations to be performed by PCU 1217 may be implemented within BIOS or other system software.

Various I/O devices 1214 may be coupled to first interface 1216, along with a bus bridge 1218 which couples first interface 1216 to a second interface 1220. In some examples, one or more additional processor(s) 1215, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1216. In some examples, second interface 1220 may be a low pin count (LPC) interface. Various devices may be coupled to second interface 1220 including, for example, a keyboard and/or mouse 1222, communication devices 1227 and storage circuitry 1228. Storage circuitry 1228 may be one or more non-transitory machine-readable storage media as described below, such as a disk drive or other mass storage device which may include instructions/code and data 1230. Further, an audio I/O 1224 may be coupled to second interface 1220. Note that other architectures than the point-to-point architecture described above are possible. For example, instead of the point-to-point architecture, a system such as multiprocessor system 1200 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

FIG. 13 illustrates a block diagram of an example processor and/or SoC 1300 that may have one or more cores and an integrated memory controller. The solid lined boxes illustrate a processor 1300 with a single core 1302(A), system agent unit circuitry 1310, and a set of one or more interface controller unit(s) circuitry 1316, while the optional addition of the dashed lined boxes illustrates an alternative processor 1300 with multiple cores 1302(A)-(N), a set of one or more integrated memory controller unit(s) circuitry 1314 in the system agent unit circuitry 1310, and special purpose logic 1308, as well as a set of one or more interface controller units circuitry 1316. Note that the processor 1300 may be one of the processors 1270 or 1280, or co-processor 1238 or 1215 of FIG. 12.

Thus, different implementations of the processor 1300 may include: 1) a CPU with the special purpose logic 1308 being integrated graphics and/or scientific (throughput) logic (which may include one or more cores, not shown), and the cores 1302(A)-(N) being one or more general purpose cores (e.g., general purpose in-order cores, general purpose out-of-order cores, or a combination of the two); 2) a coprocessor with the cores 1302(A)-(N) being a large number of special purpose cores intended primarily for graphics and/or scientific (throughput); and 3) a coprocessor with the cores 1302(A)-(N) being a large number of general purpose in-order cores. Thus, the processor 1300 may be a general-purpose processor, coprocessor, or special-purpose processor, such as, for example, a network or communication processor, compression engine, graphics processor, GPGPU (general purpose graphics processing unit), a high throughput many integrated cores (MIC) coprocessor (including 30 or more cores), embedded processor, or the like. The processor may be implemented on one or more chips. The processor 1300 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1304(A)-(N) within the cores 1302(A)-(N), a set of one or more shared cache unit(s) circuitry 1306, and external memory (not shown) coupled to the set of integrated memory controller unit(s) circuitry 1314. The set of one or more shared cache unit(s) circuitry 1306 may include one or more mid-level caches, such as level 2 (L2), level 3 (L3), level 4 (L4), or other levels of cache, such as a last level cache (LLC), and/or combinations thereof. While in some examples interface network circuitry 1312 (e.g., a ring interconnect) interfaces the special purpose logic 1308 (e.g., integrated graphics logic), the set of shared cache unit(s) circuitry 1306, and the system agent unit circuitry 1310, alternative examples use any number of well-known techniques for interfacing such units. In some examples, coherency is maintained between one or more of the shared cache unit(s) circuitry 1306 and cores 1302(A)-(N). In some examples, interface controller unit circuitry 1316 couples the cores 1302 to one or more other devices 1318 such as one or more I/O devices, storage, one or more communication devices (e.g., wireless networking, wired networking, etc.), etc.

In some examples, one or more of the cores 1302(A)-(N) are capable of multi-threading. The system agent unit circuitry 1310 includes those components coordinating and operating cores 1302(A)-(N). The system agent unit circuitry 1310 may include, for example, power control unit (PCU) circuitry and/or display unit circuitry (not shown). The PCU may be or may include logic and components needed for regulating the power state of the cores 1302(A)-(N) and/or the special purpose logic 1308 (e.g., integrated graphics logic). The display unit circuitry is for driving one or more externally connected displays.

The cores 1302(A)-(N) may be homogenous in terms of instruction set architecture (ISA). Alternatively, the cores 1302(A)-(N) may be heterogeneous in terms of ISA; that is, a subset of the cores 1302(A)-(N) may be capable of executing an ISA, while other cores may be capable of executing only a subset of that ISA or another ISA.

Example Core Architectures - In-order and out-of-order core block diagram.

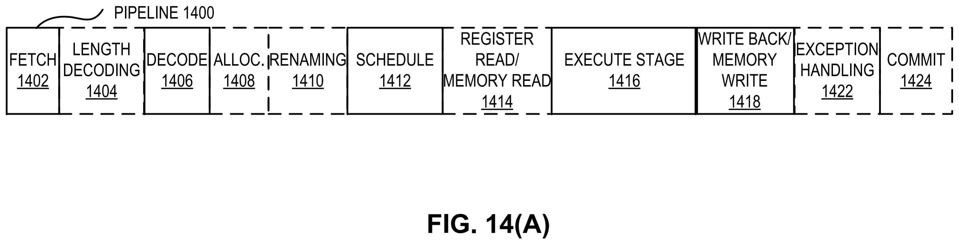

FIG. 14(A) is a block diagram illustrating both an example in-order pipeline and an example register renaming, out-of-order issue/execution pipeline according to examples. FIG. 14(B) is a block diagram illustrating both an example in-order architecture core and an example register renaming, out-of-order issue/execution architecture core to be included in a processor according to examples. The solid lined boxes in FIGS. 14(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 14(A), a processor pipeline 1400 includes a fetch stage 1402, an optional length decoding stage 1404, a decode stage 1406, an optional allocation (Alloc) stage 1408, an optional renaming stage 1410, a schedule (also known as a dispatch or issue) stage 1412, an optional register read/memory read stage 1414, an execute stage 1416, a write back/memory write stage 1418, an optional exception handling stage 1422, and an optional commit stage 1424. One or more operations can be performed in each of these processor pipeline stages. For example, during the fetch stage 1402, one or more instructions are fetched from instruction memory, and during the decode stage 1406, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1406 and the register read/memory read stage 1414 may be combined into one pipeline stage. In one example, during the execute stage 1416, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 14(B) may implement the pipeline 1400 as follows: 1) the instruction fetch circuitry 1438 performs the fetch and length decoding stages 1402 and 1404; 2) the decode circuitry 1440 performs the decode stage 1406; 3) the rename/allocator unit circuitry 1452 performs the allocation stage 1408 and renaming stage 1410; 4) the scheduler(s) circuitry 1456 performs the schedule stage 1412; 5) the physical register file(s) circuitry 1458 and the memory unit circuitry 1470 perform the register read/memory read stage 1414; the execution cluster(s) 1460 perform the execute stage 1416; 6) the memory unit circuitry 1470 and the physical register file(s) circuitry 1458 perform the write back/memory write stage 1418; 7) various circuitry may be involved in the exception handling stage 1422; and 8) the retirement unit circuitry 1454 and the physical register file(s) circuitry 1458 perform the commit stage 1424.

FIG. 14(B) shows a processor core 1490 including front-end unit circuitry 1430 coupled to execution engine unit circuitry 1450, and both are coupled to memory unit circuitry 1470. The core 1490 may be a reduced instruction set architecture computing (RISC) core, a complex instruction set architecture computing (CISC) core, a very long instruction word (VLIW) core, or a hybrid or alternative core type. As yet another option, the core 1490 may be a special-purpose core, such as, for example, a network or communication core, compression engine, coprocessor core, general purpose computing graphics processing unit (GPGPU) core, graphics core, or the like.

The front-end unit circuitry 1430 may include branch prediction circuitry 1432 coupled to instruction cache circuitry 1434, which is coupled to an instruction translation lookaside buffer (TLB) 1436, which is coupled to instruction fetch circuitry 1438, which is coupled to decode circuitry 1440. In one example, the instruction cache circuitry 1434 is included in the memory unit circuitry 1470 rather than the front-end circuitry 1430. The decode circuitry 1440 (or decoder) may decode instructions, and generate as an output one or more micro-operations, micro-code entry points, micro-instructions, other instructions, or other control signals, which are decoded from, or which otherwise reflect, or are derived from, the original instructions. The decode circuitry 1440 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1440 may be implemented using various different mechanisms. Examples of suitable mechanisms include, but are not limited to, look-up tables, hardware implementations, programmable logic arrays (PLAs), microcode read only memories (ROMs), etc. In one example, the core 1490 includes a microcode ROM (not shown) or other medium that stores microcode for certain macroinstructions (e.g., in decode circuitry 1440 or otherwise within the front-end circuitry 1430). In one example, the decode circuitry 1440 includes a micro-operation (micro-op) or operation cache (not shown) to hold/cache decoded operations, micro-tags, or micro-operations generated during the decode or other stages of the processor pipeline 1400. The decode circuitry 1440 may be coupled to rename/allocator unit circuitry 1452 in the execution engine circuitry 1450.

The execution engine circuitry 1450 includes the rename/allocator unit circuitry 1452 coupled to retirement unit circuitry 1454 and a set of one or more scheduler(s) circuitry 1456. The scheduler(s) circuitry 1456 represents any number of different schedulers, including reservations stations, central instruction window, etc. In some examples, the scheduler(s) circuitry 1456 can include arithmetic logic unit (ALU) scheduler/scheduling circuitry, ALU queues, address generation unit (AGU) scheduler/scheduling circuitry, AGU queues, etc. The scheduler(s) circuitry 1456 is coupled to the physical register file(s) circuitry 1458. Each of the physical register file(s) circuitry 1458 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1458 includes vector registers unit circuitry, writemask registers unit circuitry, and scalar register unit circuitry. These register units may provide architectural vector registers, vector mask registers, general-purpose registers, etc. The physical register file(s) circuitry 1458 is coupled to the retirement unit circuitry 1454 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1454 and the physical register file(s) circuitry 1458 are coupled to the execution cluster(s) 1460. The execution cluster(s) 1460 includes a set of one or more execution unit(s) circuitry 1462 and a set of one or more memory access circuitry 1464. The execution unit(s) circuitry 1462 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1456, physical register file(s) circuitry 1458, and execution cluster(s) 1460 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1464). It should also be understood that where separate pipelines are used, one or more of these pipelines may be out-of-order issue/execution and the rest in-order.

In some examples, the execution engine unit circuitry 1450 may perform load store unit (LSU) address/data pipelining to an Advanced Microcontroller Bus (AMB) interface (not shown), and address phase and writeback, data phase load, store, and branches.

The set of memory access circuitry 1464 is coupled to the memory unit circuitry 1470, which includes data TLB circuitry 1472 coupled to data cache circuitry 1474 coupled to level 2 (L2) cache circuitry 1476. In one example, the memory access circuitry 1464 may include load unit circuitry, store address unit circuitry, and store data unit circuitry, each of which is coupled to the data TLB circuitry 1472 in the memory unit circuitry 1470. The instruction cache circuitry 1434 is further coupled to the level 2 (L2) cache circuitry 1476 in the memory unit circuitry 1470. In one example, the instruction cache 1434 and the data cache 1474 are combined into a single instruction and data cache (not shown) in L2 cache circuitry 1476, level 3 (L3) cache circuitry (not shown), and/or main memory. The L2 cache circuitry 1476 is coupled to one or more other levels of cache and eventually to a main memory.

The core 1490 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1490 includes logic to support a packed data instruction set architecture extension (e.g., AVX1, AVX2), thereby allowing the operations used by many multimedia applications to be performed using packed data.

Example Execution Unit(s) Circuitry.

FIG. 15 illustrates examples of execution unit(s) circuitry, such as execution unit(s) circuitry 1462 of FIG. 14(B). As illustrated, execution unit(s) circuity 1462 may include one or more ALU circuits 1501, optional vector/single instruction multiple data (SIMD) circuits 1503, load/store circuits 1505, branch/jump circuits 1507, and/or Floating-point unit (FPU) circuits 1509. ALU circuits 1501 perform integer arithmetic and/or Boolean operations. Vector/SIMD circuits 1503 perform vector/SIMD operations on packed data (such as SIMD/vector registers). Load/store circuits 1505 execute load and store instructions to load data from memory into registers or store from registers to memory. Load/store circuits 1505 may also generate addresses. Branch/jump circuits 1507 cause a branch or jump to a memory address depending on the instruction. FPU circuits 1509 perform floating-point arithmetic. The width of the execution unit(s) circuitry 1462 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors, and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

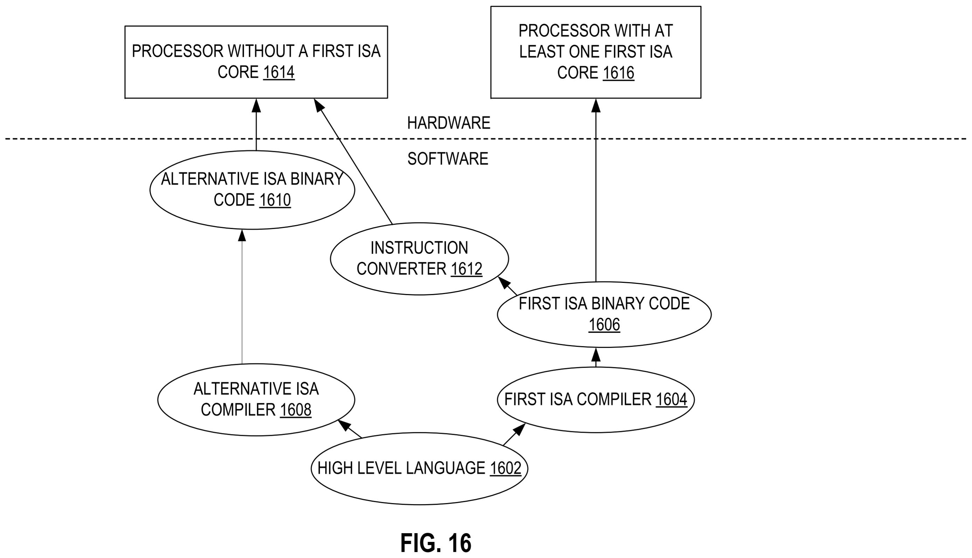

FIG. 16 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 16 shows a program in a high-level language 1602 may be compiled using a first ISA compiler 1604 to generate first ISA binary code 1606 that may be natively executed by a processor with at least one first ISA core 1616. The processor with at least one first ISA core 1616 represents any processor that can perform substantially the same functions as an Intel® processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 1604 represents a compiler that is operable to generate first ISA binary code 1606 (e.g., object code) that can, with or without additional linkage processing, be executed on the processor with at least one first ISA core 1616. Similarly, FIG. 16 shows the program in the high-level language 1602 may be compiled using an alternative ISA compiler 1608 to generate alternative ISA binary code 1610 that may be natively executed by a processor without a first ISA core 1614. The instruction converter 1612 is used to convert the first ISA binary code 1606 into code that may be natively executed by the processor without a first ISA core 1614. This converted code is not necessarily to be the same as the alternative ISA binary code 1610; however, the converted code will accomplish the general operation and be made up of instructions from the alternative ISA. Thus, the instruction converter 1612 represents software, firmware, hardware, or a combination thereof that, through emulation, simulation, or any other process, allows a processor or other electronic device that does not have a first ISA processor or core to execute the first ISA binary code 1606.

References to "one example," "an example," "one embodiment," "an embodiment," etc., indicate that the example or embodiment described may include a particular feature, structure, or characteristic, but every example or embodiment may not necessarily include the particular feature, structure, or characteristic. Moreover, such phrases are not necessarily referring to the same example or embodiment. Further, when a particular feature, structure, or characteristic is described in connection with an example or embodiment, it is submitted that it is within the knowledge of one skilled in the art to affect such feature, structure, or characteristic in connection with other examples or embodiments whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C). As used in this specification and the claims and unless otherwise specified, the use of the ordinal adjectives "first," "second," "third," etc. to describe an element merely indicates that a particular instance of an element or different instances of like elements are being referred to and is not intended to imply that the elements so described must be in a particular sequence, either temporally, spatially, in ranking, or in any other manner. Also, as used in descriptions of embodiments, a "/" character between terms may mean that what is described may include or be implemented using, with, and/or according to the first term and/or the second term (and/or any other additional terms).

Also, the terms "bit," "flag," "field," "entry," "indicator," etc., may be used to describe any type or content of a storage location in a register, table, database, or other data structure, whether implemented in hardware or software, but are not meant to limit embodiments to any particular type of storage location or number of bits or other elements within any particular storage location. For example, the term "bit" may be used to refer to a bit position within a register and/or data stored or to be stored in that bit position. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments to any particular logical convention, as any logical convention may be used within embodiments.

In this specification and its drawings, the term "thread" and/or a block labeled "thread" may mean and/or represent an application, software thread, process, virtual machine, container, etc. that may be executed, run, processed, created, assigned, etc. on, by, and/or to a core.

The term "core" may mean any physical or logical processor or execution core, as described and/or illustrated in this specification and its drawings and/or as known in the art. For example, a physical core may support multiple logical cores by including hardware to separately execute different threads on different logical cores (e.g., hyperthreading).

The term "uncore" may mean any circuitry, logic, sub-systems, etc. (e.g., an integrated memory controller (iMC), power management unit, performance monitoring unit, system and/or I/O controllers, etc.) in/on a processor or system-on-chip (SoC) but not within a core, as described and/or illustrated in this specification and its drawings and/or as known in the art (e.g., by the name uncore, system agent, etc.).

However, use of the terms core and uncore in in the description and figures does not limit the location of any circuitry, hardware, structure, etc., as the location of circuitry, hardware, structure, etc. may vary in various embodiments. For example, in various embodiments, MSRs (or any set or subset of MSRs) may be within and/or accessible by a core (core-scoped) or within an uncore and/or accessible by more than one core (package-scoped).

The term "quality of service" (or QoS) may be used to mean or include any measure of quality of service mentioned in this specification and/or known in the art, to an individual thread, group of threads (including all threads), type of thread(s), including measures of and/or related to performance, predictability, etc.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

**Claims**

1. An apparatus comprising:

   a processing core to access a memory, the memory to include a plurality of memory regions;
   a plurality of memory bandwidth telemetry counters; and
   a plurality of memory bandwidth monitoring (MBM) storage locations, one of the plurality of MBM storage locations corresponding to one of the plurality of memory regions and one of a plurality of resource monitoring identifiers (RMIDs), the one of the plurality of MBM storage locations to store a count from a corresponding memory bandwidth telemetry counter for the one of the plurality of memory regions and the one of the plurality of RMIDs.

2. The apparatus of claim 1, further comprising a plurality of memory range entry storage locations, one of the plurality of memory range entry storage locations to define the one of the plurality of memory regions.

3. The apparatus of claim 2, wherein the one of the plurality of memory range entry storage locations is to store a memory region identifier to be assigned to the one of the plurality of memory regions.

4. The apparatus of any of claims 2-3, wherein the one of the plurality of memory range entry storage locations is to store a base address to define, at least in part, the one of the plurality of memory regions.

5. The apparatus of any of claims 2-3, wherein the one of the plurality of memory range entry storage locations is to store an address range to define, at least in part, the one of the plurality of memory regions.

6. The apparatus of any of claims 1-5, wherein the one of the plurality of RMIDs is to identify to a software thread, an application, a container, or a virtual machine;
preferably the apparatus further comprising a plurality of platform quality of service (QoS) registers, one of the platform QoS registers corresponding to a logical processor associated with the software thread, application, container, or virtual machine, the one of the plurality QoS registers to store the one of the plurality of RMIDs.

7. The apparatus of claim any of claims 1-6, wherein the one of the plurality of MBM storage locations is accessible by using the one of the plurality of RMIDs to index into one of a plurality of blocks of the plurality of MBM storage locations, the one of the plurality of blocks of the plurality of MBM storage locations corresponding to the one of the plurality of memory regions.

8. A method comprising:

measuring usage of memory bandwidth per memory region per resource monitoring identifier (RMID) using a plurality of memory bandwidth telemetry counters; and
storing a count from one of the plurality of memory bandwidth telemetry counters in one of a plurality of memory bandwidth monitoring (MBM) storage locations, the one of the plurality of MBM storage locations corresponding to one of a plurality of memory regions and one of a plurality of RMIDs.

9. The method of claim 8, further comprising storing a value in one of a plurality of memory range entry storage locations to define, at least in part, the one of the plurality of memory regions.

10. The method of claim 9, wherein the value is a memory region identifier to be assigned to the one of the plurality of memory regions;
preferably wherein the memory region identifier is to be used to identify, at least in part, the one of the plurality of memory bandwidth telemetry counters, using the one of the plurality of MBM storage locations.

11. The method of any of claims 9-10, wherein the value is a base address to define, at least in part, the one of the plurality of memory regions.

12. The method of any of claims 9-11, wherein the value is an address range to define, at least in part, the one of the plurality of memory regions.

13. The method of any of claims 8-12, wherein the one of the plurality of RMIDs is to identify to a software thread, an application, a container, or a virtual machine;
preferably the method further comprising storing the one of the plurality of RMIDs in a platform quality of service (QoS) register corresponding to a logical processor associated with the software thread, application, container, or virtual machine.

14. The method of any of claims 8-13, further comprising accessing the one of the plurality of MBM storage locations using the one of the plurality of RMIDs to index into one of a plurality of blocks of the plurality of MBM storage locations, the one of the plurality of blocks of the plurality of MBM storage locations corresponding to the one of the plurality of memory regions.

15. A non-transitory machine-readable medium storing instructions which, when executed by a machine, causes the machine to perform a method of any one of claims 8 to 14.

100

| LOGICAL CORE 112A | LOGICAL CORE 112B |
|---|---|
| ISSUE RATE 114A | ISSUE RATE 114B |

ISSUE RATE CONTROL LOOP 116A

ISSUE RATE CONTROL LOOP 116B

PER REGION BW CONTROL LOOP 120AA

BW TARGET 126AA

ADJUST 124AA

TARGET BW METER 122AA

PER REGION BW CONTROL LOOP 120BA

BW TARGET 126BA

ADJUST 124BA

TARGET BW METER 122BA

FLOW CONTROL 118A

FLOW CONTROL 118B

PER REGION BW CONTROL LOOP 120AB

BW TARGET 126AB

ADJUST 124AB

TARGET BW METER 122AB

PER REGION BW CONTROL LOOP 120BB

BW TARGET 126BB

ADJUST 124BB

TARGET BW METER 122BB

MEMORY BW USAGE SIGNALING PER LOGICAL CORE AND PER MEMORY REGION 130

**FIG. 1A**

51

FIG. 1B

EP 4 769 159 A1

**FIG. 2**

EP 4 769 159 A1

FIG. 3

300

MEMORY BANDWIDTH LEVEL CONTROL COUNTER 330

INCREASE BW 332

DECREASE BW 334

HYSTERESIS COUNTER 340

THRESHOLD(S) 320

LEAKY BUCKET 310

312
314
316
318
326

BW_CONTROL_VALUE LOGIC 328

MAX_BW_CW 322

BW_CW 324

LB Leak Rate vs BW_CW
MAX_BW_CW=512

BW_CW

LB Leak Rate

FIG. 4

Linear Rate Meter

FIG. 5

600

INSTRUCTION UNIT 610

CPUID/ACPI 612

WRMSR/MMIO 614

MSR/MMIO STORAGE 620

EXECUTION UNIT 630

REGION-AWARE MBM/MBA
CONTROL UNIT 640

FIG. 6

700

| Report support for region-aware MBM/MBA control 710 |

↓

| Receive settings for region-aware MBM/MBA control 712 |

↓

| Execution of software on/in cores/threads 720 |

↓

| Monitor use/demand per region and per core/thread during execution of software 722 |

↓

| Determine that use/demand reached threshold 730 |

↓

| Modulate rate corresponding to a target for a region and a core/thread 732 |

**FIG. 7**

FIG. 8

# Top-level Structure of ERDT ACPI Enumeration

**FIG. 9A**

EP 4 769 159 A1

**Top-level Structure of MRRM ACPI Enumeration**

Note: Distinct set of Memory Range Entry structures exist per SoC

MMIO

MMIO

MMIO

Physical Address

Physical Address

Physical Address

Memory Range Entry

Memory Range Entry

Memory Range Entry

**Mem Range**
RegionID Programming Register

List of Structs

1:Q, Q>=1

**MRRM**
Memory Range and Region Mapping Structure

Note: Single Structure per Platform that includes all sub-strucutres.

**FIG. 9B**

EP 4 769 159 A1

6
3                                                             3 2 1   0

| RsvdP1 | T M E | RsvdP 0 |

**FIG. 9C**

6 6
3 2                                                                    0

| U | L3_CMT_Count |

**FIG. 9D**

6 6 6
3 2 1                                                                  0

| U | O | MBM_RMID_Count |

**FIG. 9E**

**Region 0**

| Address | Content |
|---|---|
| 0h: | Region 0 – RMID 0 |
| ... | |
| 38h: | Region 0 – RMID 7 |
| 40h: | Region 0 – RMID 32 |
| ... | |
| 78h: | Region 0 – RMID 39 |
| 80h: | Region 0 – RMID 64 |
| ... | |
| B8h: | Region 0 – RMID 71 |
| C0h: | Region 0 – RMID 96 |
| ... | |
| F8h: | Region 0 – RMID 103 |
| 100h: | Region 0 – RMID 128 |
| ... | |
| 138h: | Region 0 – RMID 135 |
| 140h: | Region 0 – RMID 160 |
| ... | |
| 178h: | Region 0 – RMID 167 |
| 180h: | Region 0 – RMID 192 |
| ... | |
| 1B8h: | Region 0 – RMID 199 |
| 1C0h: | Region 0 – RMID 224 |
| ... | |
| 1F8h: | Region 0 – RMID 231 |
| 200h-7FFh: | Reserved for future |

**Region 1**

| Address | Content |
|---|---|
| 800h: | Region 1 – RMID 0 |
| ... | |
| 838h: | Region 1 – RMID 7 |
| 840h: | Region 1 – RMID 32 |
| ... | |
| 878h: | Region 1 – RMID 39 |
| 880h: | Region 1 – RMID 64 |
| ... | |
| 8B8h: | Region 1 – RMID 71 |
| 8C0h: | Region 1 – RMID 96 |
| ... | |
| 8F8h: | Region 1 – RMID 103 |
| 900h: | Region 1 – RMID 128 |
| ... | |
| 938h: | Region 1 – RMID 135 |
| 940h: | Region 1 – RMID 160 |
| ... | |
| 978h: | Region 1 – RMID 167 |
| 980h: | Region 1 – RMID 192 |
| ... | |
| 9B8h: | Region 1 – RMID 199 |
| 9C0h: | Region 1 – RMID 224 |
| ... | |
| 9F8h: | Region 1 – RMID 231 |
| A00h-FFFh: | Reserved for future |

**Region 2**

| Address | Content |
|---|---|
| 1000h: | Region 2 – RMID 0 |
| ... | |
| 1038h: | Region 2 – RMID 7 |
| 1040h: | Region 2 – RMID 32 |
| ... | |
| 1078h: | Region 2 – RMID 39 |
| 1080h: | Region 2 – RMID 64 |
| ... | |
| 10B8h: | Region 2 – RMID 71 |
| 10C0h: | Region 2 – RMID 96 |
| ... | |
| 10F8h: | Region 2 – RMID 103 |
| 1100h: | Region 2 – RMID 128 |
| ... | |
| 1138h: | Region 2 – RMID 135 |
| 1140h: | Region 2 – RMID 160 |
| ... | |
| 1178h: | Region 2 – RMID 167 |
| 1180h: | Region 2 – RMID 192 |
| ... | |
| 11B8h: | Region 2 – RMID 199 |
| 11C0h: | Region 2 – RMID 224 |
| ... | |
| 11F8h: | Region 2 – RMID 231 |
| 1120h-17FFH: | Reserved for future |

**Region 3**

| Address | Content |
|---|---|
| 1800h: | Region 3 – RMID 0 |
| ... | |
| 1838h: | Region 3 – RMID 7 |
| 1840h: | Region 3 – RMID 32 |
| ... | |
| 1878h: | Region 3 – RMID 39 |
| 1880h: | Region 3 – RMID 64 |
| ... | |
| 18B8h: | Region 3 – RMID 71 |
| 18C0h: | Region 3 – RMID 96 |
| ... | |
| 18F8h: | Region 3 – RMID 103 |
| 1900h: | Region 3 – RMID 128 |
| ... | |
| 1938h: | Region 3 – RMID 135 |
| 1940h: | Region 3 – RMID 160 |
| ... | |
| 1978h: | Region 3 – RMID 167 |
| 1980h: | Region 3 – RMID 192 |
| ... | |
| 19B8h: | Region 3 – RMID 199 |
| 19C0h: | Region 3 – RMID 224 |
| ... | |
| 19F8h: | Region 3 – RMID 231 |
| 1A00h-3FFFh: | Reserved for future |

Each region expands to:
- MBM Register Block 0
- MBM Register Block 1
- MBM Register Block 2
- MBM Register Block 3
- MBM Register Block 4
- MBM Register Block 5
- MBM Register Block 6
- MBM Register Block 7
- MBM Register Block 8
- MBM Register Block 9
- MBM Register Block 10
- MBM Register Block 11
- MBM Register Block 12
- MBM Register Block 13
- MBM Register Block 14
- MBM Register Block 15

**FIG. 9F**

EP 4 769 159 A1

| 6 3 | | 5 7 | 5 6 | | 4 8 | 4 7 | | 4 1 | 4 0 | | 3 2 | 3 1 | | 2 5 | 2 4 | | 1 6 | 1 5 | | 9 | 8 | | 0 |
|---|---|---|---|---|---|---|---|---|---|---|---|---|---|---|---|---|---|---|---|---|---|---|---|
| RsvdP3 | | | BR3 | | | RsvdP2 | | | BR2 | | | RsvdP1 | | | BR1 | | | RsvdP0 | | | BR0 | | |

**FIG. 9G**

| | |
|---|---|
| 0h: | Region 0 – CLOS 0 |
| 02h: | Region 1 – CLOS 0 |
| 04h: | Region 2 – CLOS 0 |
| 06h: | Region 3 – CLOS 0 |
| 08h: | Region 0 – CLOS 1 |
| 0Ah: | Region 1 – CLOS 1 |
| 0Bh: | Region 2 – CLOS 1 |
| 0Ch: | Region 3 – CLOS 1 |
| | ... |
| 78h: | Region 0 – CLOS 15 |
| 7Ah: | Region 1 – CLOS 15 |
| 7Ch: | Region 2 – CLOS 15 |
| 7Eh: | Region 3 – CLOS 15 |
| 80h-FFFh: Reserved for future | |

Optimum MBA Register Block

**FIG. 9H**

EP 4 769 159 A1

| 6 3 | | 5 7 | 5 6 | 4 8 | 4 7 | 4 1 | 4 0 | 3 2 | 3 1 | 2 5 | 2 4 | 1 6 | 1 5 | 9 8 | | 0 |
|---|---|---|---|---|---|---|---|---|---|---|---|---|---|---|---|---|
| RsvdP3 | | BR3 | | RsvdP2 | | BR2 | | RsvdP1 | | BR1 | | RsvdP0 | | BR0 | | |

**FIG. 9I**

Minimum MBA Register Block

| 0h: | Region 0 – CLOS 0 |
|---|---|
| 02h: | Region 1 – CLOS 0 |
| 04h: | Region 2 – CLOS 0 |
| 06h: | Region 3 – CLOS 0 |
| 08h: | Region 0 – CLOS 1 |
| 0Ah: | Region 1 – CLOS 1 |
| 0Bh: | Region 2 – CLOS 1 |
| 0Ch: | Region 3 – CLOS 1 |
| | ... |
| 78h: | Region 0 – CLOS 15 |
| 7Ah: | Region 1 – CLOS 15 |
| 7Ch: | Region 2 – CLOS 15 |
| 7Eh: | Region 3 – CLOS 15 |
| 80h-FFFh: Reserved for future | |

**FIG. 9J**

EP 4 769 159 A1

| 63 | 57 56 | 48 47 | 41 40 | 32 31 | 25 24 | 16 15 | 9 8 | 0 |
|------|------|------|------|------|------|------|------|
| RsvdP3 | BR3 | RsvdP2 | BR2 | RsvdP1 | BR1 | RsvdP0 | BR0 |

**FIG. 9K**

Maximum MBA Register Block

| 0h: | Region 0 – CLOS 0 |
|-----|-------------------|
| 02h: | Region 1 – CLOS 0 |
| 04h: | Region 2 – CLOS 0 |
| 06h: | Region 3 – CLOS 0 |
| 08h: | Region 0 – CLOS 1 |
| 10h: | Region 1 – CLOS 1 |
| 12h: | Region 2 – CLOS 1 |
| 14h: | Region 3 – CLOS 1 |
| | ... |
| 78h: | Region 0 – CLOS 15 |
| 7Ah: | Region 1 – CLOS 15 |
| 7Ch: | Region 2 – CLOS 15 |
| 7Eh: | Region 3 – CLOS 15 |
| 7Fh-FFFh: | Reserved for future |

**FIG. 9L**

**FIG. 10A**

**FIG. 10B**

FIG. 10C

# SRAT, MRRM Summary HMAT MPD Attribute Structure

| SRAT | | | | |
|---|---|---|---|---|
| Proximity Domain | Type | SPA Base | Length | Note |
| 0 | Processor | S1 APIC IDs | | S1 |
| 0 | Memory | 0 | 256GB | DIMM1, DIMM2 |
| 1 | Processor | S2 APIC IDs | | S2 |
| 1 | Memory | 256GB | 256GB | DIMM3, DIMM4 |

| MRRM | | | |
|---|---|---|---|
| Base Address Low/High | Length Low/High | Local Region-ID | Remote Region-ID |
| 0 | 256GB | 0 | 1 |
| 256GB | 256GB | 0 | 1 |

| Memory Proximity Domain Attributes | | |
|---|---|---|
| Flags | Initiator Proximity Domain | Memory Proximity Domain |
| IPD Valid | 0 | 0 |
| IPD Valid | 1 | 1 |

**FIG. 10D**

# HMAT System Locality and Bandwidth Information Structure Summary

| System Locality Latency and Bandwidth Informative Structure | | | | |
|---|---|---|---|---|
| Flags | Data Type | Number of Initiator PDs | Number of Target PDs | Entry Base Unit |
| Memory | Read Latency | 2 | 2 | 1000 (ps) |
| Memory | Read Bandwidth | 2 | 2 | 1024(MB/s) |

| | 0 | 1 |
|---|---|---|
| 0 | 50 | 100 |
| 1 | 100 | 50 |

| | 0 | 1 |
|---|---|---|
| 0 | 40 | 30 |
| 1 | 30 | 40 |

PD = Proximity Domain

IDP = Proximity Domain for the Initiator

GI = Generic Initiator

| Initiator | Target |
|---|---|

## FIG. 10E

FIG. 10F

# SRAT, MRRM Summary HMAT MPD Attribute Structure

| SRAT | | | | |
|---|---|---|---|---|
| Proximity Domain | Type | SPA Base | Length | Note |
| 0 | Processor | S1 APIC IDs | | S1 |
| 0 | Memory | 0 | 256GB | DIMM1, DIMM2 |
| 1 | GI | | | ACC1 |
| 1 | Memory | 256B | 16B | ACC1.MEM |
| 2 | GI | | | ACC2 |
| 2 | Memory | 272GB | 8GB | ACC2.MEM |
| 3 | Processor | S2 APIC IDs | | S2 |
| 3 | Memory | 280GB | 256GB | DIMM3, DIMM4 |
| 4 | GI | | | ACC4 |
| 4 | Memory | 536GB | 32GB | ACC4.MEM |
| 5 | GI | | | ACC3 |

| MRRM | | | |
|---|---|---|---|
| Base Address Low/High | Length Low/High | Local Region-ID | Remote Region-ID |
| 0 | 256GB | 0 | 2 |
| 256GB | 16GB | 1 | 3 |
| 272GB | 8GB | 1 | 3 |
| 280GB | 256GB | 0 | 2 |
| 536GB | 32GB | 1 | 3 |

| Memory Proximity Domain Attributes | | |
|---|---|---|
| Flags | Initiator Proximity Domain | Memory Proximity Domain |
| IPD Valid | 0 | 0 |
| IPD Valid | 1 | 1 |
| IPD Valid | 2 | 2 |
| IPD Valid | 3 | 3 |
| IPD Valid | 4 | 4 |

**FIG. 10G**

# HMAT System Locality and Bandwidth Information Structure Summary

| System Locality Latency and Bandwidth Informative Structure | | | | |
|---|---|---|---|---|
| Flags | Data Type | Number of Initiator PDs | Number of Target PDs | Entry Base Unit |
| Memory | Read Latency | 6 | 5 | 1000 (ps) |
| Memory | Read Bandwidth | 6 | 5 | 1024(MB/s) |
| | | | | |
| | PD = Proximity Domain | | | |
| | IDP = Proximity Domain for the Initiator | | | |
| | GI = Generic Initator | | | |
| | | | | |
| | Initiator | | Target | |

|   | 0 | 1 | 2 | 3 | 4 |
|---|---|---|---|---|---|
| 0 | 50 | 100 | 100 | 100 | 150 |
| 1 | 90 | 60 | 140 | 140 | 190 |
| 2 | 90 | 140 | 60 | 140 | 190 |
| 3 | 100 | 150 | 150 | 50 | 100 |
| 4 | 140 | 190 | 190 | 90 | 60 |
| 5 | 140 | 190 | 190 | 90 | 140 |

|   | 0 | 1 | 2 | 3 | 4 |
|---|---|---|---|---|---|
| 0 | 40 | 30 | 30 | 30 | 30 |
| 1 | 30 | 80 | 30 | 30 | 30 |
| 2 | 30 | 30 | 80 | 30 | 30 |
| 3 | 30 | 30 | 30 | 40 | 30 |
| 4 | 30 | 30 | 30 | 30 | 80 |
| 5 | 30 | 30 | 30 | 30 | 30 |

FIG. 10H

1) On OS/VMM Initialization

RDT Monitoring Enumeration Using CPUID and ERDT ACPI for Enhanced RDT features

CPUID & ACPI

2) On Context Switch

Set RMID for the scheduled VM/Application /Process

IA32_PQOS_ASSOC MSR

3) Periodically for resource management

Read and interpret monitoring statistics

For Legacy CMT and MBM interface: (Default)
IA32_QM_EVTSEL_MSR (per RMID)
IA32_QM_CTR  MSR(data)

For Region Aware MBM interface: (OPT-IN)
MMIO Registers space for
1. Enabling Region Aware MBM via memory mapped control register
2. Reading Per Region Per RMID MBM statistics via memory mapped counter registers.

FIG. 11A

Platform boots, By default (Legacy) MBM counters count all memory region BW (Total BW), Region Aware MBM for CPU Agent disabled by default

Software detects RDT for CPU Agent (CAT, CMT, MBM & MBA) through CPUID

Software associates RMID/CLOS with CPU agent (PQR_ASSOC)(tools include RESCTL, PQoS lib, PERFMON)

Software detects Region Aware MBM for CPU Agent through ERDT ACPI and retrieves MBM MMIO registers per Resource Management Domain (RMD).

Per Region Per RMID MBM?

Yes

No

Legacy "MBM: Total Counters for CPU Agent" remain in effect, MSR(IA32_QM_*) available for Mem BW telemetry reporting mechanism

Software reads MMRM, SRAT, HMAT and CEDT table for other params.

Count All Memory Regions (Total BW) Per RMID via MSR(QM_EVT_SEL, QM_CTR) that are used to read back monitoring data

OS/VMM (Resctrl driver?)

Software sets RDT Control MBM MMIO register to enable Per Region Per RMID – Region Aware Memory BW Monitoring (MBM). Note: Must enable RA-MBA using RDT Control MBA MMIO register.

Runtime changes can be made to CLOS/RMIDs association based on changing priorities

Software reads Per Region Per RMID counters via Read Only MMIO address range that are used to read back and interpret monitoring data

EP 4 769 159 A1

**FIG. 11B**

| 1) On OS/VMM Initialization | 2) Allocation Configuration | 3) On Context Switch |
|---|---|---|

| RDT Allocation Enumeration Using CPUID and ERDT ACPI for Enhanced RDT features | Configure delay values/ BW Target per CLOS | Set CLOS for scheduled VM/Application /Process |
|---|---|---|

**CPUID & ACPI**

**For Legacy MBA interface: (Default)**
IA32_Ln_QOS_Ext_BW_Thrtl_m MSR

**For Region Aware MBA interfaces: (OPT-IN)**
1. Enabling Region Aware MBA via memory mapped control register.
2. Configure memory bandwidth targets using memory mapped registers Per Region Per CLOS.

**IA32_PQOS_ASSOC MSR**

## FIG. 11C

**BIOS / Firmware**

**Operating System / Privileged Software**

Platform boots, By default (Legacy) MBA control all memory regions BW (Total Mode), Region Aware MBA for CPU Agent disabled by default

Legacy "MBA: for CPU Agent" remain in effect, MSR(IA32_L2_QoS_Ext_BW_Thrtl_n) available to control over Total memory bandwidth (for all available Mem Regions)

Software detects RDT for CPU Agent (CAT, CMT, MBM & MBA) through CPUID

Software detects Region Aware MBM for CPU Agent through ERDT ACPI and retrieves MBM MMIO registers per Resource Management Domain (RMD).

Software reads MMRM, SRAT, HMAT and CEDT table for other params.

OS/VMM (Resctrl driver?)

Software sets RDT Control MBA MMIO register to enable Per Region Per CLOS – Region Aware Memory BW Allocation (MBA). Note: Must enable RA-MBM using RDT Control MBM MMIO register.

Software configures Per Region Per CLOS values via Read Write MMIO address range that are used are used to set BW target (absolute number range)

Software associates RMID/CLOS with CPU agent (PQR_ASSOC)(tools include RESCTL, PQoS lib, PERFMON)

Per Region Per CLOS MBA?

Yes

No

Configure the Per CLOS (Total Mode only) percentage BW target values via MSR(IA32_L2_QoS_Ext_BW_Thrtl_n)

Runtime changes can be made to CLOS/RMIDs association based on changing priorities

**FIG. 11D**

FIG. 11E

FIG. 12

EP 4 769 159 A1

EP 4 769 159 A1

PROCESSOR OR
SOC 1300

| SPECIAL PURPOSE LOGIC 1308 | CORE 1302(A) | | CORE 1302(N) | SYSTEM AGENT UNIT 1310 |
|---|---|---|---|---|
| | CACHE UNIT(S) 1304(A) | • • • | CACHE UNIT(S) 1304(N) | INTEGRATED MEMORY CONTROLLER UNIT(S) 1314 |
| | SHARED CACHE UNIT(S) 1306 | | | |
| | INTERFACE NETWORK 1312 | | | |

INTERFACE CONTROLLER UNIT(S) 1316

OTHER DEVICE(S) 1318

**FIG. 13**

**FIG. 14(A)**

**FIG. 14(B)**

EP 4 769 159 A1

EXECUTION UNIT(S) CIRCUITRY 1462

ALU 1501

VECTOR/SIMD 1503

LOAD/STORE 1505

BRANCH/JUMP 1507

FPU 1509

FIG. 15

PROCESSOR WITHOUT A FIRST ISA CORE 1614

PROCESSOR WITH AT LEAST ONE FIRST ISA CORE 1616

HARDWARE

SOFTWARE

ALTERNATIVE ISA BINARY CODE 1610

INSTRUCTION CONVERTER 1612

FIRST ISA BINARY CODE 1606

ALTERNATIVE ISA COMPILER 1608

FIRST ISA COMPILER 1604

HIGH LEVEL LANGUAGE 1602

FIG. 16

EP 4 769 159 A1

Europäisches
Patentamt
European
Patent Office
Office européen
des brevets

# EUROPEAN SEARCH REPORT

**Application Number**

EP 25 21 6613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 118 277 082 A (INTEL CORP) 2 July 2024 (2024-07-02) * abstract * * paragraphs [0012], [0017], [0023], [0033], [0061] * * figure 1 * ----- | 1-15 | INV. G06F12/0842 G06F12/02 G06F11/34 |
| Y | US 2022/206797 A1 (HERDRICH ANDREW J [US] ET AL) 30 June 2022 (2022-06-30) * abstract * * paragraphs [0037], [0056] * * figures 1,3b * ----- | 1-15 | |
| Y | US 2015/378892 A1 (TAJIMA SACHIE [JP] ET AL) 31 December 2015 (2015-12-31) * abstract * * paragraphs [0005], [0055] * * figures 1,5 * ----- | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 2 March 2026 | Sabbah, Yaniv |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 6613

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2026

| Patent document cited in search report | | Publication date | Patent family member(s) | | Publication date |
|---|---|---|---|---|---|
| CN 118277082 | A | 02-07-2024 | NONE | | |
| US 2022206797 | A1 | 30-06-2022 | CN | 114691544 A | 01-07-2022 |
| | | | US | 2022206797 A1 | 30-06-2022 |
| US 2015378892 | A1 | 31-12-2015 | JP | 6069515 B2 | 01-02-2017 |
| | | | JP | WO2015045046 A1 | 02-03-2017 |
| | | | US | 2015378892 A1 | 31-12-2015 |
| | | | WO | 2015045046 A1 | 02-04-2015 |

EPO FORM P0459

For more details about this annex : see Official Journal of the European Patent Office, No. 12/82